# EUROPEAN PATENT APPLICATION

(11) **EP 1 761 025 A1**
(43) Date of publication of application: **07.03.2007**
(21) Application number: 06019227.5
(22) Date of filing: 03.03.2004
(51) Int. Cl.: H04N 1/00, H04N 1/32, G06F 17/30

(54) **Image forming apparatus and image processing apparatus**

(30) Priority: 04.03.2003 JP 2003057676; 19.03.2003 JP 2003076610; 20.03.2003 JP 2003078995; 08.05.2003 JP 2003130817; 26.02.2004 JP 2004052272; 26.02.2004 JP 2004052273; 26.02.2004 JP 2004052274; 26.02.2004 JP 2004052275
(62) Divisional of application: 04251243.4
(71) Applicant: Ricoh Company, Ltd., Tokyo 143-8555 (JP)
(72) Inventor: Nakamura, Takashi, Yokohama-shi Kanagawa (JP); Yoshikawa, Takashi, Kawasaki-shi Kanagawa (JP); Mihira, Sachiko, Yokohama-shi Kanagawa (JP); Maruyama, Teruyuki, Yokohama-shi Kanagawa (JP)
(74) Representative: Leeming, John Gerard

(57) **Abstract**

An image forming apparatus and an image processing apparatus are disclosed to provide various services to other one or more apparatuses connected thereto via a network. The image forming apparatus includes one or more hardware resources being configured to form an image, one or more programs executing an image formation process, a communication part communicating with a client, an image data conversion part converting a format of image data, and an image processing part, in response to a request from the client, using the image data conversion part to convert a format of image data.

## Description

The present invention relates to an image forming apparatus and an image processing apparatus. More particularly, the present invention relates to an image forming apparatus and an image processing apparatus connected to other one or more apparatuses via a network.

In recent years, a type of image processing apparatus or image forming apparatus having various functions of a facsimile, a printer, a copier, a scanner and so on in a single housing has been widely recognized. In such an image processing apparatus, a display part, a print part and an image forming part are housed therein. Additionally, respective four applications corresponding to the facsimile,' the printer the copier and the scanner are included in the image processing apparatus. In such a configuration, the image processing apparatus can work as a facsimile, a printer, a copier and a scanner by correspondingly switching these applications.

In addition to these functions, a type of image forming apparatus connectable to a network has been recognized. Such an image forming apparatus can be used, for example, as a network printer and an image data server through network connection. When an image forming apparatus is used as an image data server, a user can obtain image data stored in the image forming apparatus from a personal computer via a network.

However, although there are various types of image data formats such as JPEG and MR, which are well-known by those skilled in the art, conventional image forming apparatuses can provide images in only a predetermined format.

In addition, conventional image forming apparatuses can output document stored therein in only a predetermined process manner. Accordingly, in order to switch currently set monochrome printing of a document into color printing and obtain a color copy of the underlying document (image data), a user of a client has to designate the document again and set the color printing.

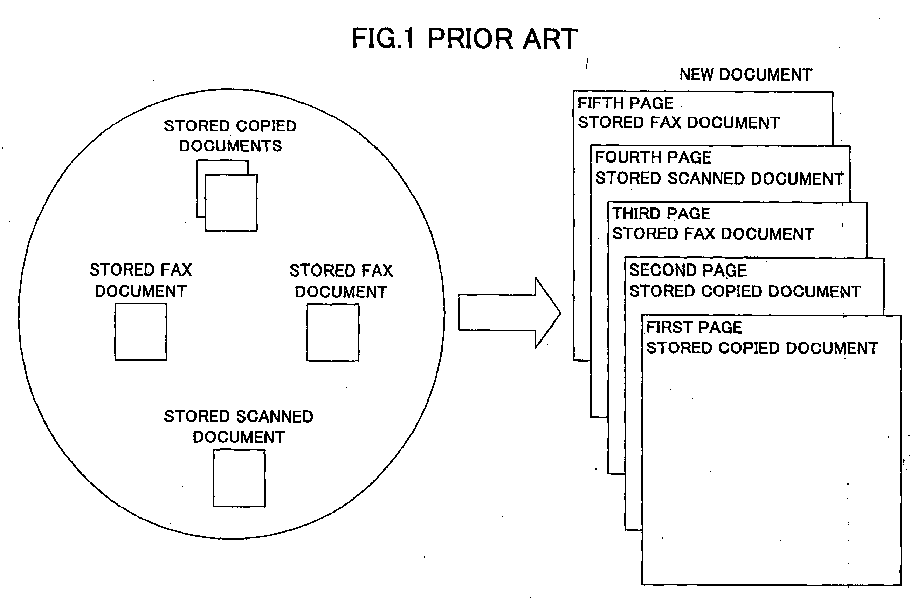

In addition, users can accumulate documents created by executing functions of a printer, a copier and so on in an image processing apparatus and an image forming apparatus. A variety of documents created by using such functions are collectively stored as the accumulated documents, as illustrated in FIG. 1. In order to collectively manage these documents, some of the documents are edited and concatenated, thereby creating a new document. In this case, for example, a user can obtain and edit the created document via a network by manipulating a personal computer (PC).

However, such a newly created document may be configured from a plurality of images having different image renditions (representation formats), for example, with respect to printed image sizes, the number of printed colors and formats. For this reason, users would have difficulties of handling the document with respect to acquisition and edition of the document.

Furthermore, an image processing apparatus, such as an image filing apparatus disclosed in Japanese Laid-Open Patent Application No. 2000-315209 entitled "Image filing device, image filing method and recording medium readable by computer in which program to make computer execute the method is recorded", is presented as an apparatus that allows other apparatuses (clients) connected thereto via a network to use images stored therein.

For example, if such an image processing apparatus is a multifunctional product (MFP), the multifunctional product can optically read documents, store generated image data and received FAX data in a large-capacity storage device such as HDD (Hard Disk Drive), and in response to receipt of a client's request, transmit images to the requesting client.

In such an image processing apparatus, an image is stored in the form of a rendition (image size, number of colors, resolution, image format and so on) configured at time of generation and acquisition thereof. In general, a rendition requested by a client does not always coincide with the original rendition of the image stored in the image processing apparatus. For this reason, if a client requests the image processing apparatus to transmit the image in a different rendition, the image processing apparatus has to convert the original rendition of the image into the requested rendition.

Here, if the client requests the image processing apparatus to transmit a plurality of images belonging to the same group, for example, if a document formed of a plurality of pages is stored as a collection of page-by-page images, the image processing apparatus has to convert respective renditions of the page-by-page images sequentially.

However, it takes some time to convert the rendition of an image and transmit an image via a network because of its large data size in general. During execution of transmission of a rendition-converted image and rendition conversion on an image, conventional image processing apparatuses simply wait for completion of such processes. For this reason, when a document having a plurality of images is transmitted to a client, it takes long time for the client to acquire all the images from the image processing apparatus.

It is a general object of the present invention to provide an image forming apparatus, an image processing apparatus, an image data providing method, a document service providing method, an image providing method, an image processing method and recording media for storing programs to implement these methods in which one or more of the above-mentioned problems are eliminated.

A first more specific object of the present invention is to provide an image forming apparatus that can convert the format of image data into a client's requested format and provide the converted image data to the client.

A second more specific object of the present invention is to provide an image forming apparatus that by using a image formation mechanism for imaging a document (image data) based on bibliography information, can provide a client with extended bibliography information to indicate a process manner included in the bibliography information, overwrite extended bibliography information modified by the client, and manage an extended bibliography information set on a single document (image data) having a plurality of page images.

A third more specific object of the present invention is to provide an image processing apparatus that allows a user to select a desired rendition of a document when the user acquires and edits the document.

A fourth more specific object of the present invention is to provide an image processing apparatus that can efficiently convert respective renditions of one or more images and transmit the converted images to a requesting client.

In order to achieve the above-mentioned objects, there is provided according to one aspect of the present invention an image forming apparatus, including: one or more hardware resources being configured to form an image; one or more programs executing an image formation process; a communication part communicating with a client; an image data conversion part converting a format of image data; and an image processing part, in response to a request from the client, using the image data conversion part to convert a format of image data.

Additionally, there is provided according to another aspect of the present invention a method of providing image data to a client for an image forming apparatus having one or more hardware resources configured to form an image, one or more programs executing an image formation process, and a communication part communicating with the client, including steps of: receiving a request for the image data from the client; acquiring the requested image data; converting a format of the acquired image data; and providing the converted image data to the client.

According to one aspect of the present invention, it is possible to provide an image forming apparatus and an image data providing method that can convert the rendition of image data into a client's requested rendition and provide the converted image data.

Additionally, there is provided according to another aspect of the present invention an image forming apparatus for processing image formation on a document in accordance with document bibliography information having document bibliography information and extended bibliography information on the document and providing one or more services related to the document to a client connected thereto via a network, including: one or more hardware resources being configured to form an image; one or more programs executing an image formation process; a document management part managing one or more documents and document bibliography information thereof by associating the documents and the document bibliography information with document identification information to identify the documents; an extended bibliography information providing part providing extended bibliography information to the client; and an extended bibliography information storage part storing extended bibliography information provided from the client.

Additionally, there is provided according to another aspect of the present invention a method of providing one or more services related to a document to a client connected via a network for an image forming apparatus for processing image formation on the document in accordance with document bibliography information having document bibliography information and extended bibliography information on the document wherein the image forming apparatus has one or more hardware resources being configured to form an image and one or more programs executing an image formation process, the method including steps of: receiving a request to acquire extended bibliography information on a document together with document identification information to identify the document from the client; converting the extended bibliography information associated with the document identification information into an extended bibliography information structure having a predefined data structure; and providing the extended bibliography information structure to the client.

According to one aspect of the present invention, it is possible to provide an image forming apparatus and a document service providing method that can provide extended bibliography information to a client connected thereto via a network, overwrite extended bibliography information modified by the client, and manage an extended bibliography information set on a single document (image data).

Additionally, there is provided according to another aspect of the present invention an image processing apparatus for transmitting and receiving document information on a document to/from a client connected thereto via a network wherein the document information comprises one or more document elements and includes one or more renditions in one of which each document element is represented, including: a rendition list transmission part transmitting a list of one or more possible renditions for one or more document elements composing a document designated by the client; a document element list transmission part transmitting a list of one or more document elements represented in a rendition designated by the client; and a document element providing part providing a document element designated by the client.

Additionally, there is provided according to another aspect of the present invention a method of providing an image for an image processing apparatus for transmitting and receiving document information on a document to/from a client connected thereto via a network wherein the document information comprises one or more document elements and includes one or more renditions in one of which each document element is represented, the method including steps of: transmitting a list of one or more possible renditions for a document designated by the client; transmitting a list of document elements represented in a rendition designated by the client; and transmitting a document element designated by the client.

According to one aspect of the present invention, it is possible to provide an image processing apparatus and an image providing method that allow a user to select a rendition of a document when the user acquires and edits the document.

Additionally, there is provided according to another aspect of the present invention an image processing apparatus having a document having one or more document elements for, in response to receipt of an acquisition request from a client connected thereto via a network, converting a rendition of a document element into a requested rendition and providing the converted document element to the client, including: a document element processing part converting a document element; a prediction part predicting a document element to be rendition-converted in response to receipt of an acquisition request; and a registration part registering a conversion request to convert a rendition of the predicted document element in a queue of the document element processing part.

Additionally, there is provided according to another aspect of the present invention a method of processing an image for an image processing apparatus having a document having one or more document elements for, in response to receipt of an acquisition request from a client connected thereto via a network, converting a rendition of a document element into a requested rendition and providing the converted document element to the client, the method including steps of:
predicting a document element to be rendition-converted in response to receipt of an acquisition request; registering a rendition conversion request for the predicted document element in a queue to manage a conversion order of the document element; converting the document element; and providing the converted document element to the client.

According to one aspect of the present invention, it is possible to provide an image processing apparatus and an image processing method that can efficiently convert respective renditions of one or more images and transmit the converted images to a requesting client.

Furthermore, recording media for storing programs to implement the above-mentioned methods are provided.

Other objects, features and advantages of the present invention will become more apparent from the following detailed description when read in conjunction with the accompanying drawings, in which:
FIG. 1 is a diagram to explain edition and concatenation of various types of documents in a conventional image processing apparatus;
FIG. 2 shows an exemplary overall system structure including a multifunctional product according to a first embodiment of the present invention;
FIG. 3 shows another exemplary overall system structure including multifunctional products according to the first embodiment;
FIG. 4 shows an exemplary functional structure of a multifunctional product according to the first embodiment;
FIG. 5 shows exemplary convertible image data formats handled by MEU according to the first embodiment;
FIG. 6 shows an exemplary hardware configuration of a multifunctional product according to the first embodiment;
FIG. 7 is a block diagram illustrating exemplary software blocks of PC in a system according to the first embodiment;
FIG. 8 shows an exemplary hardware configuration of a computer system in a system according to the first embodiment;
FIG. 9 shows an exemplary thumbnail view illustrating thumbnails of image data displayed on PC according to the first embodiment;
FIG. 10 shows an exemplary image data acquisition screen displayed on PC according to the first embodiment;
FIG. 11 is a sequence diagram of an exemplary MLB availability check operation according to the first embodiment;
FIG. 12 shows exemplary contents of an MLB availability information acquisition request transmitted from PC to a multifunctional product according to the first embodiment;
FIG. 13 shows exemplary contents of an MLB availability information acquisition response for the MLB availability information acquisition request shown in FIG. 12;
FIG. 14 is a sequence diagram of an exemplary image data acquisition operation in a case where it is determined that MLB is not available based on MLB availability information according to the first embodiment;
FIG. 15 is a sequence diagram of an exemplary image data acquisition operation in a case where it is determined that MLB is available based on MLB availability information according to the first embodiment;
FIG. 16 shows exemplary contents of an image data acquisition request transmitted from PC to a multifunctional product according to the first embodiment;
FIG. 17 is a sequence diagram of another exemplary image data acquisition operation according to the first embodiment;
FIG. 18 shows an exemplary table of convertible image data formats according to the first embodiment;
FIG. 19 is a sequence diagram of another exemplary image data acquisition operation according to the first embodiment;
FIG. 20 shows exemplary contents of a convertible format request transmitted from PC to a multifunctional product according to the first embodiment;
FIG. 21 shows exemplary contents of a convertible format response for the convertible format request shown in FIG. 20;
FIG. 22 shows exemplary contents of an HTML document corresponding to the convertible format response shown in FIG. 21;
FIG. 23 shows exemplary contents of the HTML document shown in FIG. 22 displayed on an HTML browser;
FIG. 24 shows exemplary contents of another convertible format request according to the first embodiment;
FIG. 25 is a sequence diagram of another exemplary image data acquisition operation according to the first embodiment;
FIG. 26 is a flowchart of an exemplary operation of PC in the image data acquisition operation in FIG. 25;
FIG. 27 shows an exemplary functional structure of a multifunctional product according to a second embodiment of the present invention;
FIG. 28 shows an exemplary hardware configuration of a multifunctional product according to the second embodiment;
FIG. 29 is a block diagram illustrating a first functional structure of a multifunctional product providing a repository Web service according to the second embodiment;
FIGS. 30A through 30C show exemplary data structures for managing image data according to the second embodiment;
FIG. 31 shows exemplary XML formatted bibliography information generated from a bibliography information shown in FIG. 30C;
FIG. 32 is a sequence diagram of an exemplary extended information acquisition operation according to the second embodiment;
FIG. 33 is a sequence diagram of an exemplary extended bibliography information change operation according to the second embodiment;
FIG. 34 is a sequence diagram of an exemplary extended bibliography information change operation on a FAX document according to the second embodiment;
FIG. 35 is a sequence diagram of an exemplary registration operation according to the second embodiment;
FIG. 36 is a sequence diagram of another exemplary extended bibliography information registration operation according to the second embodiment;
FIGS. 37A and 37B show an exemplary structure of a document ticket according to the second embodiment;
FIG. 38 is a block diagram illustrating a second functional structure of a multifunctional product providing a repository Web service according to the second embodiment;
FIG. 39 shows an exemplary functional structure of a multifunctional product according to a third embodiment of the present invention;
FIG. 40 shows an exemplary hardware configuration of a multifunctional product according to the third embodiment;
FIG. 41 shows an exemplary structure of a system including the multifunctional product providing a document management service according to the third embodiment;
FIG. 42 shows an exemplary document bibliography information storage area according to the third embodiment;
FIG. 43 shows an exemplary page bibliography information storage area according to the third embodiment;
FIG. 44 shows an exemplary document management data storage area according to the third embodiment;
FIG. 45 shows an exemplary image storage area according to the third embodiment;
FIG. 46 shows an exemplary structure of a document management service according to the third embodiment;
FIG. 47 shows an exemplary rendition ID according to the third embodiment;
FIG. 48 shows another rendition ID according to the third embodiment;

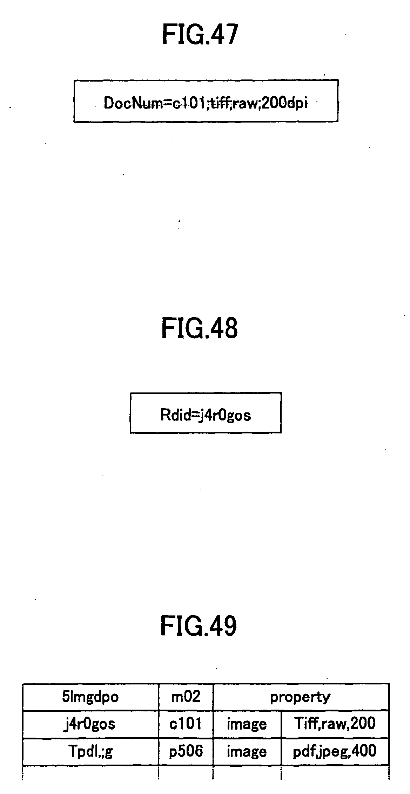

FIG. 48 shows an exemplary rendition ID correspondence table of rendition IDs according to the third embodiment;
FIG. 49 shows an exemplary rendition ID correspondence table of rendition IDs according to the third embodiment;

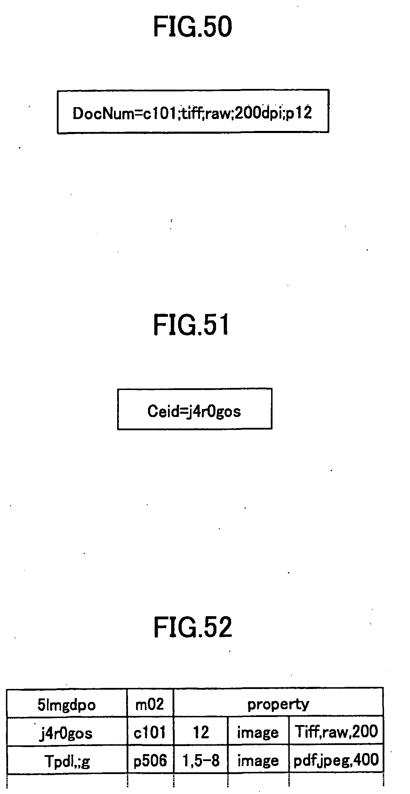

FIG. 50 shows an exemplary content element ID according to the third embodiment;
FIG. 51 shows another exemplary content element ID according to the third embodiment;
FIG. 52 shows an exemplary content element ID correspondence table according to the third embodiment;

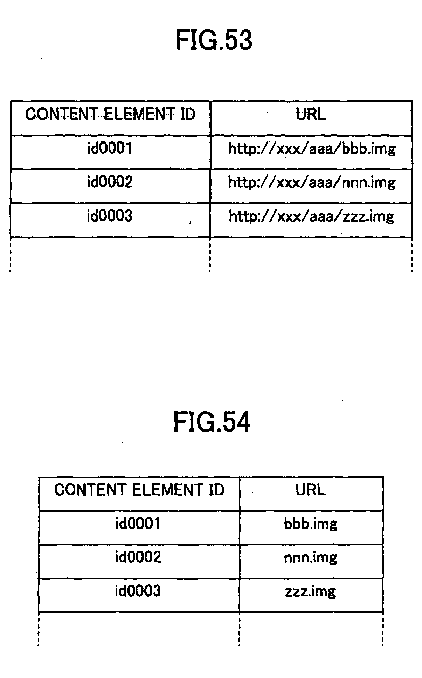

FIG. 53 shows an exemplary URL table according to the third embodiment;
FIG. 54 shows another exemplary URL table according to the third embodiment;

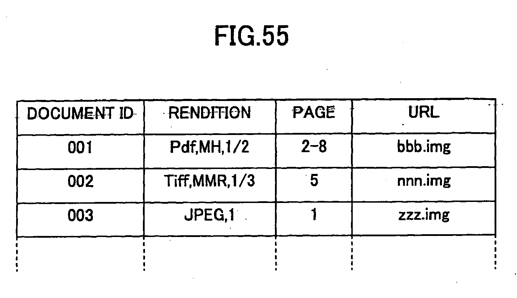

FIG. 55 shows another exemplary URL table according to the third embodiment;

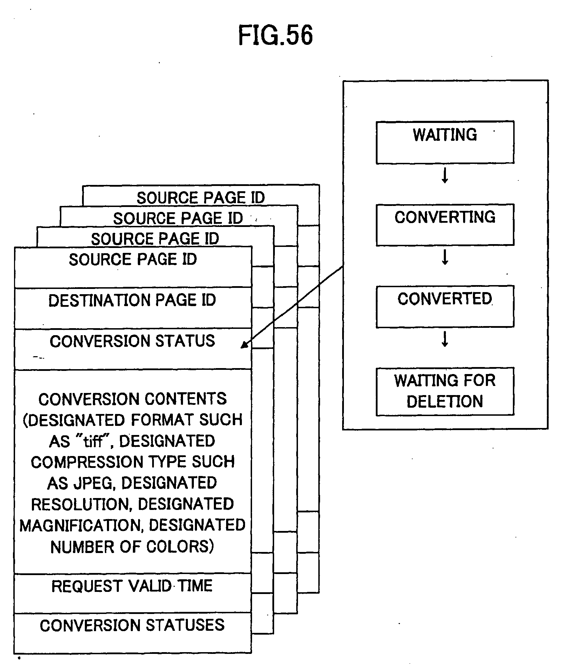

FIG. 56 shows an exemplary conversion request queue according to the third embodiment;

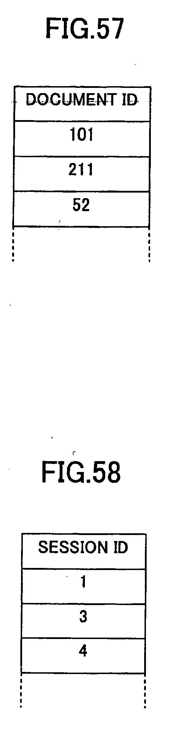

FIG. 57 shows an exemplary document registration table according to the third embodiment;
FIG. 58 shows an exemplary session management table according to the third embodiment;

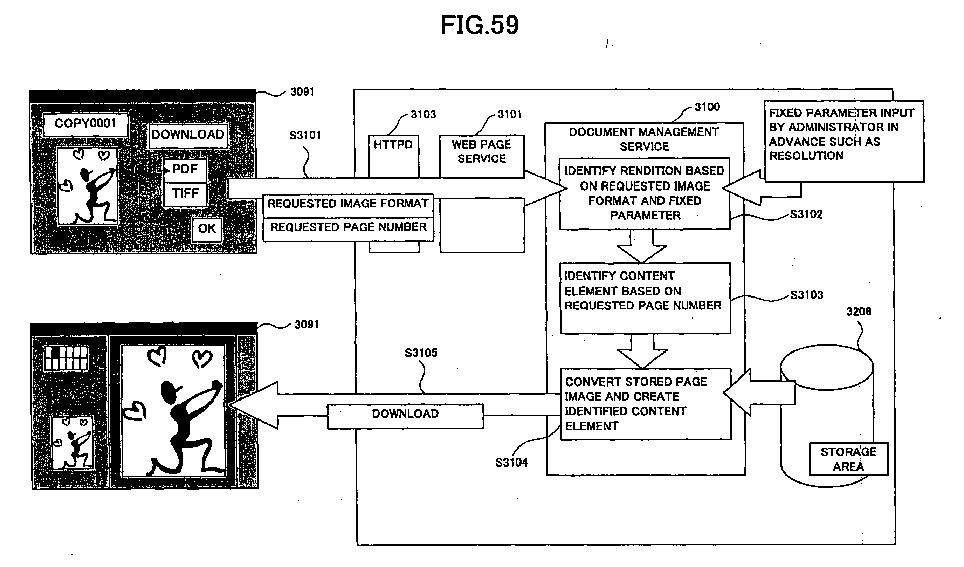

FIG. 59 is a diagram to roughly explain an exemplary content element acquisition process according to the third embodiment;

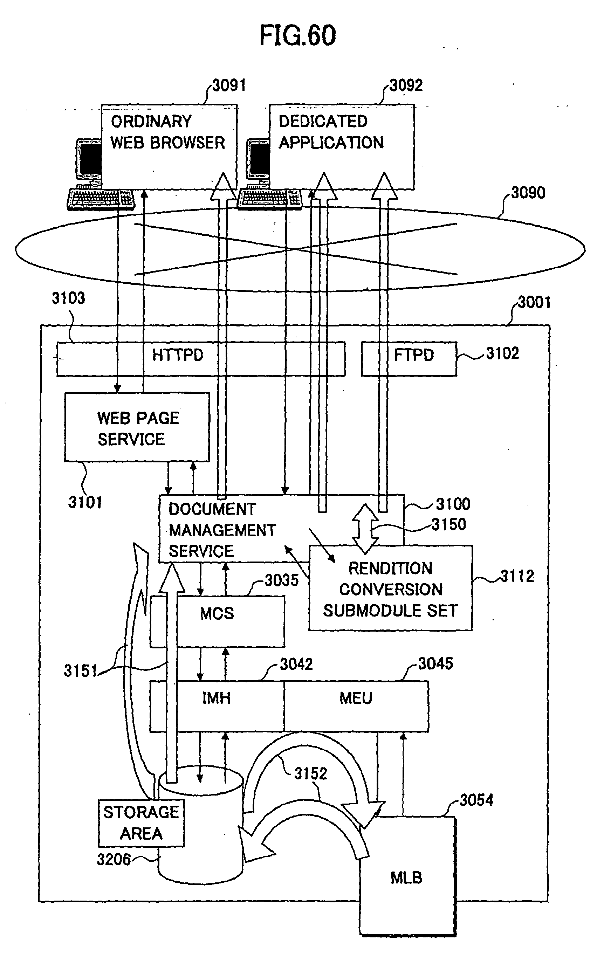

FIG. 60 is a diagram to explain an exemplary detailed content element acquisition operation in detail according to the third embodiment;

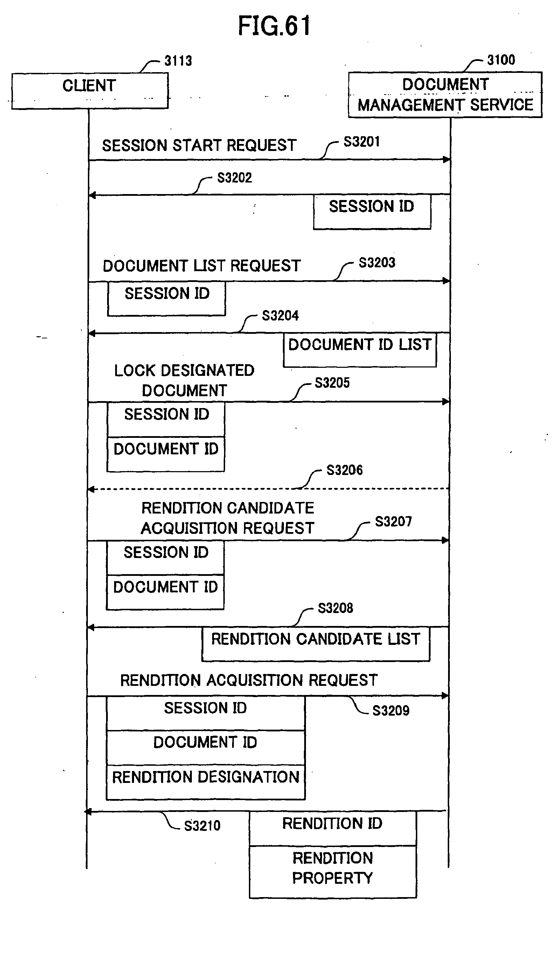

FIG. 61 is a sequence diagram of an exemplary content element acquisition operation according to the third embodiment;

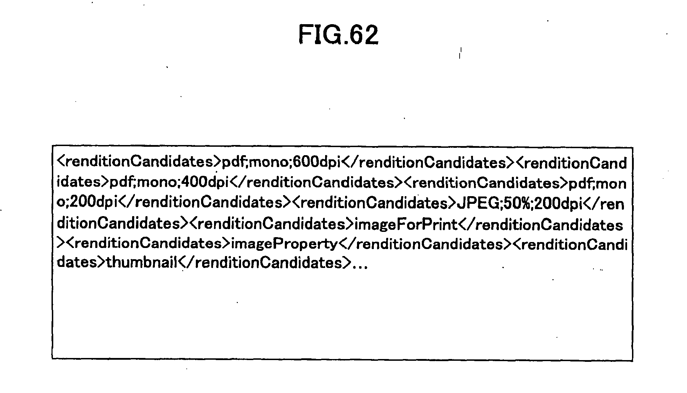

FIG. 62 shows exemplary rendition candidates according to the third embodiment;

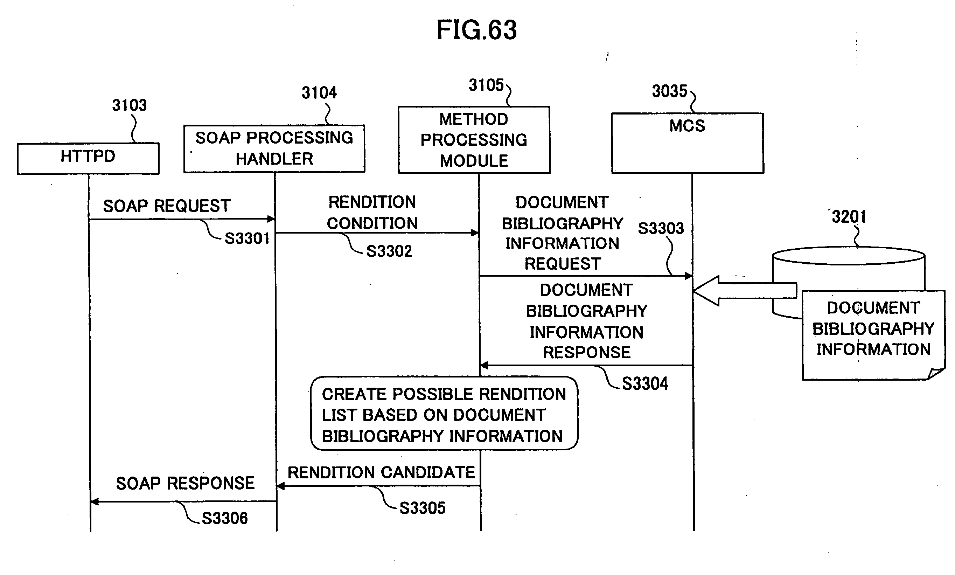

FIG. 63 is a sequence diagram of an exemplary rendition candidate acquisition operation according to the third embodiment;

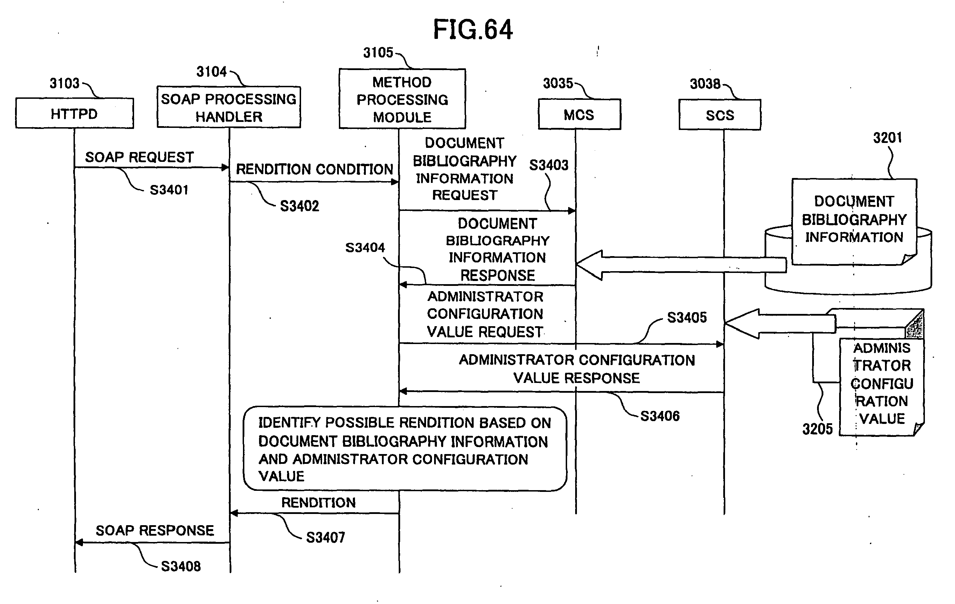

FIG. 64 shows another exemplary rendition candidate acquisition operation according to the third embodiment;

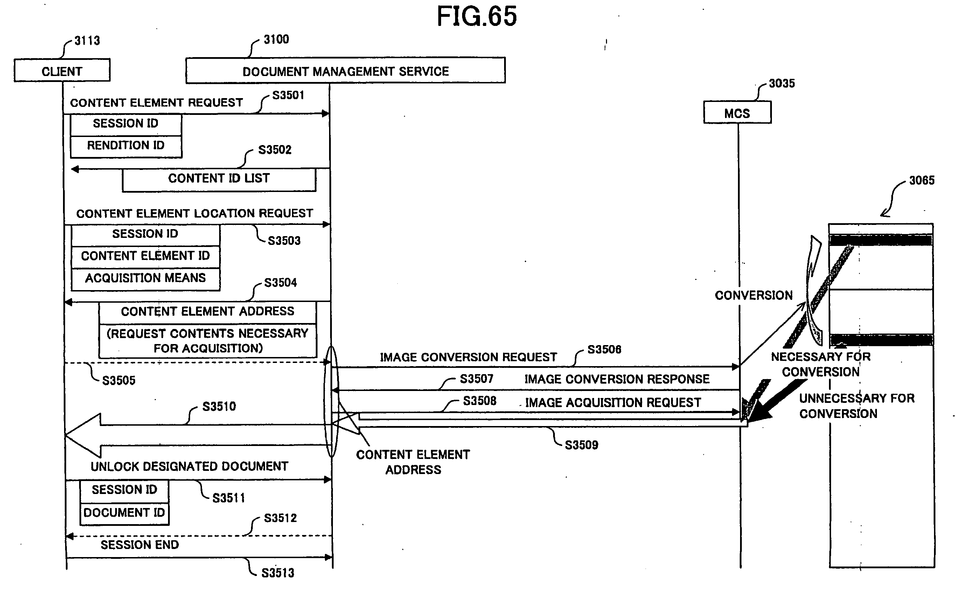

FIG. 65 shows an exemplary content element acquisition operation subsequent to the exemplary rendition candidate acquisition operation according to the third embodiment;

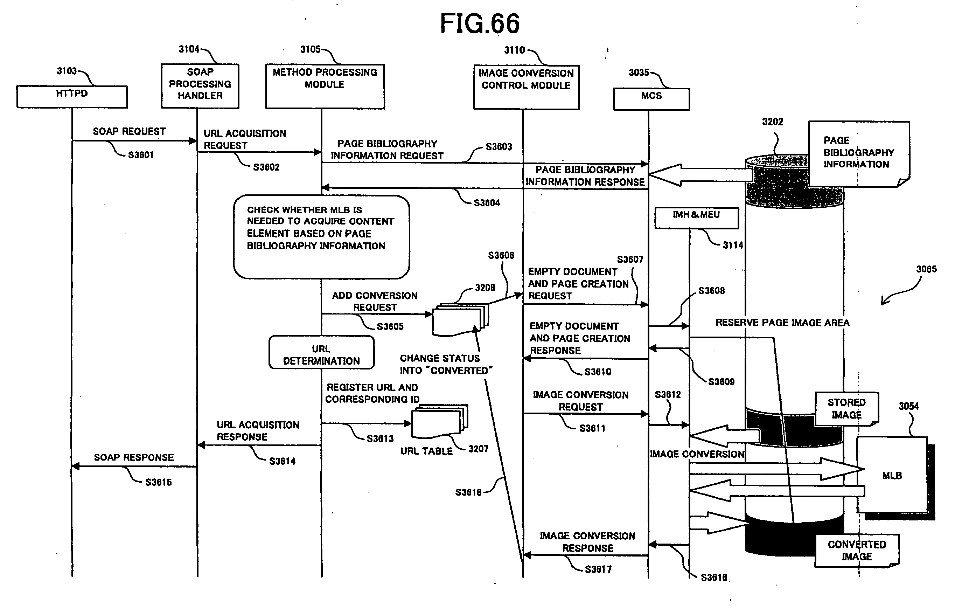

FIG. 66 shows an exemplary content element URL acquisition operation according to the third embodiment;

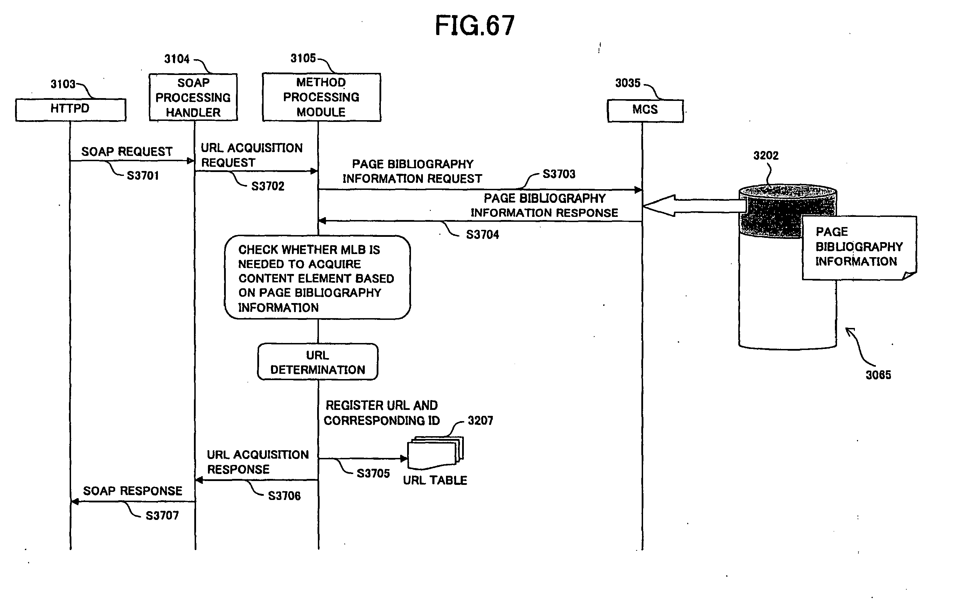

FIG. 67 shows another exemplary content element URL acquisition operation according to the third embodiment;

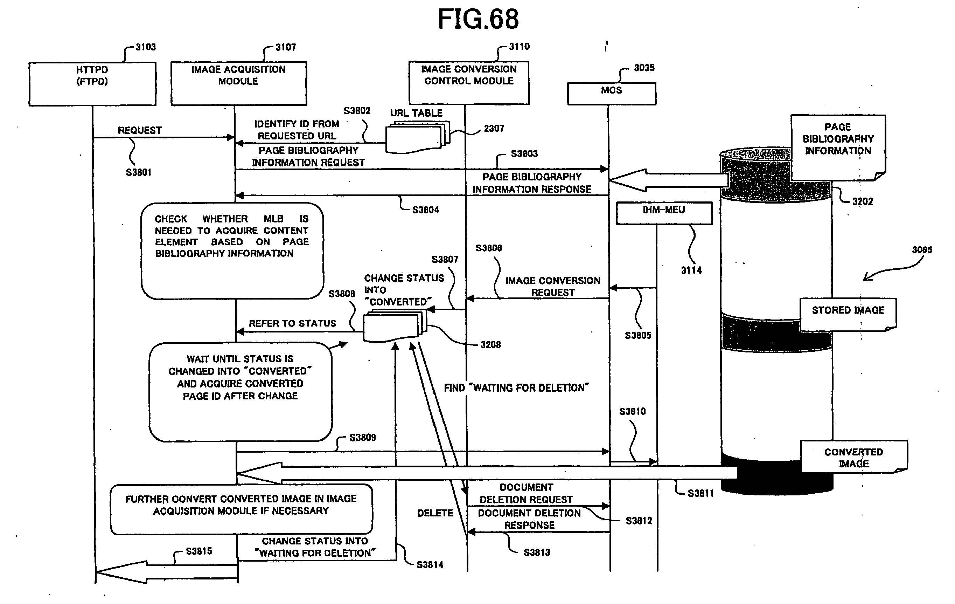

FIG. 68 is a sequence diagram of another exemplary content element acquisition operation according to the third embodiment;

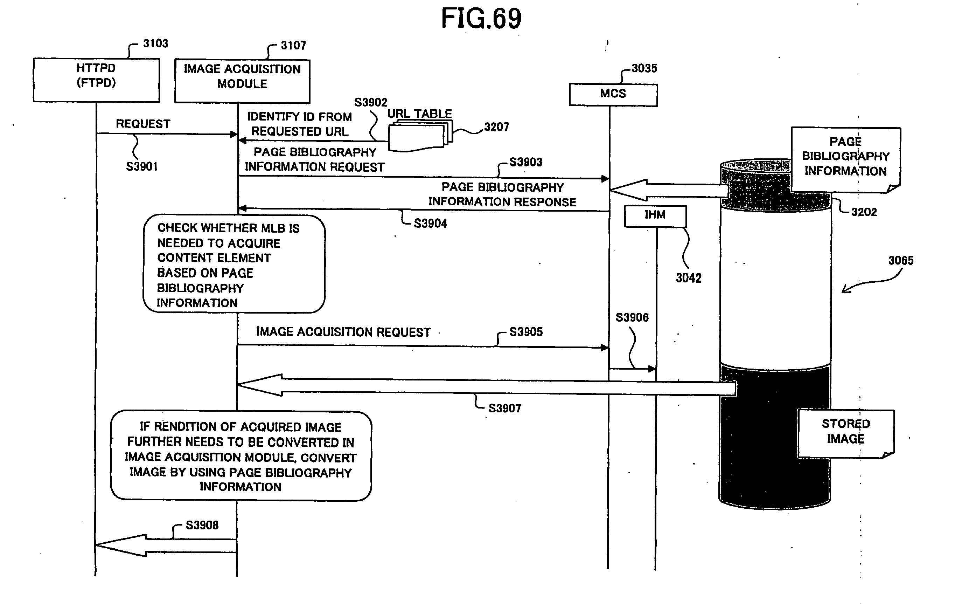

FIG. 69 shows another exemplary content element acquisition operation according to the third embodiment;

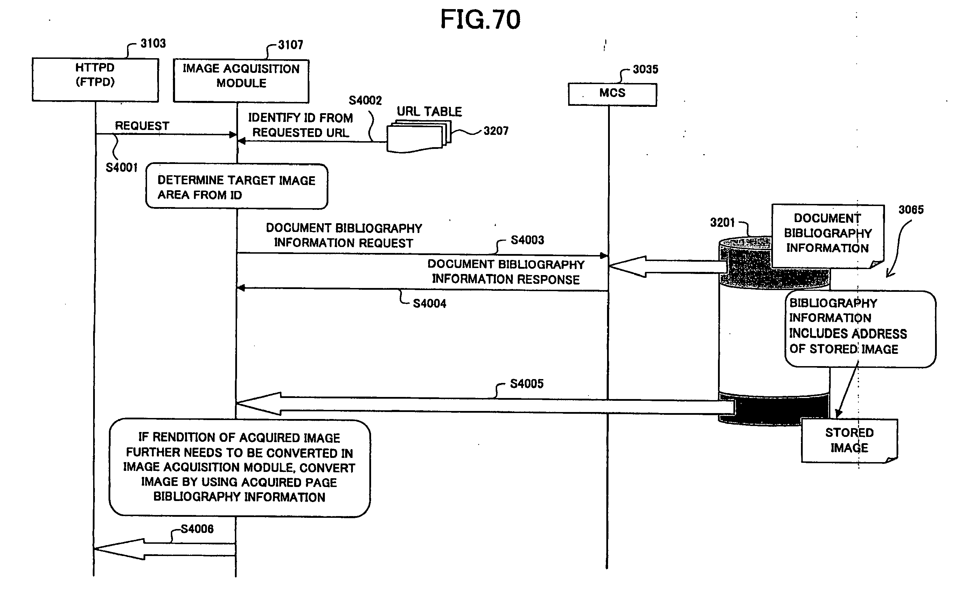

FIG. 70 shows another exemplary content element acquisition operation according to the third embodiment;

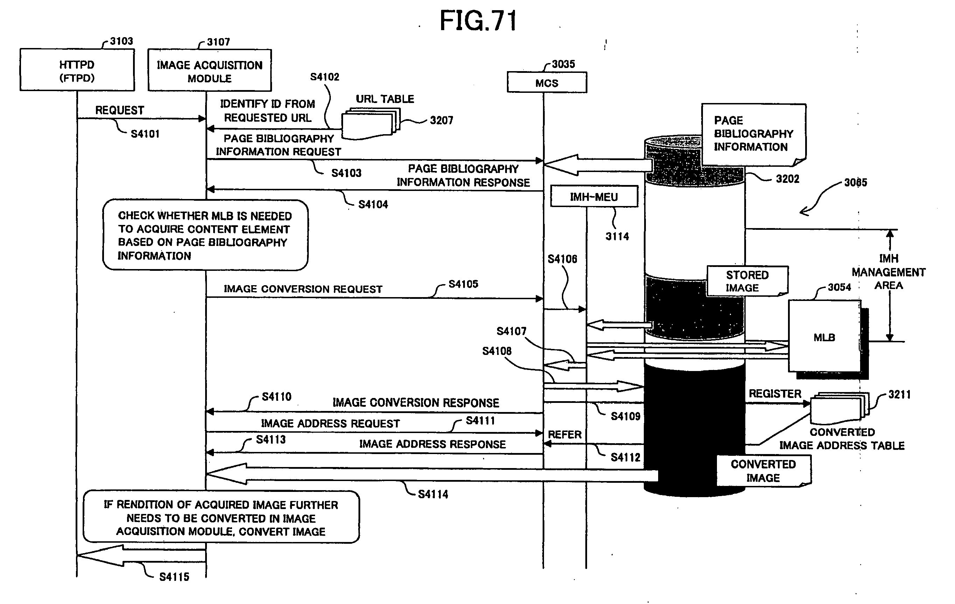

FIG. 71 shows another exemplary content element acquisition operation according to the third embodiment;

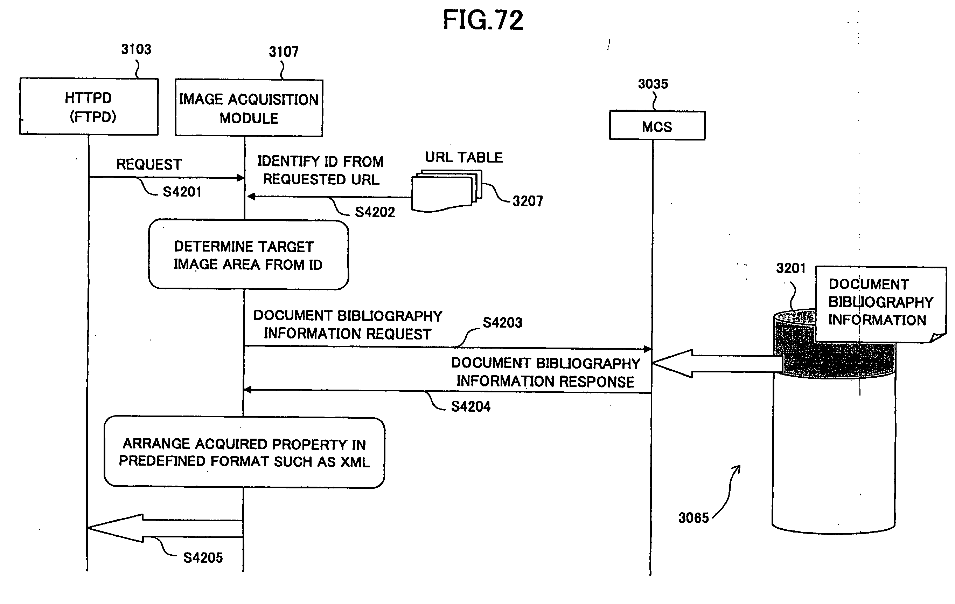

FIG. 72 shows an exemplary content element acquisition operation according to the third embodiment;

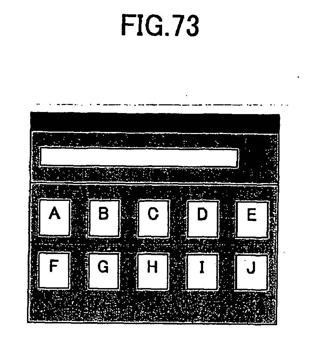

FIG. 73 shows an screen for displaying listed representative images on the Web browser 3091 according to the third embodiment;

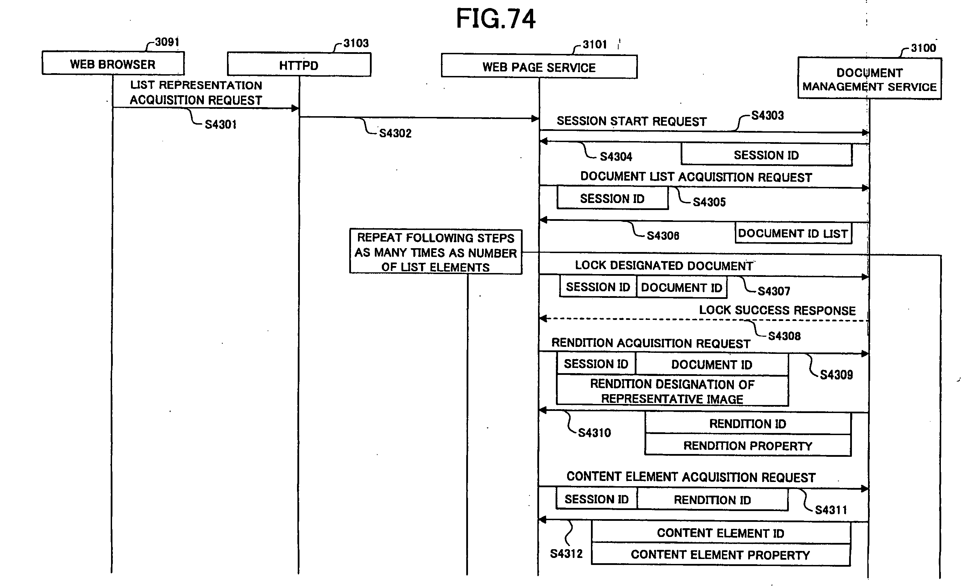

FIG. 74 shows an exemplary representative image acquisition operation according to the third embodiment;

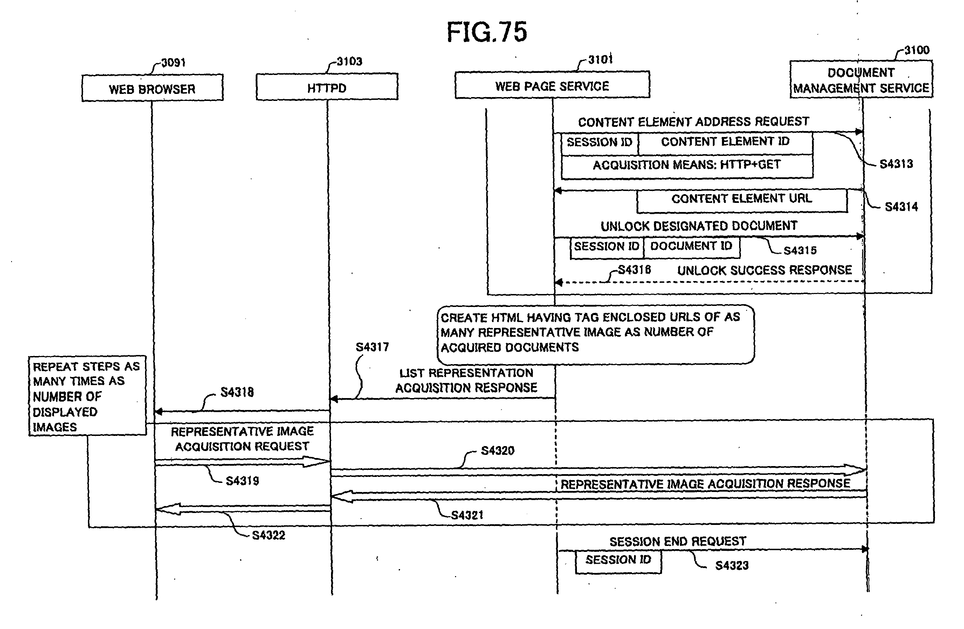

FIG. 75 shows a subsequent operation of the exemplary representative image acquisition operation shown in FIG. 74;

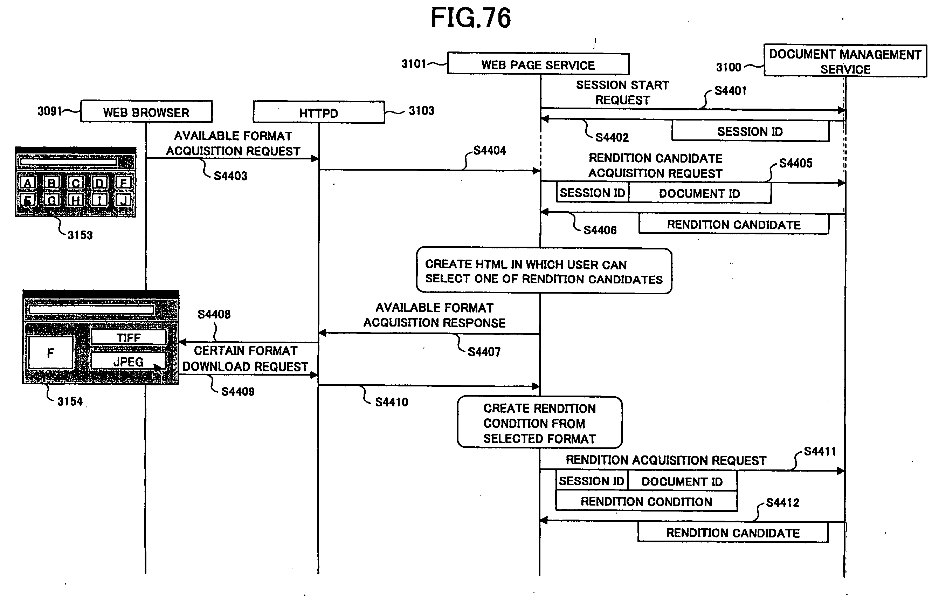

FIG. 76 shows an exemplary certain image download operation according to the third embodiment;

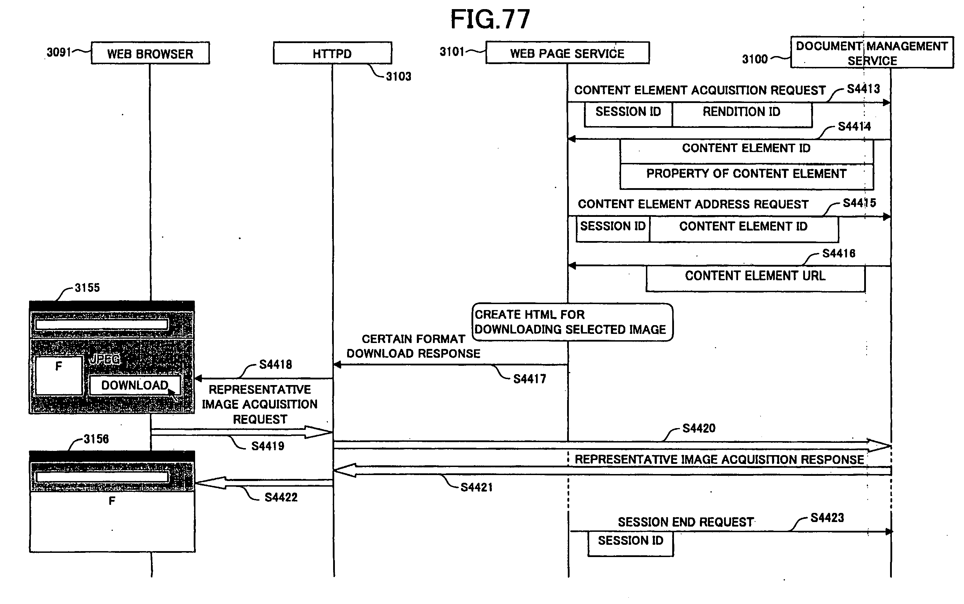

FIG. 77 shows a subsequent operation of the exemplary certain image download operation shown in FIG. 76;

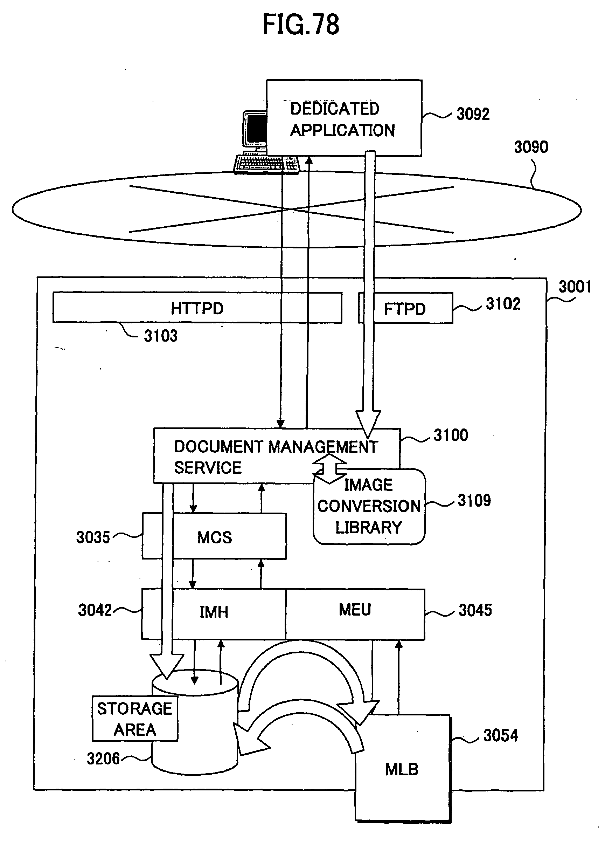

FIG. 78 is a diagram to explain an exemplary content element registration operation according to the third embodiment;

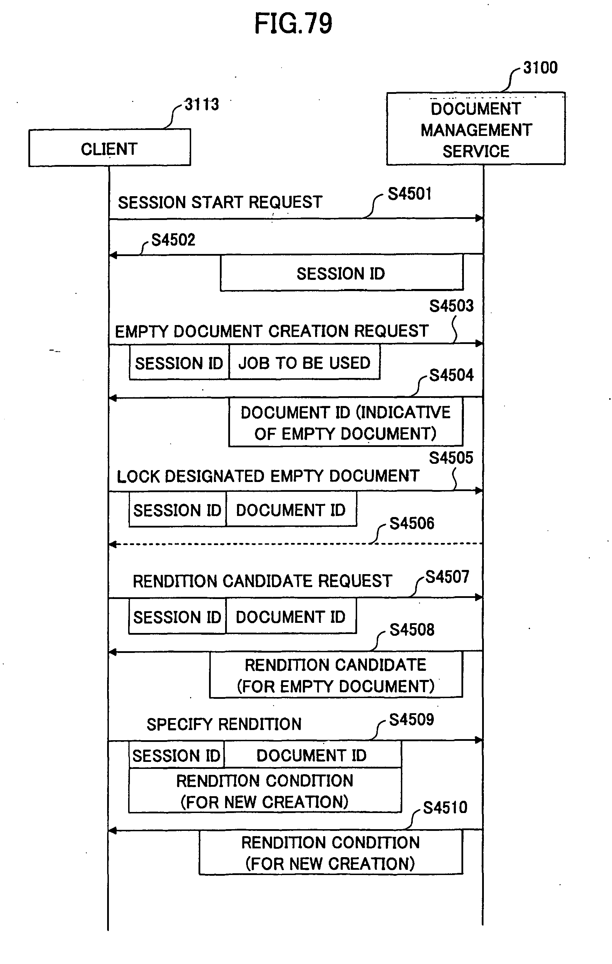

FIG. 79 is a sequence diagram of an exemplary content element registration operation according to the third embodiment;

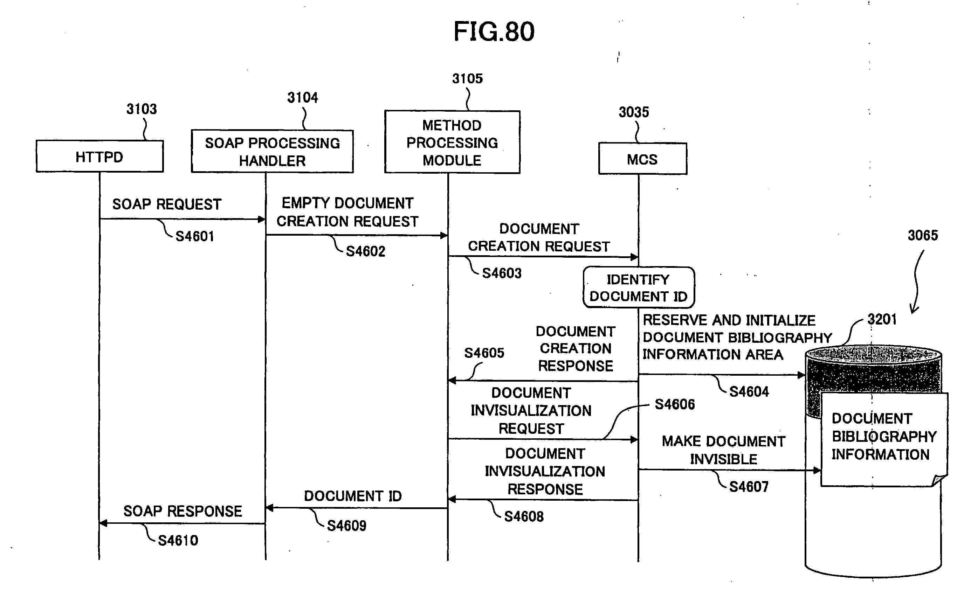

FIG. 80 is a sequence diagram of an exemplary empty document creation operation according to the third embodiment;

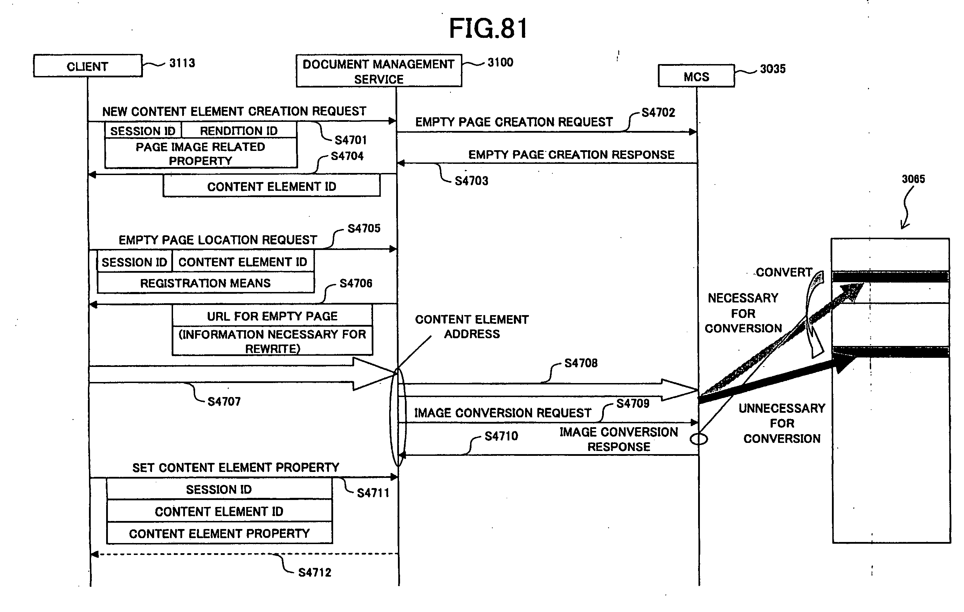

FIG. 81 is a sequence diagram of an exemplary content element registration operation according to the third embodiment;

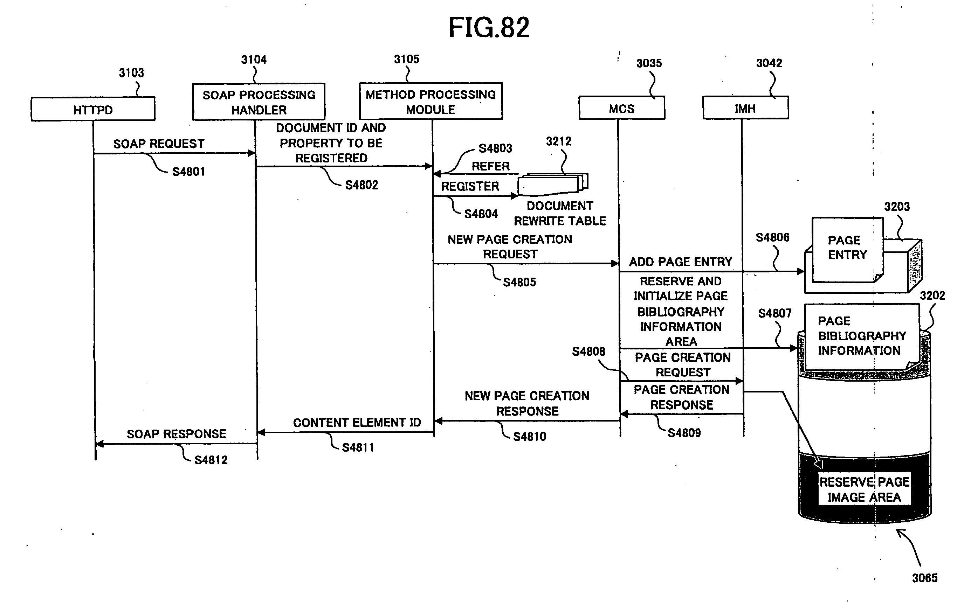

FIG. 82 is a sequence diagram of an exemplary content element creation operation according to the third embodiment;

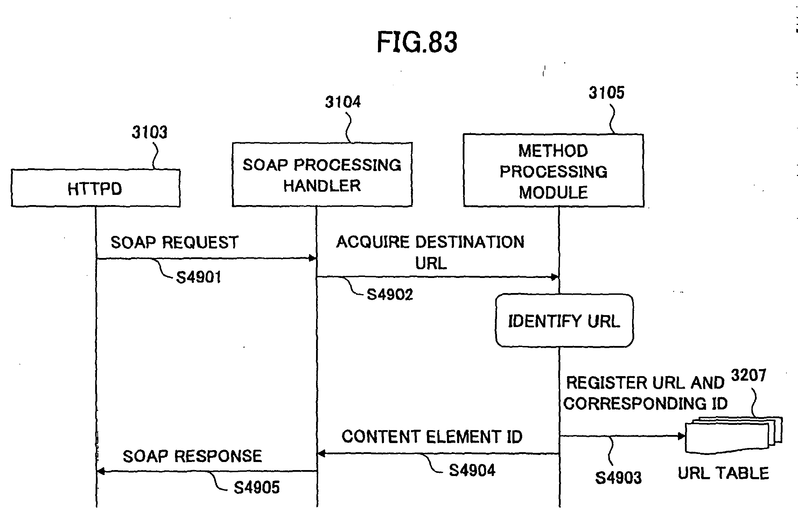

FIG. 83 a sequence diagram of another exemplary content element acquisition operation according to the third embodiment;

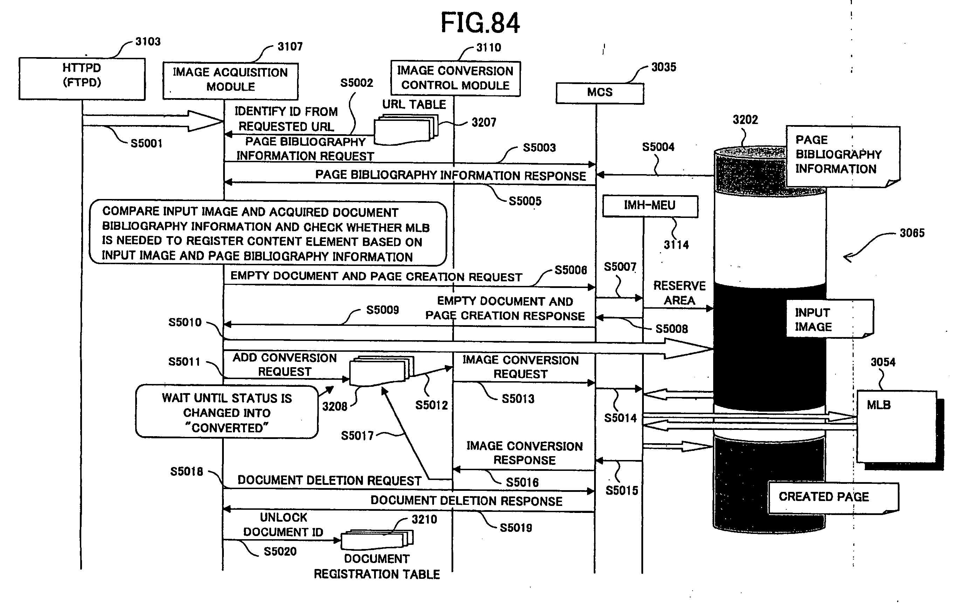

FIG. 84 a sequence diagram of another exemplary content element registration operation according to the third embodiment;

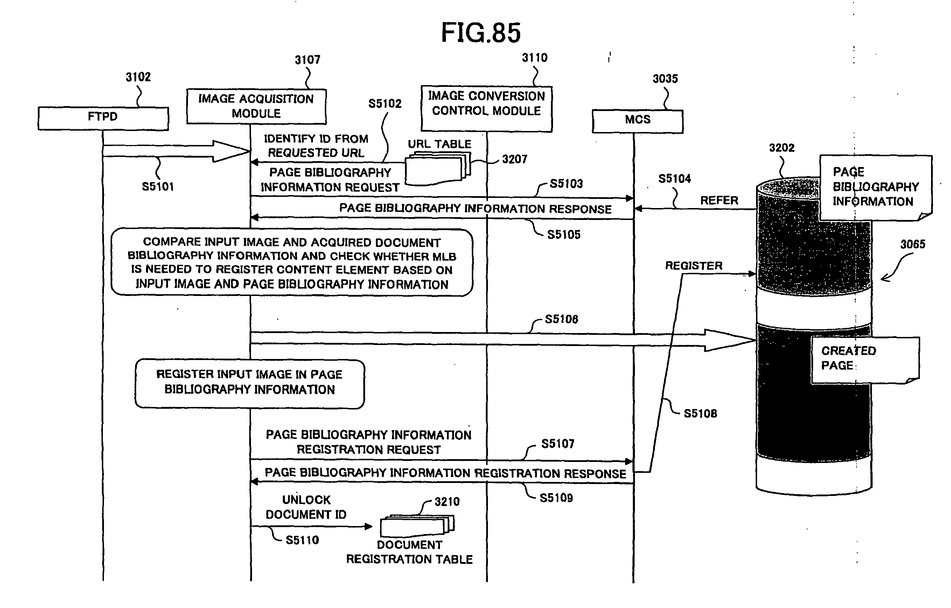

FIG. 85 a sequence diagram of another exemplary content element registration operation according to the third embodiment;

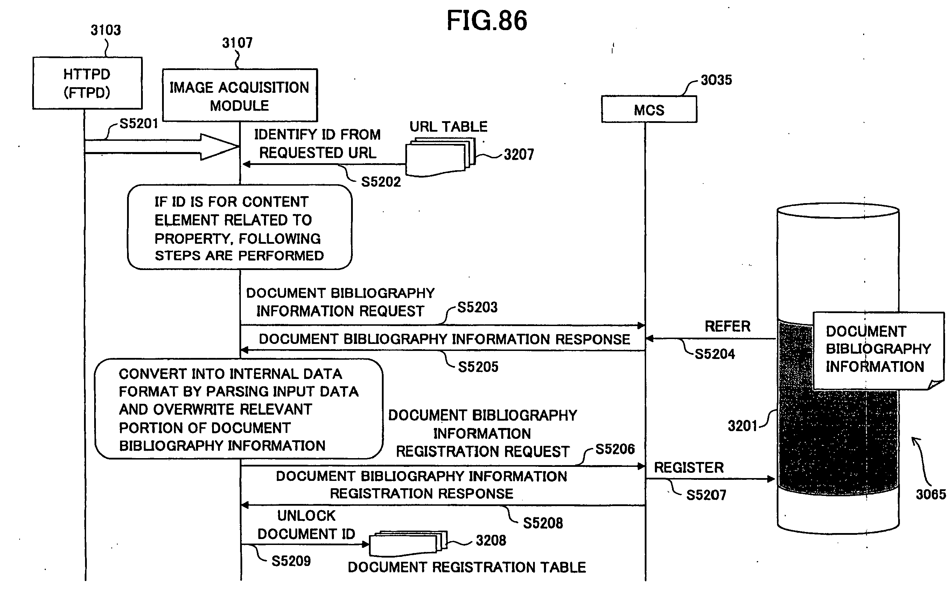

FIG. 86 a sequence diagram of another exemplary content element registration operation according to the third embodiment;

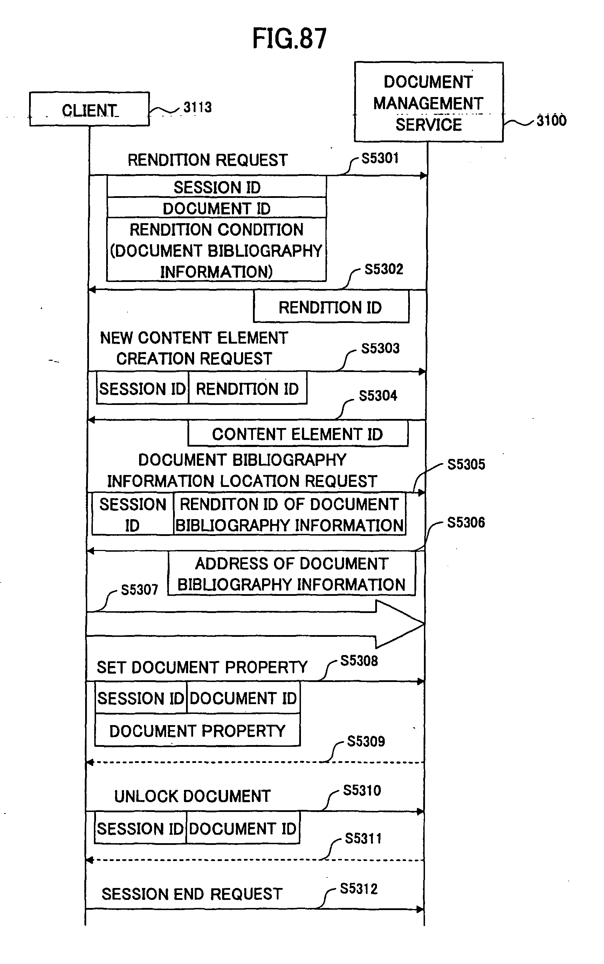

FIG. 87 a sequence diagram of another exemplary content element registration operation according to the third embodiment;

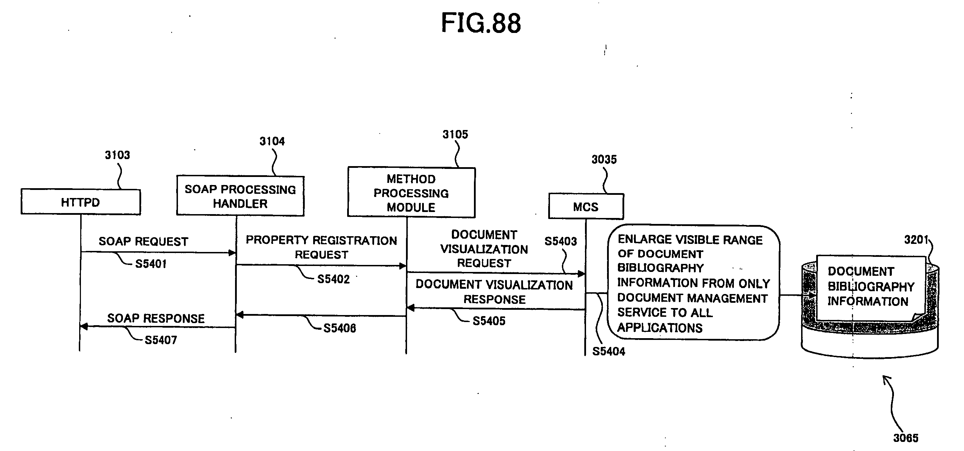

FIG. 88 is a sequence diagram of an exemplary document property registration operation according to the third embodiment;

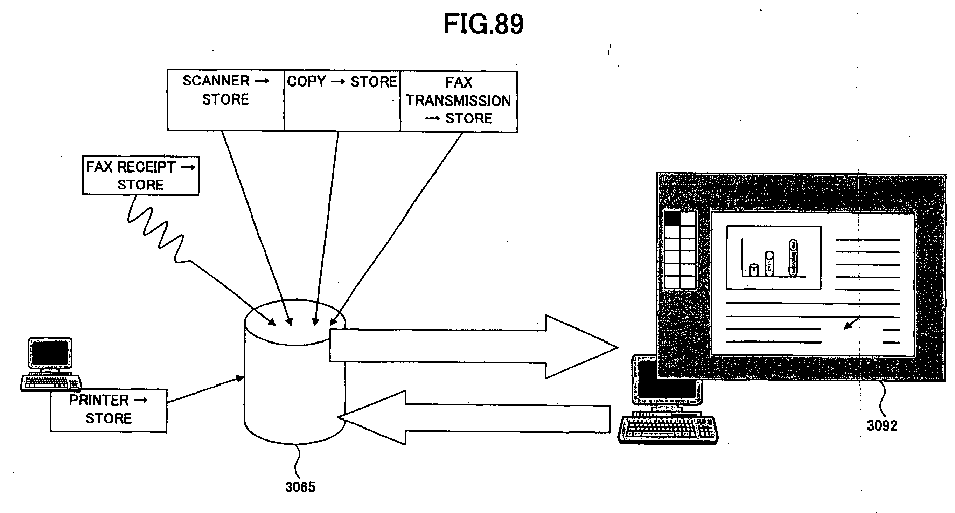

FIG. 89 is a diagram to explain prevention of image degradation according to the third embodiment;

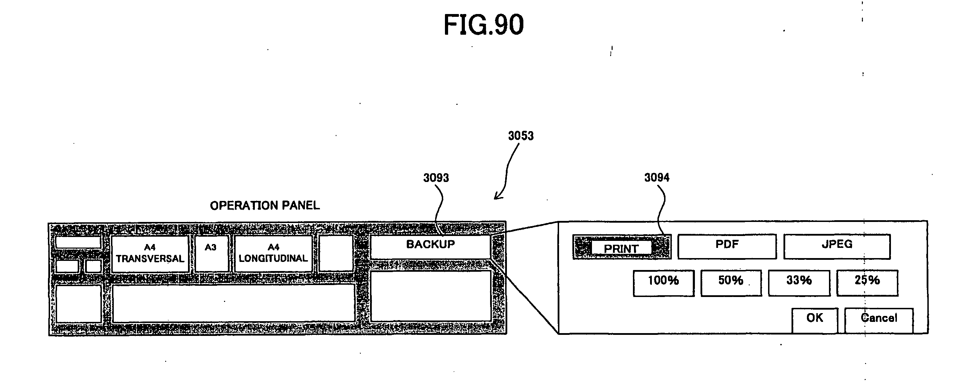

FIG. 90 shows an exemplary operation panel of a multifunctional product according to the third embodiment;

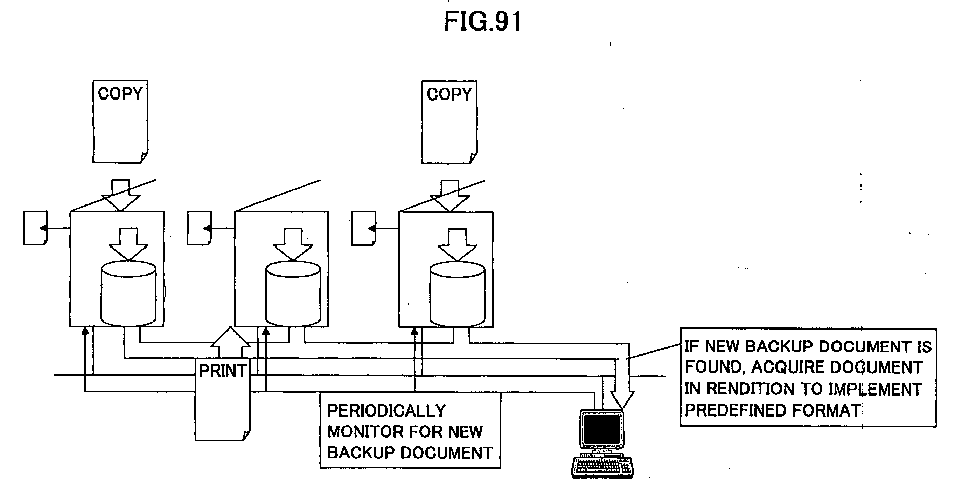

FIG. 91 is a diagram to explain an exemplary backup operation according to the third embodiment;

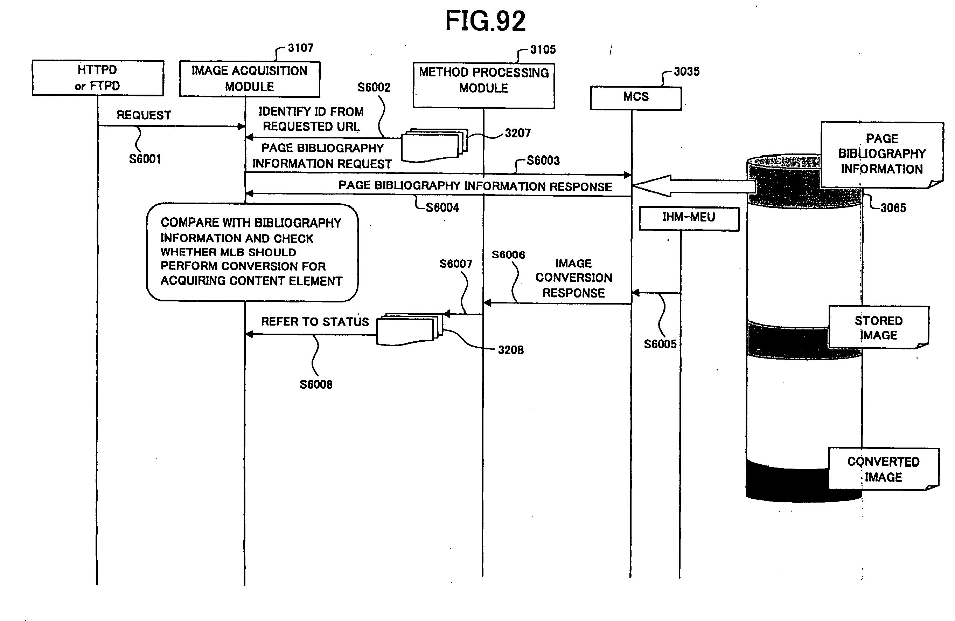

FIG. 92 is a sequence diagram of an exemplary content element acquisition operation according to a fourth embodiment according to the present invention;
FIG. 92 is a sequence diagrams of an exemplary content element acquisition operation according to the fourth embodiment;

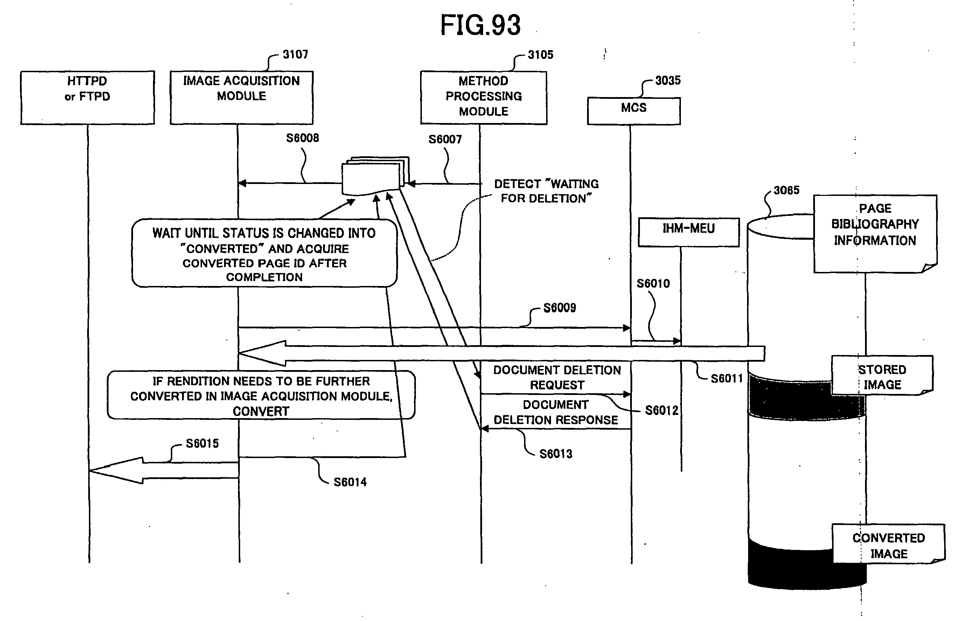

FIG. 93 is a sequence diagrams of a subsequent operation of the exemplary content element acquisition operation shown in FIG. 92;

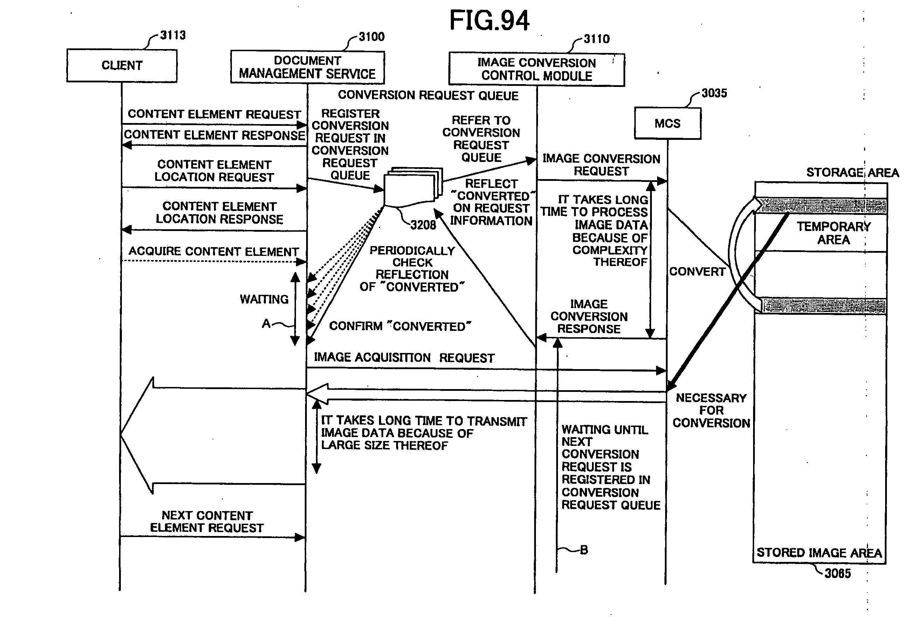

FIG. 94 is a diagram to explain a cause to increase processing time to acquire a plurality of content elements sequentially;

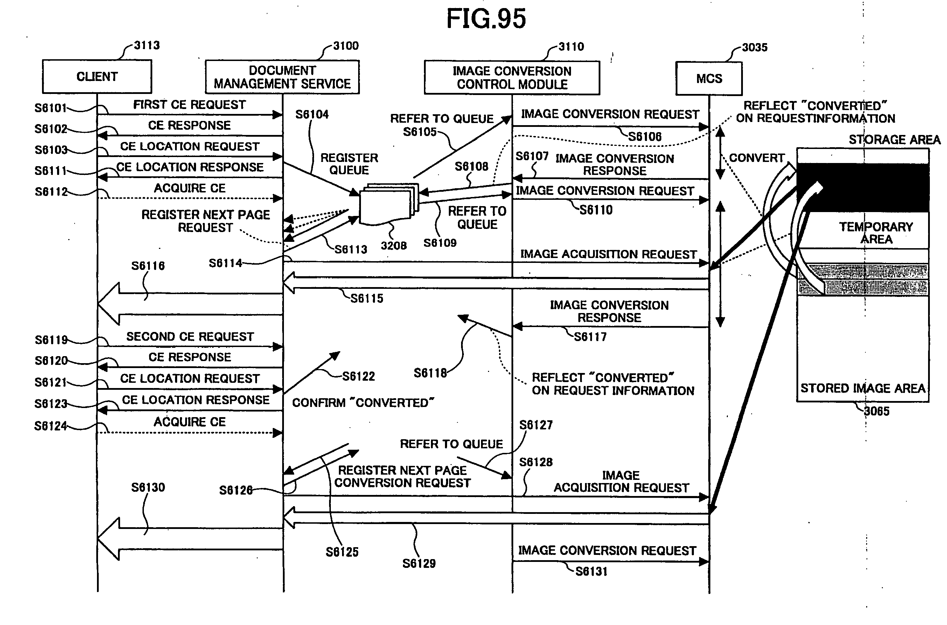

FIG. 95 is a sequence diagram of an exemplary multiple content element acquisition operation according to the fourth embodiment;

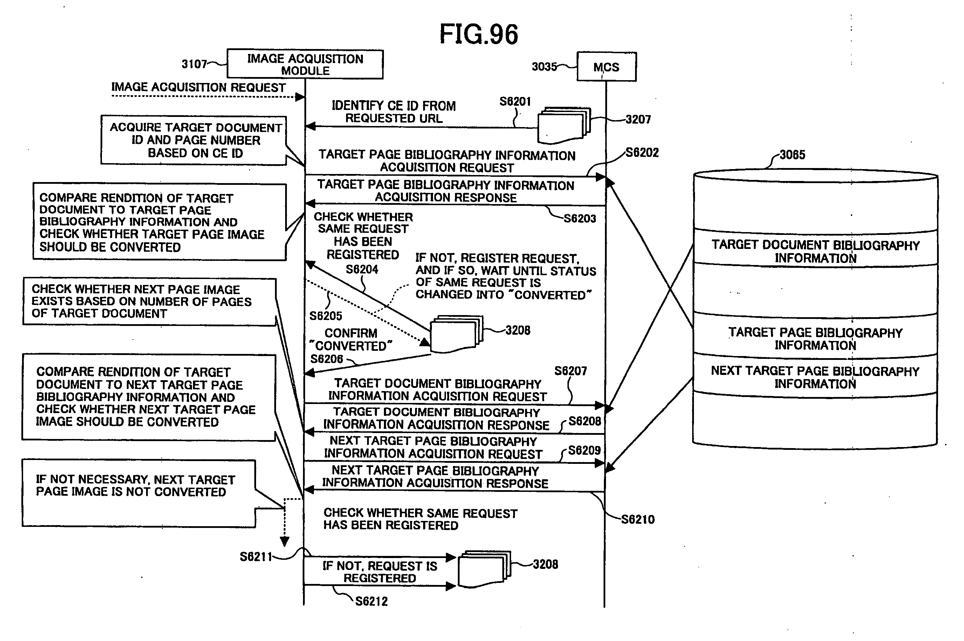

FIG. 96 is a sequence diagram of an exemplary multiple content element successive acquisition operation according to the fourth embodiment;

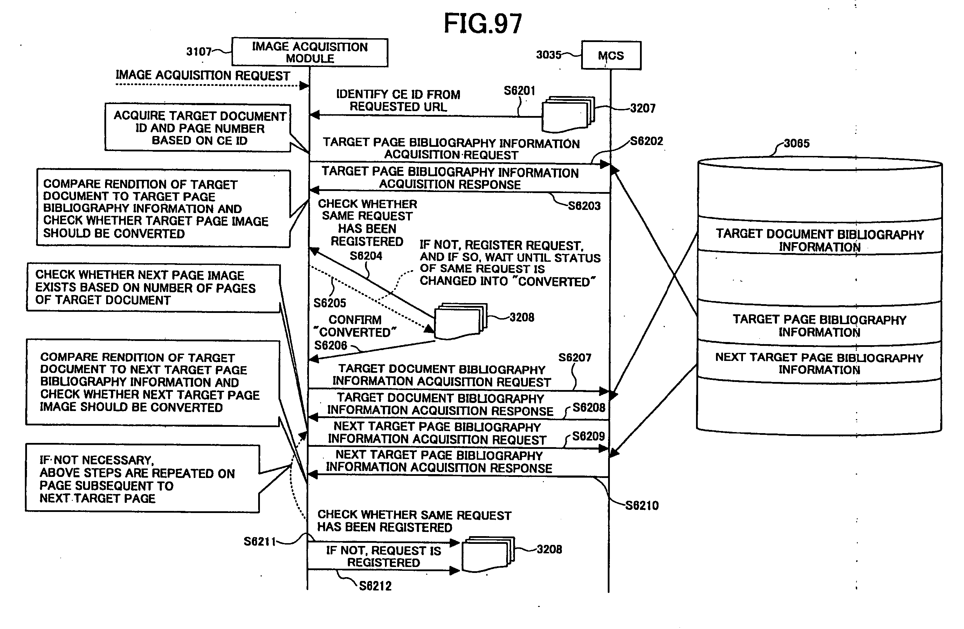

FIG. 97 is a sequence diagram of another exemplary multiple content element successive acquisition operation according to the fourth embodiment;

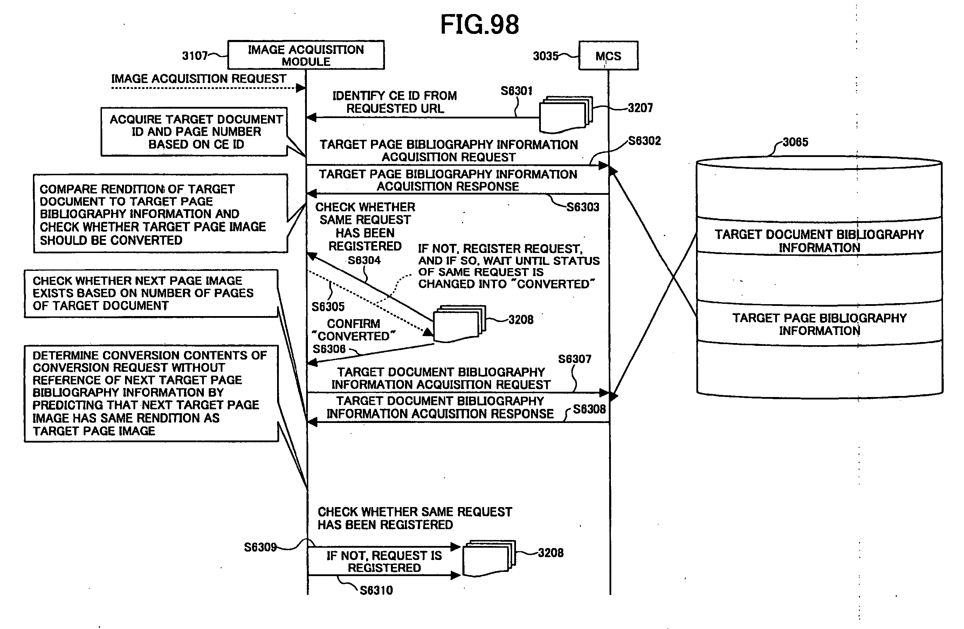

FIG. 98 is a sequence diagram of another exemplary multiple content element successive acquisition operation according to the fourth embodiment;

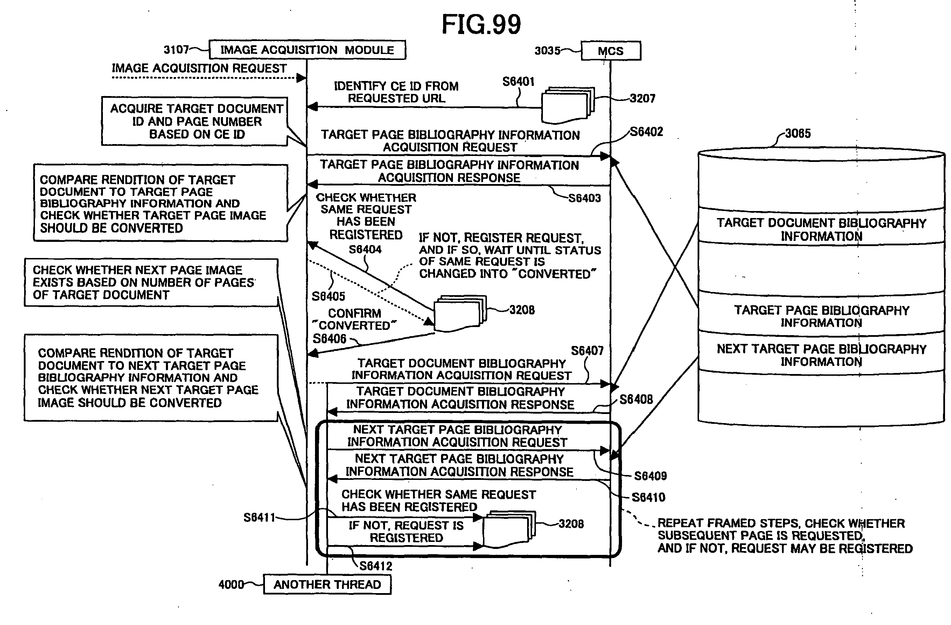

FIG. 99 is a sequence diagram of another exemplary multiple content element successive acquisition operation according to the fourth embodiment;

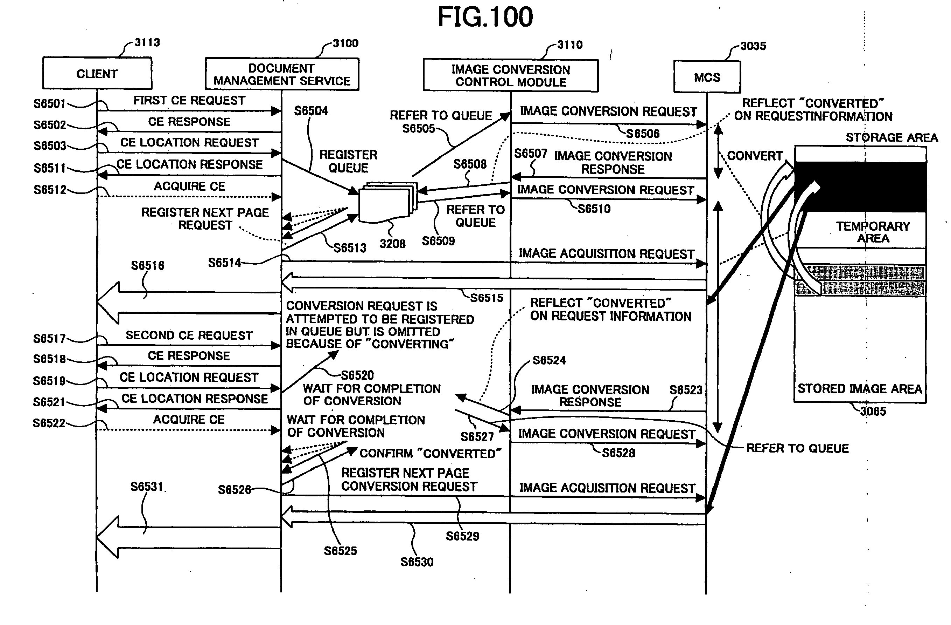

FIG. 100 is a sequence diagram of another exemplary multiple content element successive acquisition operation according to the fourth embodiment;

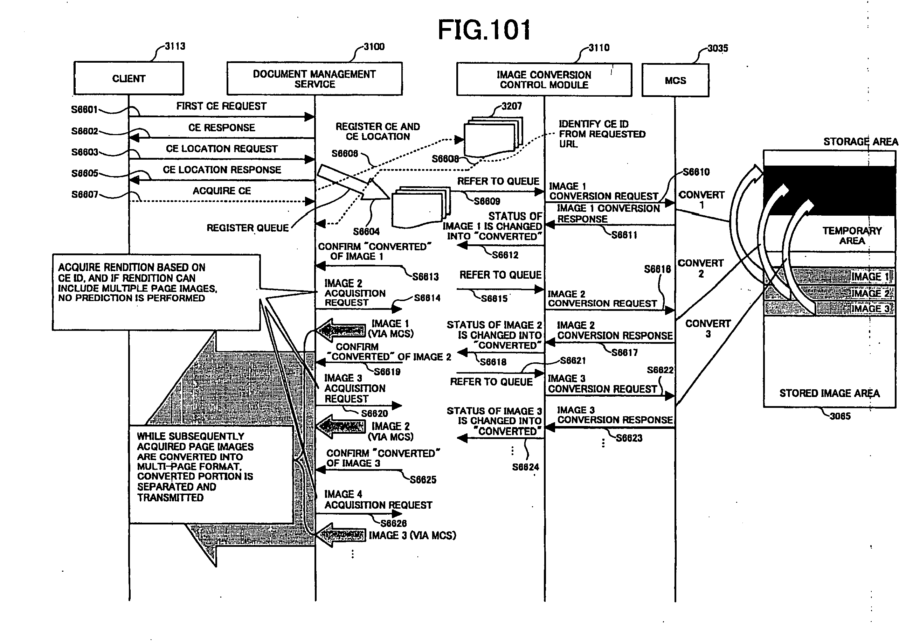

FIG. 101 is a sequence diagram of an exemplary multi-page rendition content element acquisition operation according to the fourth embodiment;

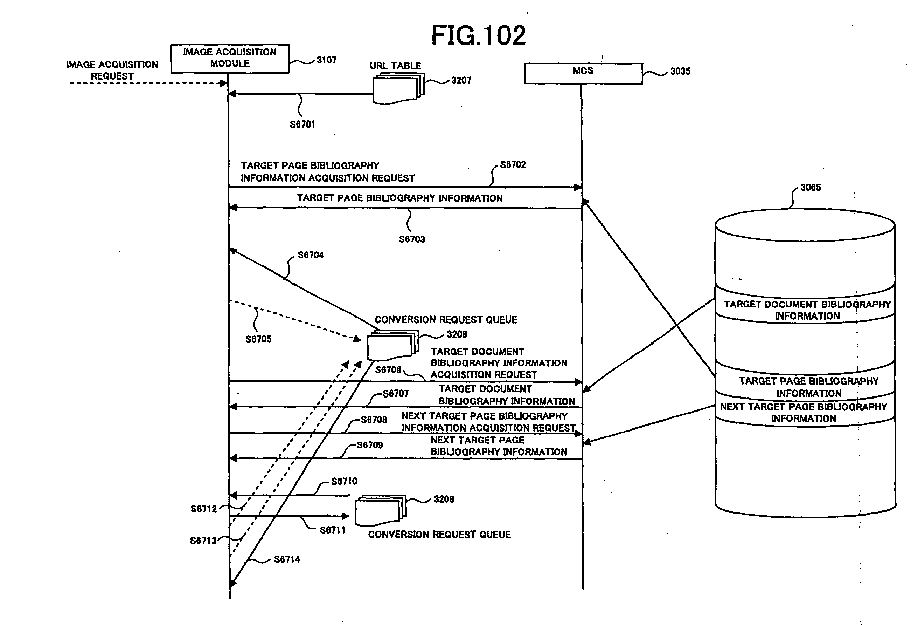

FIG. 102 is a sequence diagram of an exemplary subsequent page conversion request queueing operation according to the fourth embodiment;

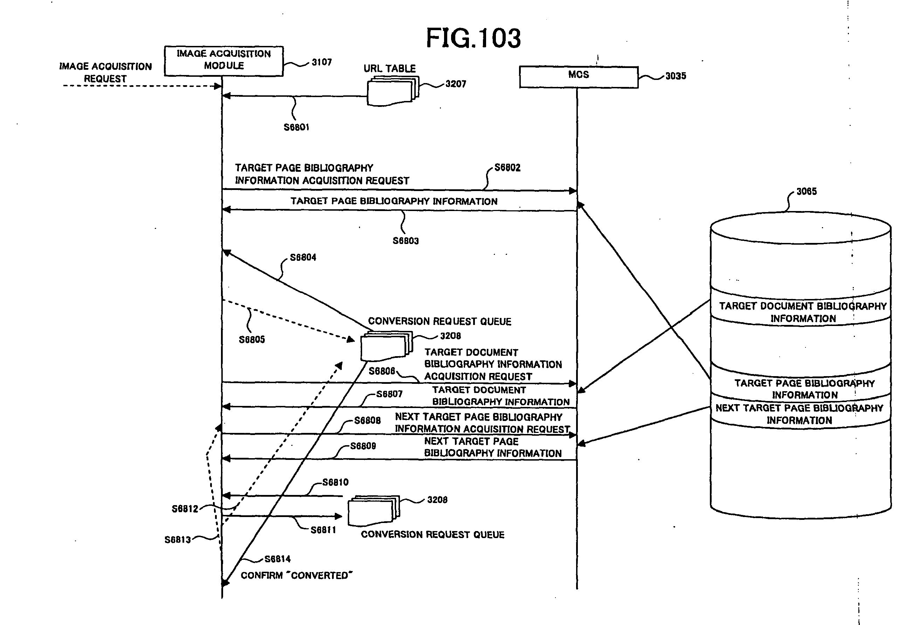

FIG. 103 is a sequence diagram of another exemplary subsequent page conversion request queueing operation according to the fourth embodiment;

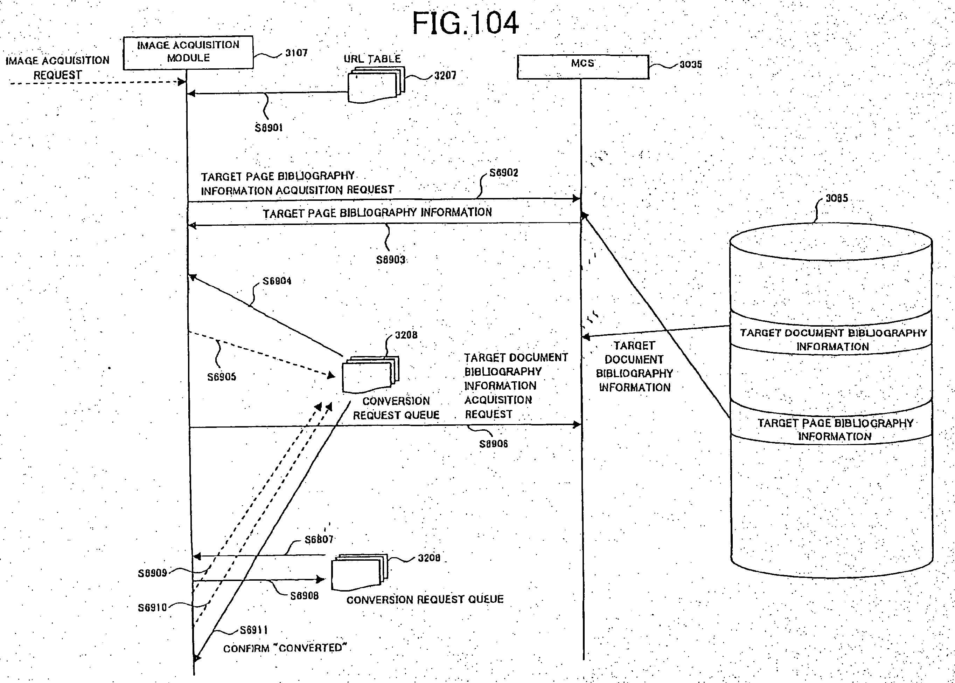

FIG. 104 is a sequence diagram of another exemplary subsequent page conversion request queueing operation according to the fourth embodiment; and

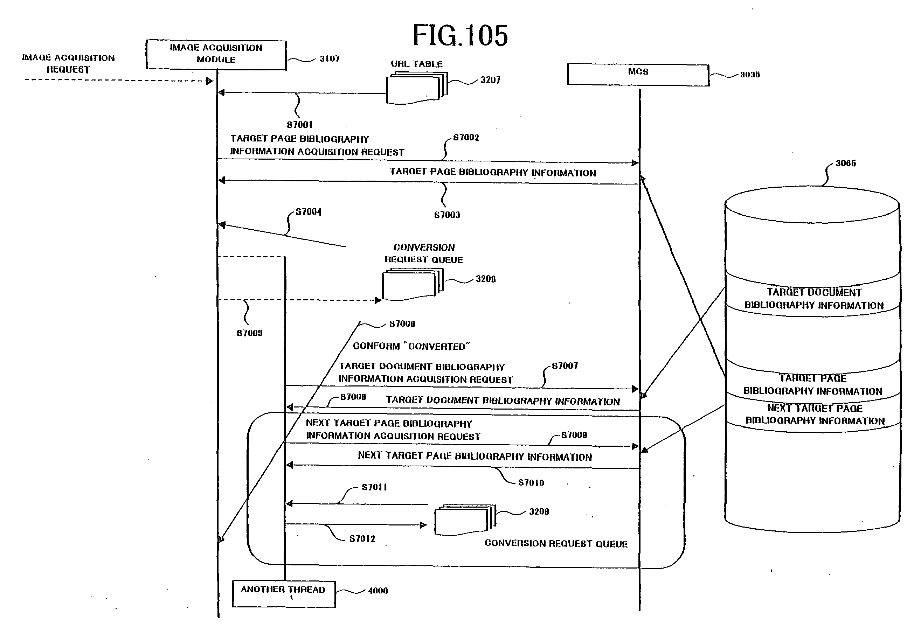

FIG. 105 is a sequence diagram of another exemplary subsequent page conversion request queueing operation according to the fourth embodiment.

In the following, embodiments of the present invention will be described with reference to the accompanying drawings. In the following description of preferred embodiments of the present invention, an image processing apparatus and an image forming apparatus are referred to as a multifunctional product.

A multifunctional product according to a first embodiment of the present invention is described. In the first embodiment, a multifunctional product is designed to convert a format of image data into a client's requested format and provide the converted image to the client.

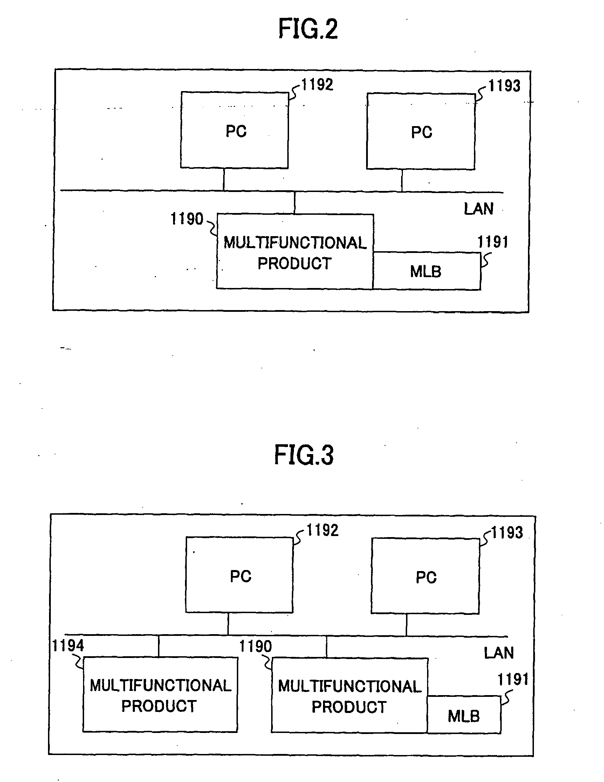

A description is given, with reference to FIG. 2 and FIG. 3, of an exemplary overall system structure including a multifunctional product according to the first embodiment.

FIG. 2 shows an exemplary overall system structure including a multifunctional product according to the first embodiment.

Referring to FIG. 2, a system comprises a multifunctional product 1190 and two personal computers (PCs) 1192 and 1193. The multifunctional product 1190 is connected to PCs 1192 and 1193, which work as clients, via a local area network (LAN). The multifunctional product 1190 includes MLB (Media Link Board) 1191. PCs 1192 and 1193 can acquire image data from the multifunctional product 1190. The multifunctional product 1190 can not only store image data therein but also convert image data and provide the converted image data to PCs 1192 and 1193. MLB 1191, which corresponds to an image data conversion part, is used to convert a format of image data into another format. In the illustration, MLB 1191 is provided at the outer location of the multifunctional product 1190 for explanation. In general, however, MLB 1191 may be incorporated into the multifunctional product 1190 in practical use.

FIG. 3 shows another exemplary overall system structure including multifunctional products according to the first embodiment.

Referring to FIG. 3, a system comprises another multifunctional product 1194 in addition to the system components shown in FIG. 2. In this configuration, the multifunctional product 1190 can convert image data stored in the multifunctional product 194 as well as image data stored in itself, and provide the converted image data to PCs 1192 and 1193.

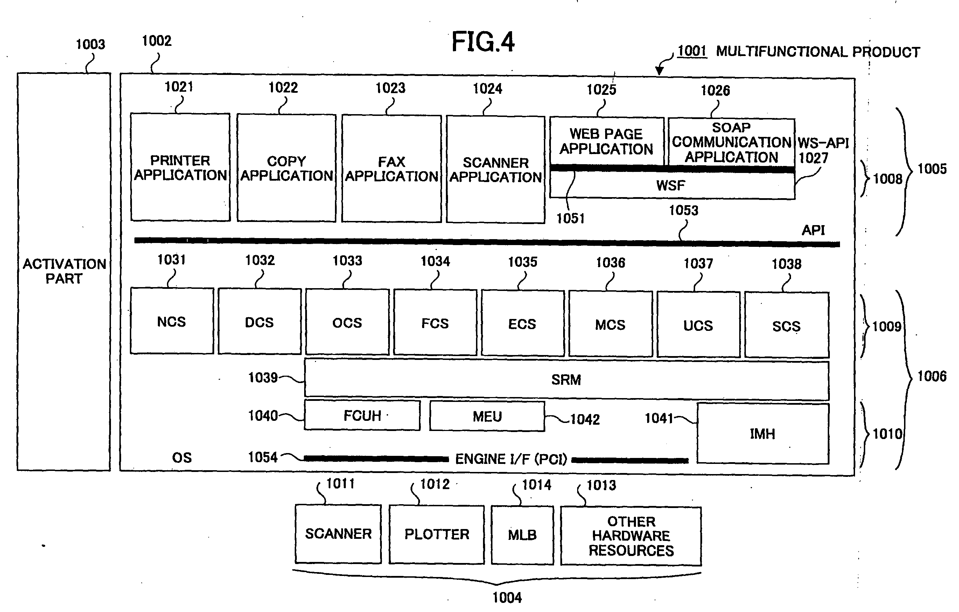

A description is given, with reference to FIG. 4 through FIG. 8, of exemplary structures of a multifunctional product and PC according to the first embodiment.

FIG. 4 shows an exemplary functional structure of a multifunctional product according to the first embodiment.

Referring to FIG. 4, a multifunctional product 1001 comprises a software set 1002, an activation part 1003 and hardware resources 1004.

When the multifunctional product 1001 is powered ON, the activation part 1003 first activates an application layer 1005 and a platform 1006. For example, the activation part 1003 reads one or more programs from a hard disk drive (HDD), transfers the read programs in a memory area, and starts the programs. The hardware resources 1004 comprises a scanner 1011, a plotter 1012, MLB 1014, and other hardware resources 1013 such as a facsimile. As mentioned above, MLB 1014 is a hardware item for converting a format of image data into another format at a high speed. Here, a format means a code type and image size of image data.

As shown in FIG. 4, the software set 1002 comprises the application layer 1005 and the platform 1006, which are driven on an operating system (OS) such as UNIX (registered trademark). The application layer 1005 comprises programs to perform respective processes specifically designed for individual user services related to image formation using a printer, a copier a facsimile, a scanner and so on.

The application layer 1005 comprises a printer application 1021 for a printer, a copy application 1022 for a copier, a FAX application 1023 for a facsimile, a scanner application 1024 for a scanner, a Web page application 1025 for Web pages, a SOAP (Simple Object Access Protocol) communication application 1026 for SOAP communication, and a lapping layer 1008 having a Web service function (WSF) 1027 located below the Web page application 1025 and the SOAP communication application 1026. It is noted that WSF 1027 corresponds to a SOAP message analysis part and a SOAP message creation part.

WSF 1027 comprises an application program interface (API) 1051 that can receive process requests from the Web page application 1025 and the SOAP communication application 1026 by using one or more predefined functions. In response to receipt of a process request from the Web page application 1025 and the SOAP communication application 1026 via API 1051, WSF 1027 interprets the process request and performs a process corresponding to the process request.

The platform 1006 comprises a control service layer 1009, a system resource manager (SRM) 1039 and a handler layer 1010. The control service layer 1009 interprets process requests and issues acquisition requests to acquire the hardware resources 1004. SRM 1039 manages the hardware resources 1004 and arbitrages such acquisition requests from the control service layer 1009. The handler layer 1010 manages the hardware resources 1004 in response to receipt of acquisition requests from SRM 1039.

The control service layer 1009 comprises one or more service modules such as a network control service (NCS) 1031, a delivery control service (DCS) 1032, an operation control service (OCS) 1033, a FAX control service (FCS) 1034, an engine control service (ECS) 1035, a memory control service (MCS) 1036, a user information control service (UCS) 1037 and a system control service (SCS) 1038.

It is noted that the platform 1006 is configured to have API 1053 via which the platform 1006 can receive a process request from the application layer 1005 by using at least one predefined function. OS executes individual software items in the application layer 1005 and the platform 1006 as respective processes in parallel.

NCS 1031, which corresponds to a communication part, provides services available to every application in accordance with the needs of the applications for a network I/O. Specifically, NCS 1031 distributes data, which are received from the network side in accordance with respective protocols, to corresponding applications and mediates data transmission between applications and the network side.

For example, NCS 1031 controls data communication with one or more clients connected via a network in accordance with HTTP (HyperText Transfer Protocol) by using httpd (HyperText Transfer Protocol Daemon).

DCS 1032 controls delivery of documents stored in the multifunctional product 1001. OCS 1033, which corresponds to information communication means between an operator and the body of the multifunctional product 1001, controls an operation panel of the multifunctional product 1001. FCS 1034 provides API to perform FAX transmission and receipt from the application layer 1005 via PSTN (Public Switched Telephone Network) and ISDN (Integrated Services Digital Network), registration/citation of FAX data in/from a backup memory, reading of FAX data, receipt and printing of FAX data and so on.

ECS 1035 controls engine parts of the scanner 1011, the plotter 1012 and the hardware resources 1013. MCS 1036 acquires and releases memory areas, utilizes HDD, controls a memory for compression and decompression of image data. UCS 1037 manages user information.

SCS 1038 performs management of applications, control over the operation panel, displaying of a system screen, displaying of LED (Liquid Crystal Display), management of hardware resources 1004, interrupt control of applications and so on.

SRM 1039 together with SCS 1038 controls an overall system having the multifunctional product 1001 and manages the hardware resources 1004. For example, when receiving from the upper layer an acquisition request to use a hardware item of the hardware resources 1004, such as the plotter 1012 and the scanner 1011, SRM 1039 arbitrages the hardware resources 1004 and controls execution of the hardware resources 1004 corresponding to the acquisition request.

Specifically, SRM 1039 determines whether a requested hardware item of the hardware resources 1004 is currently available, that is, whether the requested hardware item is occupied by another acquisition request. If the requested hardware item is available, SRM 1039 informs the upper layer that the requested hardware item is available. In addition, SRM 1039, in response to receipt of an acquisition request from the upper layer, may schedule each item of the hardware resources 4 and directly fulfill the request content such as paper carrying and image formation using a printer engine, memory reservation and file creation.

The handler layer 1010 comprises a FAX control unit handler (FCUH) 1040, an image memory handler (IMH) 1041 and MEU (Media Edit Unit) 1042. FCUH 1040 manages a FAX control unit (FCU) described in detail later. IMH 1041 allocates memory areas to individual processes and manages the allocated memory areas. By using an engine I/F (PCI) 1054 via which process requests for the hardware resources 1004 can be transmitted based on one or more predefined functions, SRM 1039 and FCUH 1040 issue process requests to the hardware resources 1004. MEU 1042 not only controls MLB 1014 to convert image data formats but also manages convertible image data formats, that is, image data formats that MLB 1014 is capable of converting. Alternatively, MEU 1042 can use software to convert image data formats. It is noted that MEU 1042 corresponds to an image processing part and a detection part.

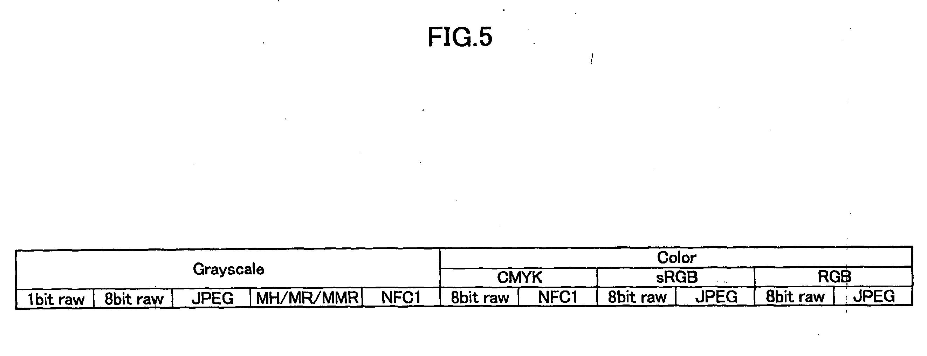

FIG. 5 shows exemplary convertible image data formats handled by MEU 1042 according to the first embodiment.

Referring to FIG. 5, the illustrated table is divided into two sections of "Grayscale" and "Color". Furthermore, the section "Grayscale" includes formats: "1 bit raw", "8 bit raw", "JPEG", "MH/MR/MMR" and "NFC1", as appreciated by those skilled in the art. On the other hand, the section "Color" includes formats: "CMYK", "sRGB" and "RGB", as also appreciated by those skilled in the art. Additionally, the format "CMYK" includes formats: "8 bit raw" and "NFC1". Also, each of the formats "sRGB" and "RGB" includes formats: "8 bit raw" and "JPEG". Although it will be understood that the above formats are well-known by those skilled in the art, it is noted that "NFC1" is a type of compression format for the purpose of reference. In addition, MEU 1042 can not only convert the above image data formats but also scale the size of image data.

As mentioned above, the multifunctional product 1001 can use the platform 1006 to collectively perform processes that each application needs.

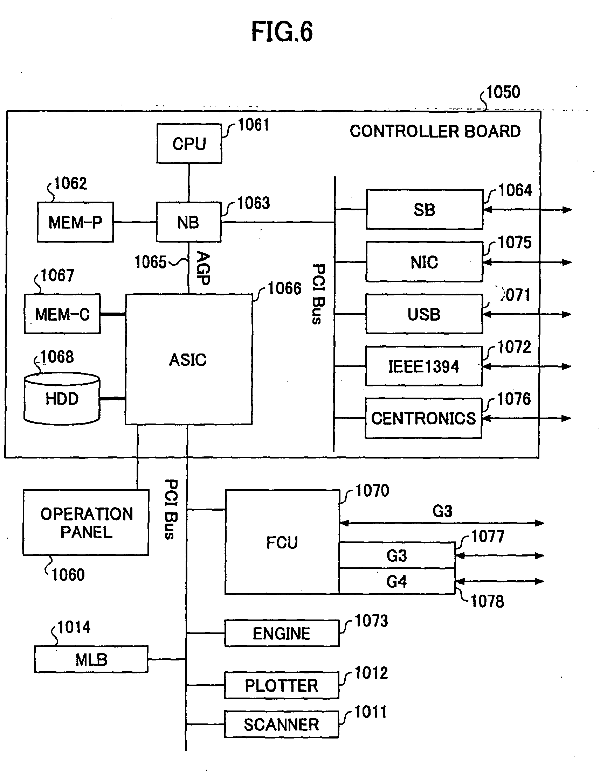

FIG. 6 shows an exemplary hardware configuration of the multifunctional product 1001 according to the first embodiment.

Referring to FIG. 6, the multifunctional product 1001 comprises a controller board 1050, an operation panel 1060, FCU 1070, an engine 1073, a plotter 1012, a scanner 1011 and MLB 1014. Furthermore, FCU 1070 comprises a G3 standard unit 1077 and a G4 standard unit 1078.

The controller board 1050 comprises CPU (Central Processing Unit) 1061, ASIC (Application Specific Integrated Circuit) 1066, HDD 1068, a local memory (MEM-C) 1067, a system memory (MEM-P) 1062, a north bridge (NB) 1063, a south bridge (SB) 1064, NIC (Network Interface Card) 1075, a USB (Universal Serial Bus) device 1071, an IEEE1394 device 1072 and a centronics device 1076.

The operation panel 1060 is connected to ASIC 1066 of the controller board 1050. SB 1064, NIC 1075, the USB device 1071, the IEEE1394 device 1072 and the centronics device 1076 are connected to NB 1063 via a PCI (Peripheral Component Interconnect) bus. Also, FCU 1070, the engine 1073, the scanner 1011 and the plotter 1012 are connected to ASIC 1066 of the controller board 1050 via a PCI bus.

In the controller board 1050, ASIC 1066 is connected not only to MEM-C 1067, HDD 1068 and other components but also to CPU 1061 via NB 1063 of the CPU chip set. If ASIC 1066 is connected to CPU 1061 via NB 1063, it is possible to address a case where the interface of CPU 1061 is not disclosed.

It is noted that ASIC 1066 is connected to NB 1063 via AGP (Accelerated Graphics Port) 1065 instead of a PCI bus. In order to control execution of at least one process of the application layer 1005 and the platform layer 1006, ASIC 1066 is connected to NB 1062 via high transmission speed AGP 1067 rather than the low transmission speed PCI bus. As a result, it is possible to prevent performance reduction of the multifunctional product 1001.

CPU 1061 is responsible to exercise overall control over the multifunctional product 1001. CPU 1061 starts and executes NCS 1031, DCS 1032, OCS 1033, FCS 1034, ECS 1035, MCS 1036, UCS 1037, SCS 1038, SRM 1039, FCUH 1040 and IMH 1041 as respective processes on OS. At the same time, CPU 1061 starts and executes the printer application 1021, the copy application 1022, the FAX application 1023 and the scanner application 1024 of the application layer 1005.

NB 1063 is a bridge to connect among CPU 1061, MEM-P 1062, SB 1064 and ASIC 1066. MEM-P 1062 is used as a image drawing memory. SB 1064 is a bridge to connect NB 1063 to ROM (Read Only Memory), a PCI bus and peripheral devices (not illustrated). MEM-C 1067 is used as a copying image buffer and a code buffer.

ASIC 1066 is a hardware item for image processing and is formed as an IC (Integrated Circuit) dedicated to image processing. HDD 1068 is used as a storage device for storing image data, document data, programs, font data and data forms. The operation panel 1060 serves as an operation part to accept user's input manipulation and display information to users.

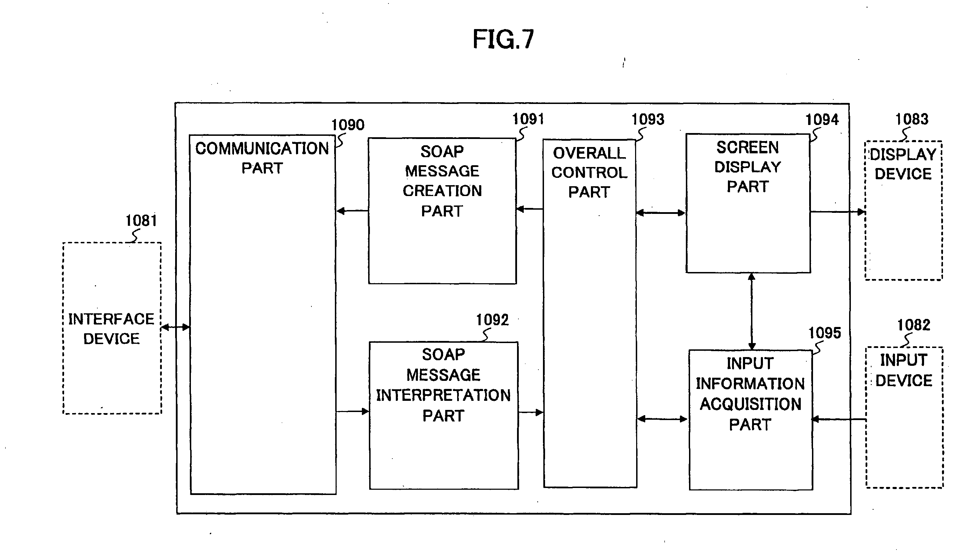

FIG. 7 is a block diagram illustrating exemplary software blocks of each of PCs 1192 and 1193 in a system according to the first embodiment.

Referring to FIG. 7, each of PCs 1192 and 1193 comprises a communication part 1090, a SOAP message creation part 1091, a SOAP message interpretation part 1092, an overall control part 1093, a screen display part 1094 and an input information acquisition part 1095.

The communication part 1090 transmits SOAP messages to LAN (not illustrated) via an interface device 1081 and receives SOAP messages from LAN.

The SOAP message creation part 1091 creates XML documents in accordance with message descriptive language XML (eXtensible Markup Language). The SOAP message interpretation part 1092 interprets contents of messages. The overall control part 1093 controls the SOAP message creation part 1091, the SOAP message interpretation part 1092, the screen display part 1094 and the input information acquisition part 1095. The screen display part 1094 displays information on a display device 1083. The input information acquisition part 1095 acquires information from an input device 1082 such as a keyboard, a mouse and the like.

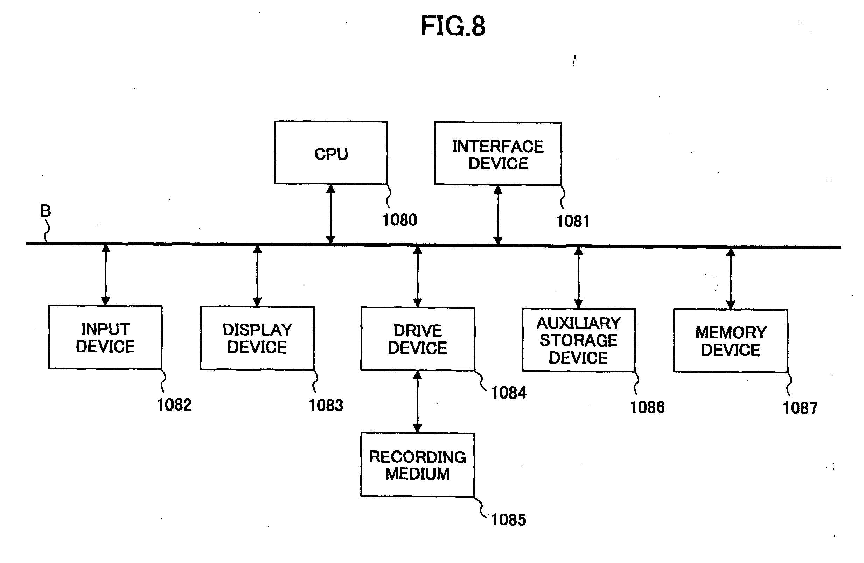

FIG. 8 shows an exemplary hardware configuration of a computer system of each of PCs 1192 and 1193 in a system according to the first embodiment.

Referring to FIG. 8, a computer system comprises CPU 1080, an interface device 1081, an input device 1082, a display device 1083, a drive device 1084, a recording medium 1085, an auxiliary memory device 1086 and a memory device 1087.

The input device 1082, which is implemented as a keyboard and a mouse, is used to supply operation signals to the computer system. The display device 1083 displays windows and data for operating PC. The interface device 1081, which is composed of NIC, a modem, USB and the like, is used as an interface to connect the computer system to a network and a client.

One or more programs to operate the computer system may be provided via the recording medium 1085 such as CD-ROM (Compact Disk-Read Only Memory) or downloaded via a network. When the recording medium 1085 is set in the drive device 1084, data and programs are installed from the recording medium 1085 to the auxiliary memory device 1086 via the drive device 1084.

The auxiliary memory device 1086 stores necessary files as well as data and programs therein. The memory device 1087, in response to activation of the computer system, reads programs from the auxiliary memory device 1086 and stores the read programs therein. CPU 1080 performs processes in accordance with programs in the memory device 1087.

A description is given, with reference to FIG. 8 through FIG. 9, of a user interface with PCs 1192 and 1193.

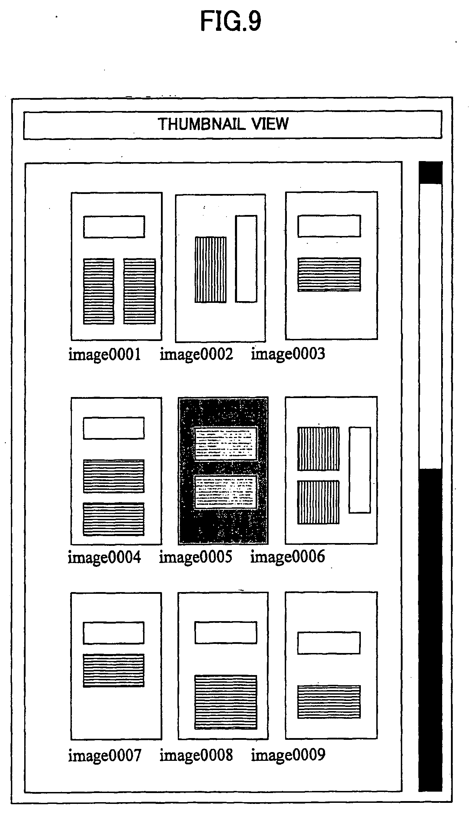

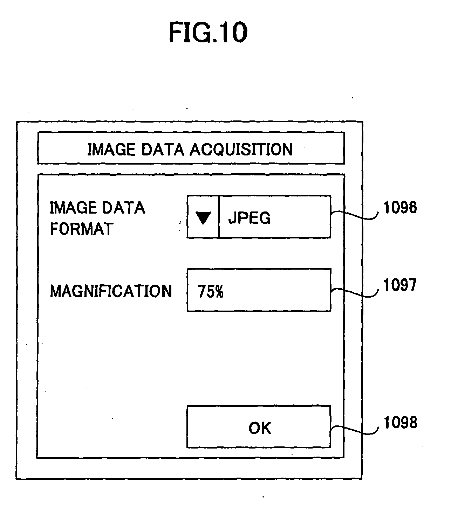

FIG. 9 shows an exemplary thumbnail view illustrating thumbnails of image data displayed on PC. FIG. 10 shows an exemplary image data acquisition screen displayed on PC. In the illustrated thumbnail view, thumbnails of image data stored in multifunctional product 1190 or 1194 in FIG. 3 are displayed.

As shown in FIG. 9, for example, when the image data "image0005" is selected from the displayed several thumbnails, an image data acquisition screen as illustrated in FIG. 10 is displayed.

Referring to FIG. 10, the illustrated image data acquisition screen includes an image data format field 1096, a magnification field 1097 and an OK button 1098. In the image data format field 1096, a user determines the format (JPEG) of image data by selecting a desired format in a pull-down menu. In the magnification field 1097, a user inputs a scaling ratio (75%) of the image data in unit of scaling percentage. After the user confirms input contents in the image data format field 1096 and the magnification field 1097, the user pushes the OK button 1098. This input format is used as image conversion parameters supplied to the multifunctional product 1190 or 1194.

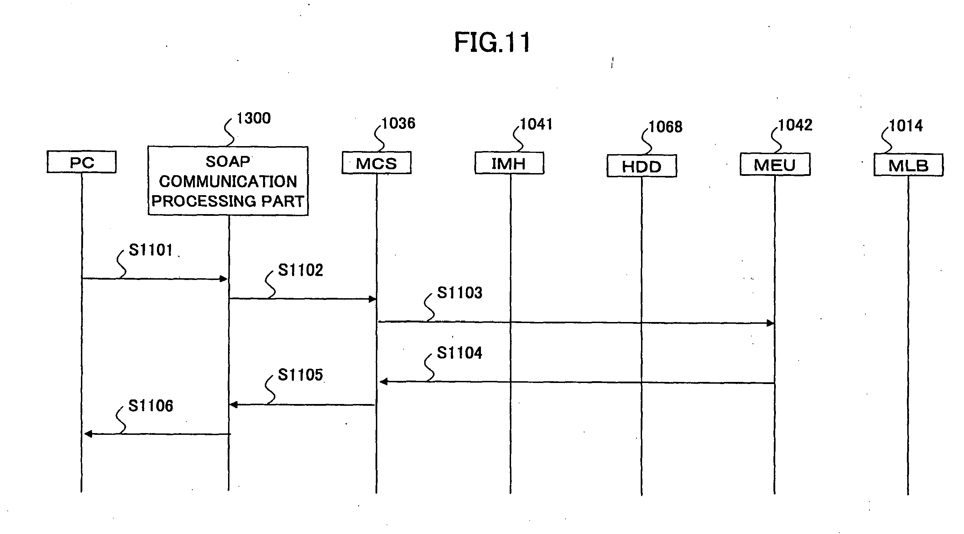

A description is given, with reference to FIG. 11 through FIG. 13, of a MLB availability check operation according to the first embodiment.

FIG. 11 is a sequence diagram of an exemplary MLB availability check operation according to the first embodiment. In the illustrated operation, PC checks whether a multifunctional product 1001 includes MLB 1014. In the illustrated sequence diagram, NCS 1031, the SOAP communication application 1026 and WSF 1027 are collectively referred to as a SOAP communication processing part 1300. It is noted that the SOAP communication processing part 1300 corresponds to a convertible format transmission part and a converted image data transmission part.

Referring to FIG. 11, PC sends a MLB availability information acquisition request, which is to request information indicating whether MLB is available, to the multifunctional product 1001 at step S1101. At step S1102, in response to receipt of the MLB availability information acquisition request, the SOAP communication processing part 1300 of the multifunctional product 1001 interprets contents of the received MLB availability acquisition information request, and sends the MLB availability information acquisition request to MCS 1036. At step S1103, MCS 1036, in turn, sends the MLB availability acquisition request to MEU 1042.

At step S1104, MEU 1042 sends MLB availability information to MCS 1036 based on MLB related information in a register. At step S1105, MCS 1036 sends the MLB availability information to the SOAP communication processing part 1300. At step S1106, the SOAP communication processing part 1300 sends the MLB availability information in accordance with SOAP to PC as a MLB availability information acquisition response.

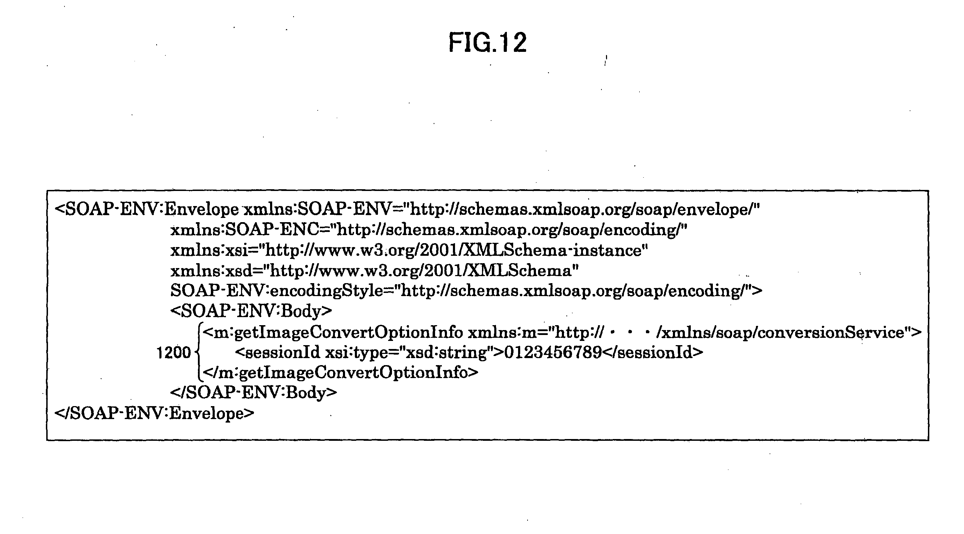

FIG. 12 shows exemplary contents of the MLB availability information acquisition request transmitted from PC to the multifunctional product 1001 at step S1101. The MLB availability information acquisition request is described in XML.

Referring to FIG. 12, a document portion 1200 enclosed with tags "m:getImageCovertOptionInfo" and "/m:getImageCovertOptionInfo" is for checking the availability of MLB 1014.

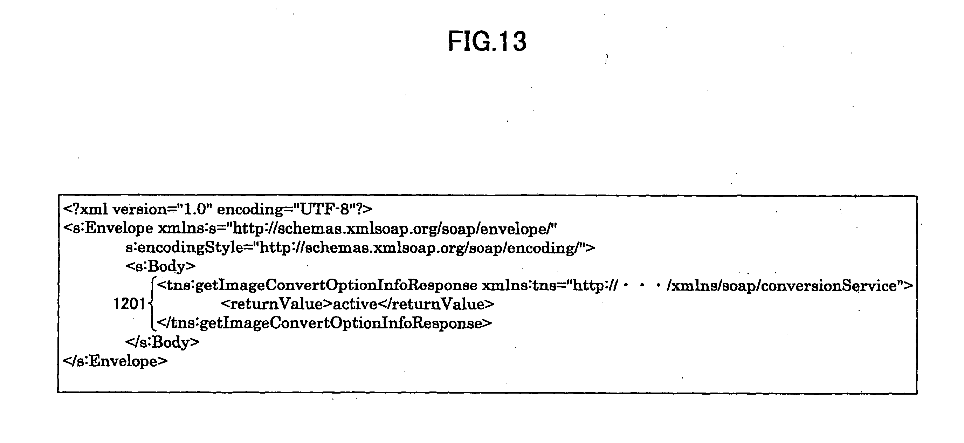

FIG. 13 shows exemplary contents of the MLB availability information acquisition response transmitted from the multifunctional product to PC at step S1106.

Referring to FIG. 13, a document portion 1201 enclosed with tags "tns:getImageConvertOptionInfoResponse" and "/tns:getImageConvertOptionInfoResponse" is for indicating whether MLB 1014 is available. In the illustrated example, "active" enclosed with tags "returnValue" and "/returnValue" in the document portion 1201 indicates that the multifunctional product 1001 includes MLB 1014.

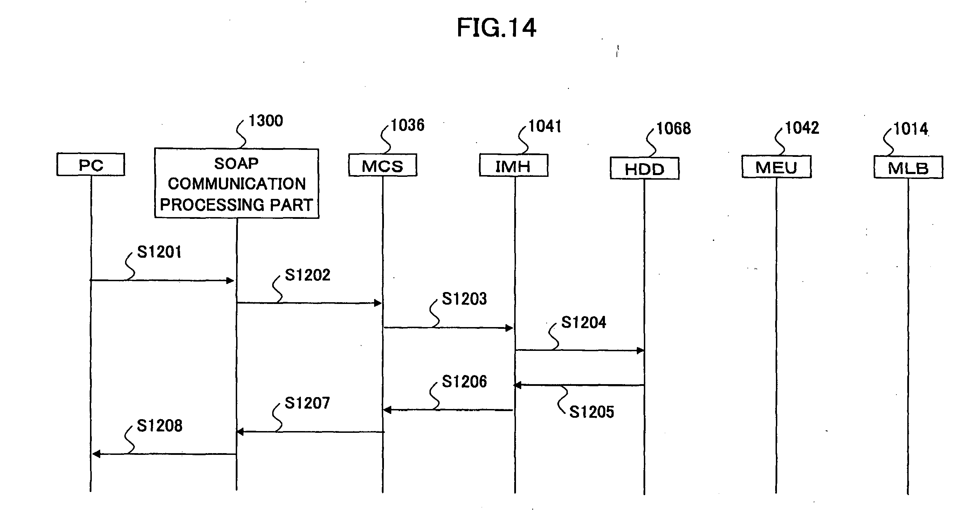

A description is given, with reference to FIG. 14 through FIG. 16, of an image data acquisition operation according to the first embodiment.

FIG. 14 is a sequence diagram of an exemplary image data acquisition operation in the case where it is determined that MLB 1014 is not available based on the above-mentioned MLB availability information.

Referring to FIG. 14, PC sends to the multifunctional product 1001 an image data acquisition request in which desired image data are designated at step S1201. At step S1202, the SOAP communication processing part 1300 interprets contents of the received image data acquisition request, and sends the image data acquisition request to MCS 1036. In response to receipt of the image data acquisition request, MCS 1036 searches stored page information, which is information on image data stored in the multifunctional product 1001, for information on the designated image data, and identifies the size of the image data. At step S1203, MCS 1036 sends the image data information on the designated image data and the identified image data size to IMH 1041.

At steps S1204 and S1205, IMH 1041 reserves a memory area for the image data and reads the image data from HDD 1068. At step S1206, IMH 1041 informs MCS 1036 that the image data have been read. At step S1207, MCS 1036, in turn, informs the SOAP communication processing part 1300 that the image data have been read. At step S1208, the SOAP communication processing part 1300 sends the image data to PC.

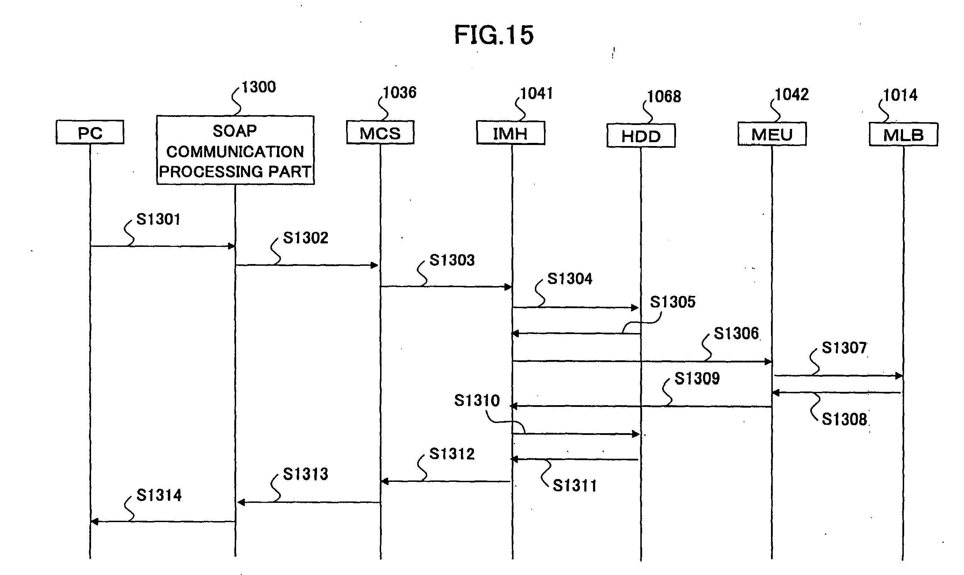

FIG. 15 is a sequence diagram of an exemplary image data acquisition operation in the case where it is determined that MLB 1014 is available based on the above-mentioned MLB availability information.

Referring to FIG. 15, PC sends an image data acquisition request, together with a parameter indicative of a conversion type, to the SOAP communication processing part 1300 at step S1301. At step S1302, the SOAP communication processing part 1300 interprets the received image data acquisition request, and sends the image data acquisition request to MCS 1036.

In response to receipt of the image data acquisition request, MCS 1036 searches stored page information for information on the designated image data, and identifies the size of the image data. At step S1303, MCS 1036 sends the image data information on the designated image data and the identified image data size to IMH 1041.

At steps S1304 and S1305, IMH 1041 reserves a memory area for the image data, and reads the image data from HDD 1068. At step S1306, IMH 1041 sends an image data conversion request to MEU 1042. At step S1307, MEU 1042 instructs MLB 1014 to convert the image data. At step S1308, after completion of the conversion of the image data, MLB 1014 informs MEU 1042 that the conversion has been completed.

At step S1309, MEU 1042, in turn, informs IMH 1041 that the conversion has been completed. At steps S1310 and S1311, IMH 1041 stores the converted image data in HDD 1068. At step S1312, after completion of the storage, IMH 1041 informs MCS 1036 that the image data has been converted. At step S1313, MCS 1036, in turn, informs the SOAP communication processing part 1300 that the image data has been converted. At step S1314, the SOAP communication processing part 1300 sends the converted image data to PC.

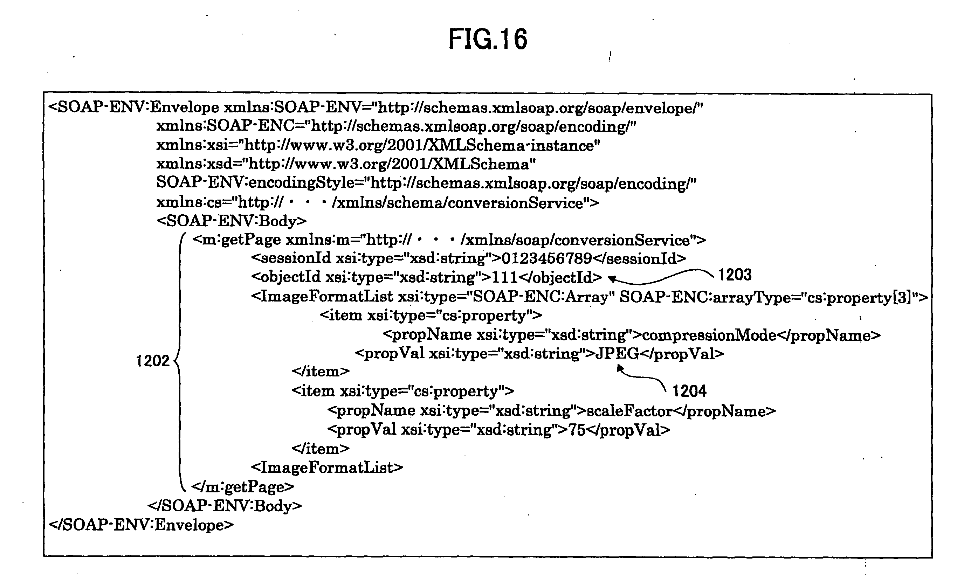

FIG. 16 shows exemplary contents of the image data acquisition request transmitted from PC to the multifunctional product 1001 at step S1301. The image data acquisition request is described in XML.

Referring to FIG. 16, a document portion 1202 enclosed with tags "m:getPage" and "/m:getPage" is for indicating contents of the image data acquisition request. In document portions 1203 and 1204 of the document portion 1202, the file number "111" of the image data and the format "JPEG" are designated, respectively.

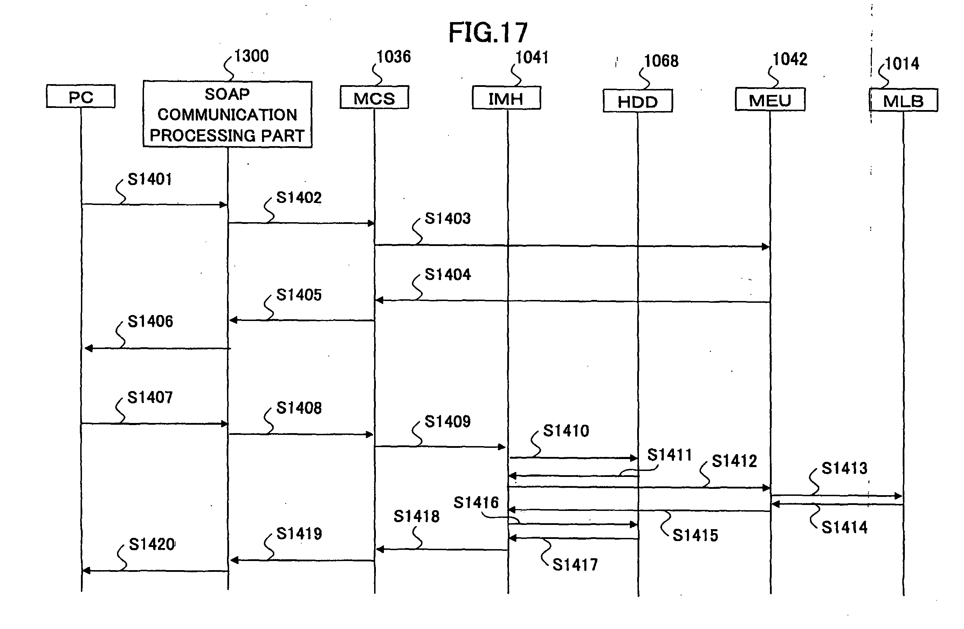

A description is given, with reference to FIG. 17 through FIG. 23, of another exemplary image data acquisition operation according to the first embodiment.

In this image data acquisition operation, after PC receives a collection of one or more image data formats that the multifunctional product 1001 can convert, PC can acquire from the multifunctional product 1001 desired image data in the form of a possible image data format with reference to the received collection.

FIG. 17 is a sequence diagram of an exemplary image data acquisition operation according to the first embodiment. In the illustrated image data acquisition operation, PC can acquire desired image data in the form of a possible image data format from the multifunctional product 1001 with reference to received convertible image data formats.

Referring to FIG. 17, PC sends a MLB availability information acquisition request to the multifunctional product 1001 at step S1401. Here, a convertible image data format request is attached to the MLB availability information acquisition request.

At step S1402, the SOAP communication processing part 1300 interprets contents of the MLB availability information acquisition request, and sends the MLB availability information acquisition request to MCS 1036. At step S1403, MCS 1036, in turn, sends the MLB availability information acquisition request to MEU 1042.

At step S1404, MEU 1042 detects MLB availability information, and identifies one or more convertible image data formats based on information on MLB 1014 in a register. Then, MEU 1042 sends the MLB availability information and the convertible image data formats to MCS 1036. At step S1405, MCS 1036, in turn, sends the MLB availability information and the convertible image data formats to the SOAP communication processing part 1300. At step S1406, the SOAP communication processing part 1300 sends the MLB availability information and the convertible image data formats in accordance with SOAP to PC.

Subsequent steps S1407 through S1420 are similar to steps S1301 through S1314 in FIG. 15, and the description thereof is omitted.

In this operation, PC issues the MLB availability information acquisition request together with the convertible image data format request. Alternatively, the multifunctional product 1001 may voluntarily send convertible image data formats in response to receipt of MLB availability information acquisition request from PC.

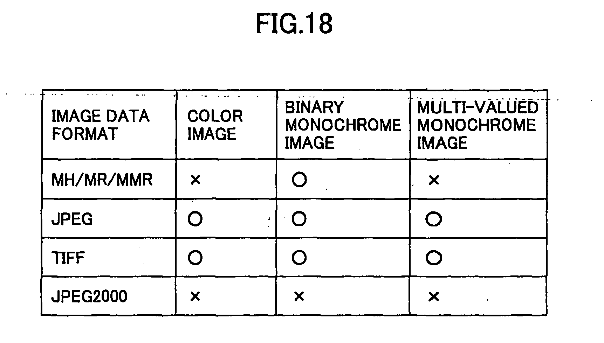

FIG. 18 shows an exemplary table of convertible image data formats according to the first embodiment.

Referring to FIG. 18, the illustrated table is configured from rows indicative of image data formats and columns indicative of image data types. In the table, if the image data type in a column can be converted into the image data format in a row, the element corresponding to the row and the column has ○. On the other hand, if the image data type in a column cannot be converted into the image data format in a row, the element corresponding to the row and the column has ×.

In the illustrated table, for example, a binary monochrome image can be converted into JPEG. Also, it is observed that no image data type can be converted into JPEG2000. The reason is why MLB 1014 does not include an optional hardware item to convert image data into JPEG2000.

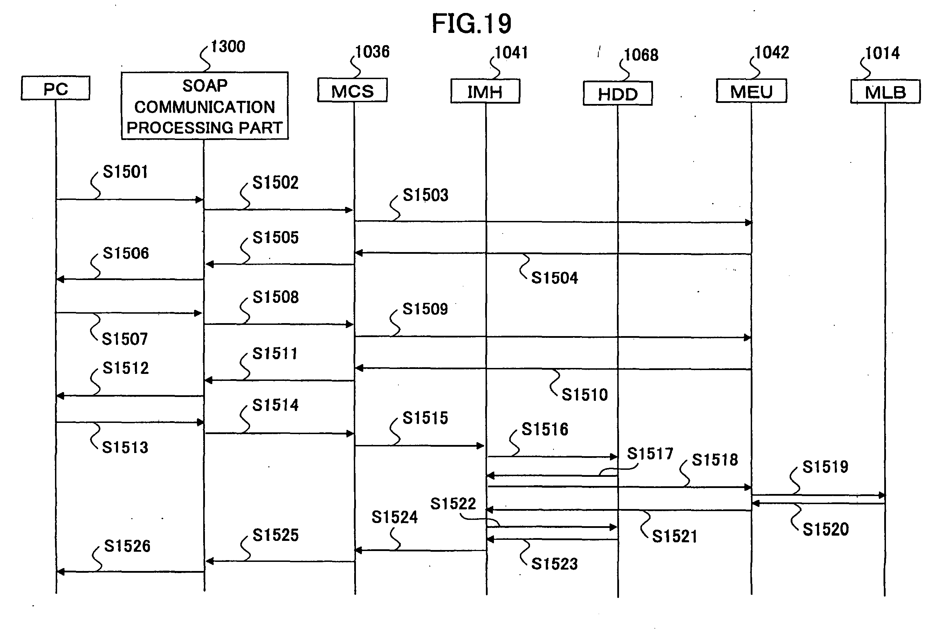

FIG. 19 is a sequence diagram of another exemplary image data acquisition operation according to the first embodiment.

This embodiment differs from the above-mentioned image data acquisition operation in FIG. 17 in that PC acquires a collection of image data formats into which the multifunctional product 1001 can convert certain image data designated by a user. In the illustrated sequence diagram, steps S1501 through S1506 are similar to steps S1101 through S1106 in FIG. 11, respectively, and steps S1513 through S1526 are similar to steps S1301 through S1314, respectively. Accordingly, the description thereof is omitted.

Referring to FIG. 19, PC sends to the multifunctional product 1001 a convertible format request to acquire one or more image data formats into which the multifunctional product 1001 can convert designated certain image data at step S1507.

At step S1508, the SOAP communication processing part 1300 interprets the convertible format request and sends the convertible format request to MCS 1036. In response to receipt of the convertible format request, MCS 1036 searches the above-mentioned page information for information on the designated image data, and identifies the image data type of the designated image data. At step S1509, MCS 1036 sends the convertible format request to MEU 1042 so as to acquire one or more image data formats into which the image data type of the designated image data can be converted.

At step S1510, MEU 1042 sends to MCS 1036 a collection of one or more convertible image data formats based on information on MLB 1014 in a register. At step S1511, MCS 1036 sends the convertible image data formats to the SOAP communication processing part 1300. At step S1512, the SOAP communication processing part 1300 sends the convertible image data formats in accordance with SOAP as a convertible format response to PC.

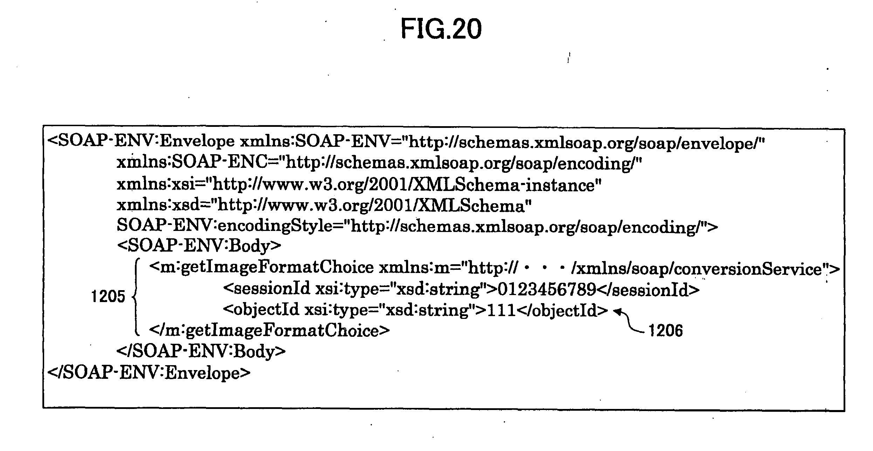

FIG. 20 shows exemplary contents of the convertible format request transmitted from PC to the multifunctional product 1001 at step S1507. The convertible format request is described in XML.

Referring to FIG. 20, a document portion 1205 enclosed with tags "m:getImageFormatChoice" and "/m:getImageFormatChoice" represents contents of the convertible format request for the image data corresponding to the file name "111" in the document portion 1206.

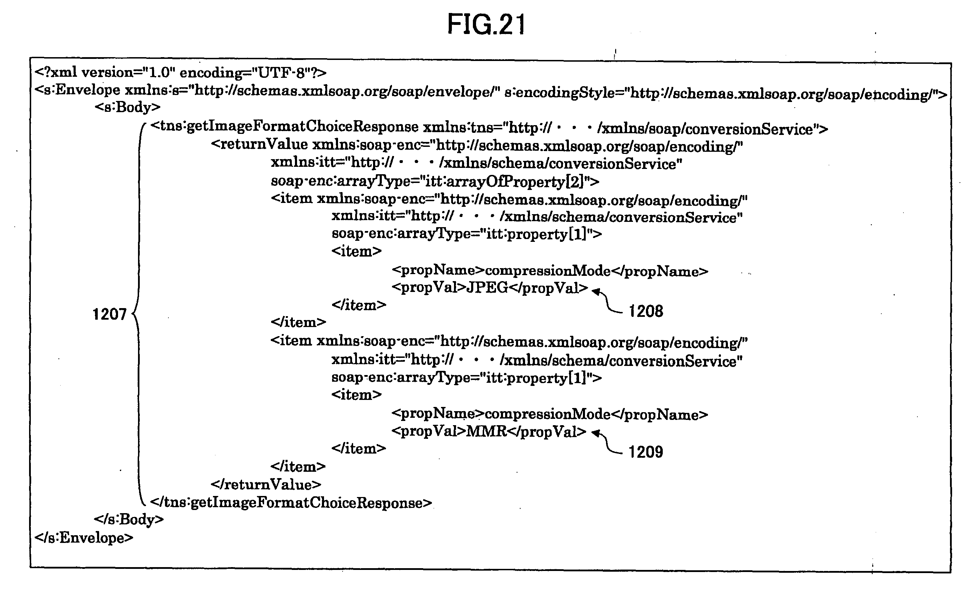

FIG. 21 shows exemplary contents of the convertible format response transmitted from the multifunctional product to PC at step S1512.

Referring to FIG. 21, a document portion 1207 enclosed with tags "tns:getImageFormatChoiceResponse" and "/tns:getImageFormatChoiceResponse" represents contents of the availability of MLB. In the illustration, a document portion 1208 enclosed with tags "returnValue" and "/returnValue" represents that the designated image data can be converted into "JPEG". Similarly, a document portion 1209 represents that the designated image data can be converted into "MMR".

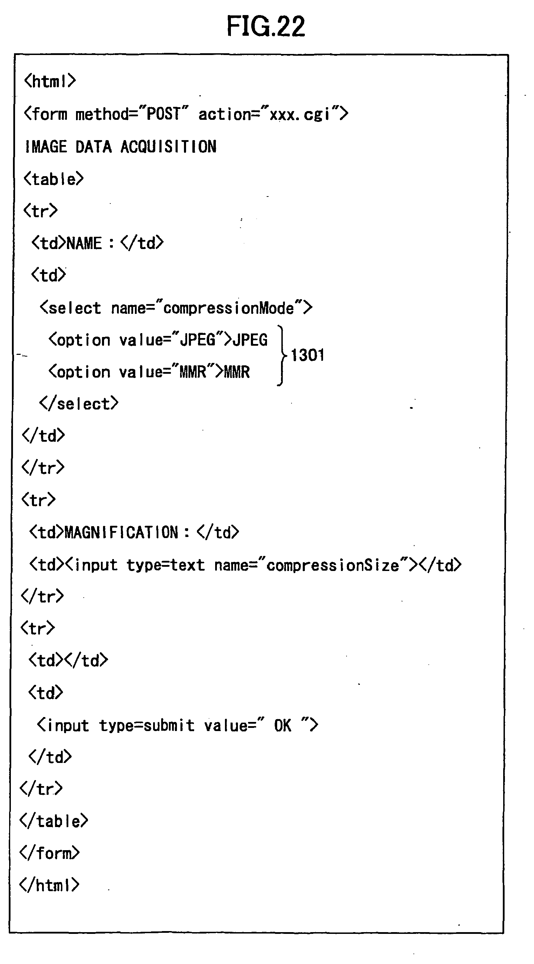

FIG. 22 shows exemplary contents of an HTML document corresponding to the convertible format response shown in FIG. 21.

Referring to FIG. 22, a document portion 1301 represents that the designated image data can be converted into JPEG and MMR.

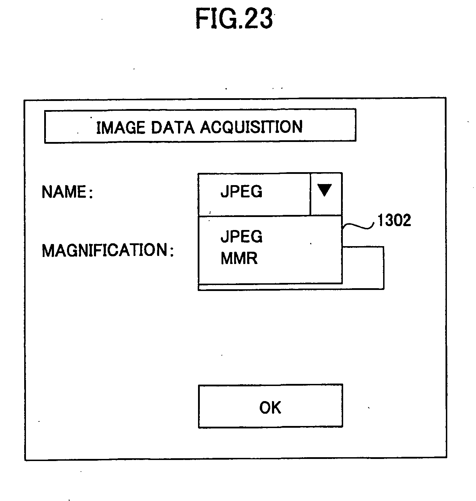

FIG. 23 shows exemplary contents of the HTML document shown in FIG. 22 displayed on an HTML browser.

Referring to FIG. 23, a user can select JPEG or MMR as a possible format of the designated image data by manipulating a displayed pull-down menu 1302.

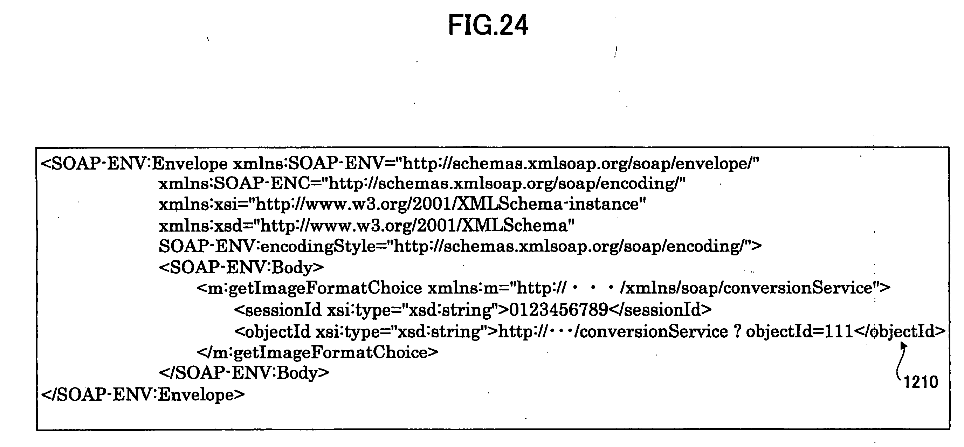

A description is given, with reference to FIG. 24 through FIG. 26, of another exemplary image data acquisition operation according to the first embodiment.

As mentioned above with respect to FIG. 3, a system according to the first embodiment allows the multifunctional product 1190 to convert image data stored in the multifunctional product 1194.

FIG. 24 shows exemplary contents of a convertible format request transmitted in the case where the multifunctional product 1190 converts image data in the multifunctional product 1194.

Referring to FIG. 24, a document portion 1210 for specifying a desired file name is provided as URL to identify the file name "111" of the image data stored in the multifunctional product 1194, although simply provided as the file name rather than URL in FIG. 20.

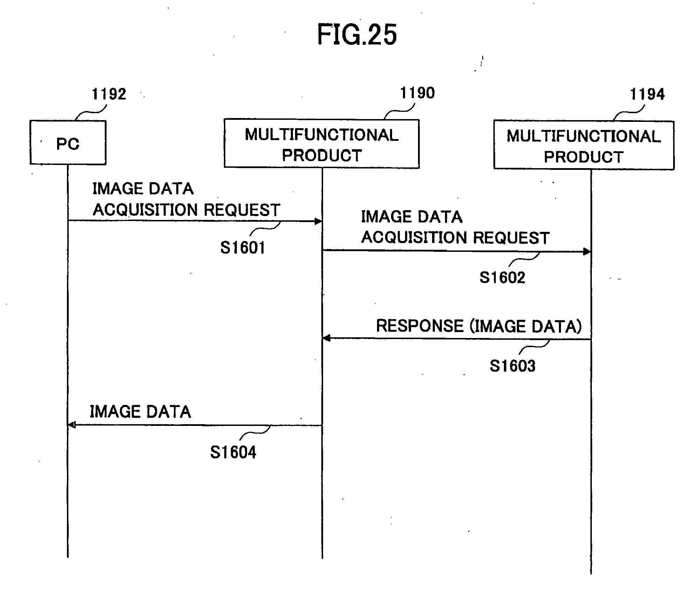

FIG. 25 is a sequence diagram of another exemplary image data acquisition operation in the case where the multifunctional product 1190, in response to receipt of an image data format conversion request from PC 1192, converts image data stored in the multifunctional product 1194.

Referring to FIG. 25, PC 1192 sends an image data acquisition request together with image data to the multifunctional product 1190 at step S1601. At step S1602, the multifunctional product 1190 sends the image data acquisition request together with image data to the multifunctional product 1194. At step S1603, in response to receipt of the image data, the multifunctional product 1194 converts the received image data and sends the converted image data back to the multifunctional product 1190. At step S1604, the multifunctional product 1190 sends the converted image data to PC 1192.

It is noted that the multifunctional products 1190 and 1194 communicate with each other by using the SOAP communication applications thereof.

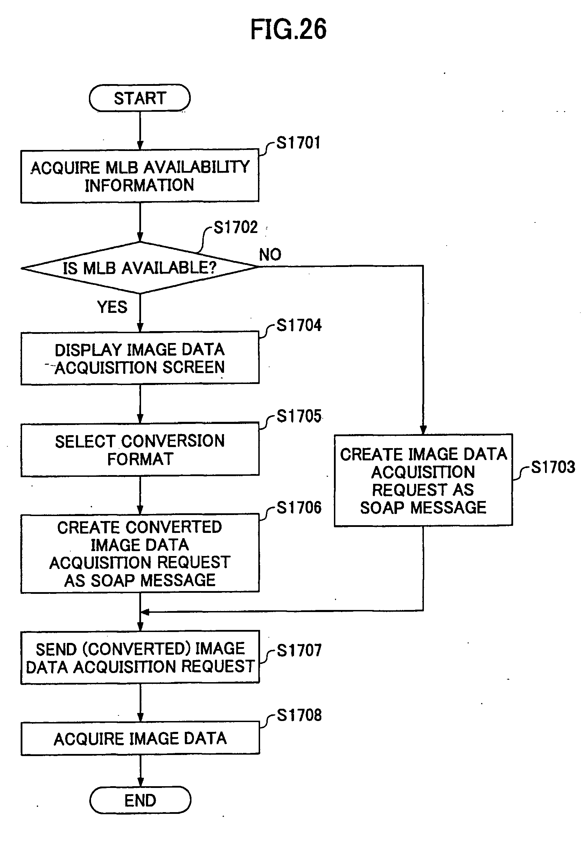

FIG. 26 is a flowchart of an exemplary operation of PC 1192 in the image data acquisition operation in FIG. 25. The illustrated operation starts with a status where thumbnails of image data are displayed (see FIG. 9).

Referring to FIG. 26, PC 1192 acquires MLB available information at step S1701. At step S1702, it is determined whether MLB is available based on the acquired MLB availability information. If MLB is not available, PC 1192 sends an image data acquisition request as a SOAP message to the multifunctional product 1900 at step S1703. On the other hand, if MLB is available, an image data acquisition screen as illustrated in FIG. 10 is displayed on PC 1192 at step S1704. At step S1705, a user selects a desired format with reference to the displayed image data acquisition screen, and the selected format is supplied to PC 1192. At step S1706, PC 1192 creates an image data acquisition request based on the selected format as a SOAP message.

At step S1707, PC 1192 sends the created image data acquisition request to the multifunctional product 1190 at step S1707. At step S1708, PC 1192 acquires the designated image data from the multifunctional product 1190. It is noted that steps S1705 and S1708 correspond to a format acquisition step and an image data acquisition step, respectively.

The above-mentioned image data acquisition operations can be implemented by one or more programs. Such programs can be stored in recording media such as HDD 1068 of the multifunctional product 1001.

According to the first embodiment, it is possible to an image forming apparatus and an image data providing method that can convert a format of image data into a client's requested format and provide the converted image data to the client.

A multifunctional product according to a second embodiment of the present invention is described.

In the second embodiment, a multifunctional product can provide extended bibliography information, which is for designating a manner of processing a document (image data) in the multifunctional product, to a client connected thereto via a network. In addition, the multifunctional product can overwrite extended bibliography information modified by a client, and manage an extended bibliography information set on a single document having a plurality of pages.

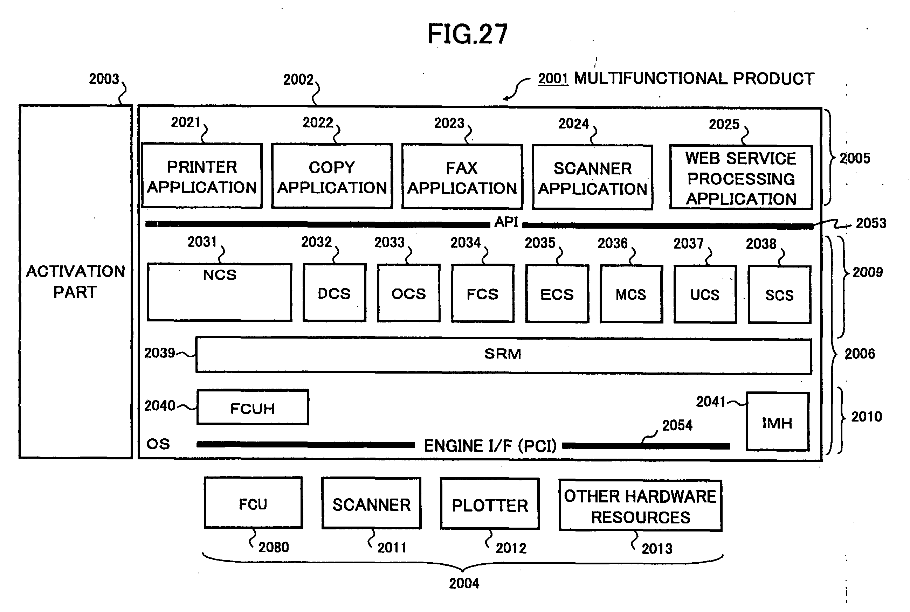

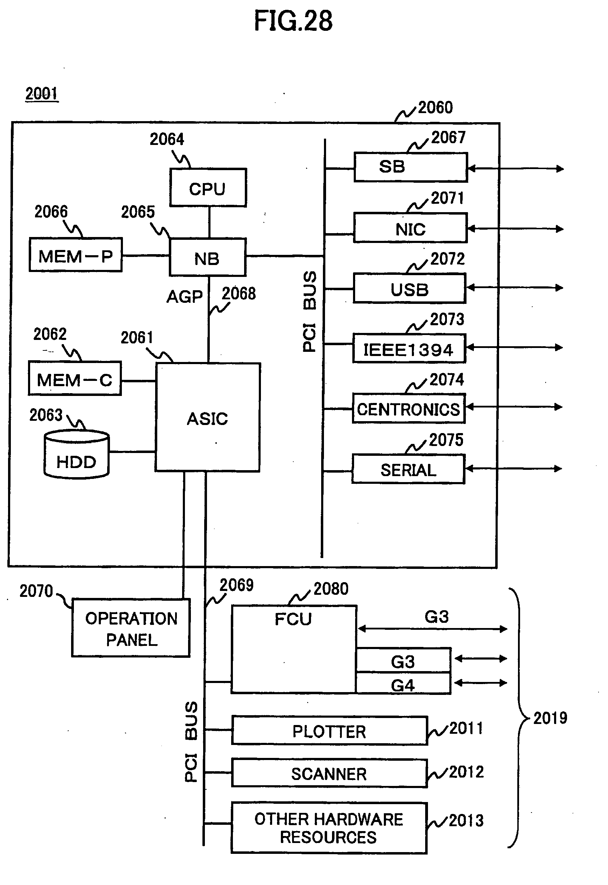

A description is given, with reference to FIG. 27 and FIG. 28, of an exemplary structure of a multifunctional product according to the second embodiment.

FIG. 27 shows an exemplary functional structure of a multifunctional product 2001 according to the second embodiment.

As observed from FIG. 27, the multifunctional product 2001 has an almost same functional structure as the multifunctional product 1001, and the description of the same components is omitted.

Referring to FIG. 27, the multifunctional product 2001 includes Web service processing application 2025 in an application layer 2005. The Web service processing application 2025 causes at least one Web service function (WSF) to perform a process designated in an HTTP request, which follows HTTP (HyperText Transfer Protocol), and sets the process result in an HTTP response to provide a Web service. It is noted that the Web service processing application 2025 correspond to an extended bibliography information providing part, an extended bibliography information storage part, a document identification information providing part, a document registration part and a document list providing part.

FIG. 28 is a block diagram illustrating an exemplary hardware configuration of the multifunctional product 2001 according to the second embodiment.

As observed from FIG. 28, the multifunctional product 2001 has the same hardware configuration with respect to main components as the multifunctional product 1001, and the description thereof is omitted.

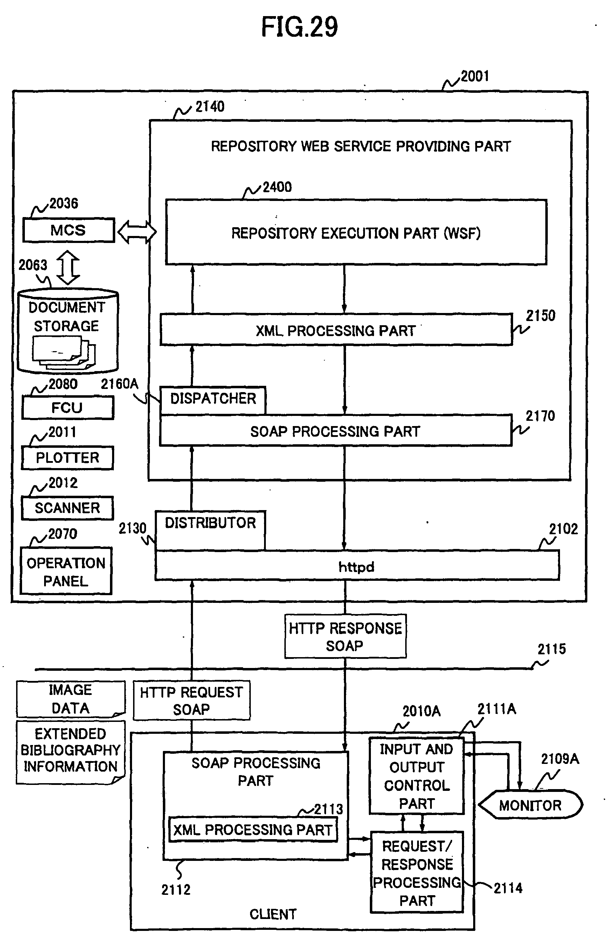

A description is given, with reference to FIG. 29, of an exemplary structure of a multifunctional product providing a repository Web service to acquire and rewrite extended bibliography information, in which a process manner is designated, according to the second embodiment.

Here, a Web service means that the multifunctional product 2001, in response to receipt of a service request as an HTTP request from a client, performs a process corresponding to the service request and provides the process result to the client as an HTTP response.

In particular, a repository Web service is defined as a Web service to store documents (image data) in HDD 2063, manage the documents and bibliography information thereof, and acquire and change extended bibliography information. Based upon bibliography information including extended bibliography information, a document (image data) is formed and output in a predetermined medium.

FIG. 29 is a block diagram illustrating a first functional structure of the multifunctional product 2001 providing a repository Web service. In FIG. 29, main components of the multifunctional product 2001 to implement a repository Web service are illustrated, and the other components are omitted.

Referring to FIG. 29, the multifunctional product 2001 comprises a repository Web service providing part 2140 to provide a repository Web service, httpd (HeperText Transfer Protocol Daemon) 2102 to control communication in accordance with HTTP, a distributor 2130 to distribute processes to the Web service providing part 2140 corresponding to HTTP requests, MCS 2036, FCU 2080, a plotter 2012, a scanner 2012, HDD 2063 and an operation panel 2070.

The repository Web service providing part 2140 is placed within the Web service processing application 2025 shown in FIG. 27, and comprises a repository execution part 2400, a SOAP processing part 2170, a dispatcher 2160A and an XML processing part 2150. The repository execution part 2400, which serves as a Web service function (WSF), stores documents and image data in HDD 2063. The SOAP processing part 2170 processes HTTP requests and HTTP responses in accordance with SOAP. The dispatcher 2160A provides Web service processes, which are represented as HTTP requests, to the repository execution part 2400. The XML processing part 2150 processes XML data having process contents requested in HTTP requests, and describes XML process results received from the repository execution part 2400 as HTTP responses.

A client 2010A comprises an input and output control part 2111A, a SOAP processing part 2112 and a request/response processing part 2114. The input and output control part 2111A controls input data supplied from an input device such as a keyboard and mouse and output data displayed on a monitor 2109A. The SOAP processing part 2112 communicates messages with the multifunctional product 2001 in accordance with SOAP. The request/response processing part 2114 generates requests in accordance with HTTP and analyzes responses. The SOAP processing part 2112 includes an XML processing part 2113 for processing process contents of Web services provided to the multifunctional product 2001 and process results of Web services provided from the multifunctional product 2001.

It is noted that an HTTP request is to request the repository execution part 2400 of the multifunctional product 2001 to provide Web services to acquire and change extended bibliography information through data communication in accordance with HTTP. On the other hand, an HTTP response is a response to send a process result of the repository execution part 2400 to the client 2010A.

In the client 2010A, the request/response processing part 2114 generates a request corresponding to a process request. Then, the XML processing part 2113 describes contents of the request (process contents) in XML, and the SOAP processing part 2112 sends an HTTP request to the multifunctional product 2001 in accordance with SOAP. Depending upon contents of process requests, image data, extended bibliography information and other data may be further set in the HTTP request. In the case where extended bibliography information is set, the XML processing part 2113 describes the HTTP request in XML.

The multifunctional product 2001 receives an HTTP request from the client 2010A at httpd 2102. In response to receipt of the HTTP request, the distributor 2130 distributes the HTTP request to the repository Web service providing part 2140. When the SOAP processing part 2170 processes the HTTP request in accordance with SOAP, the dispatcher 2160A provides a process to the repository execution part 2400 and the XML processing part 2150 converts XML formatted process contents into a format that the repository execution part 2400 can handle.

After the repository execution part 2400 performs a process corresponding to the process contents, the XML processing part 2150 describes the process result in XML. The SOAP processing part 2170 performs a process on the process result in accordance with SOAP so that the process result can be displayed as an HTTP response. Then, httpd 2102 sends the HTTP response to the client 2010A. For example, the process result may be extended bibliography information, and XML formatted extended bibliography information is set in the HTTP response.

The client 2010A uses the SOAP processing part 2112 to process the HTTP response in accordance with SOAP. The XML processing part 2113 processes the XML formatted process result. Then, the request/response processing part 2114 processes the process result as a response to be displayed on the input and output control part 2111A, and supplies the resulting process result to the input and output control part 2111A. The input and output control part 2111A displays the process result on the monitor 2109A. By viewing the process result on the monitor 2109A, a user of the client 2010A can check contents through the displayed extended bibliography information.

Depending upon types of processes, process results do not have to be displayed on the monitor 2109A. In other words, some processes may be conducted only between the client 2010A and the multifunctional product 2001.

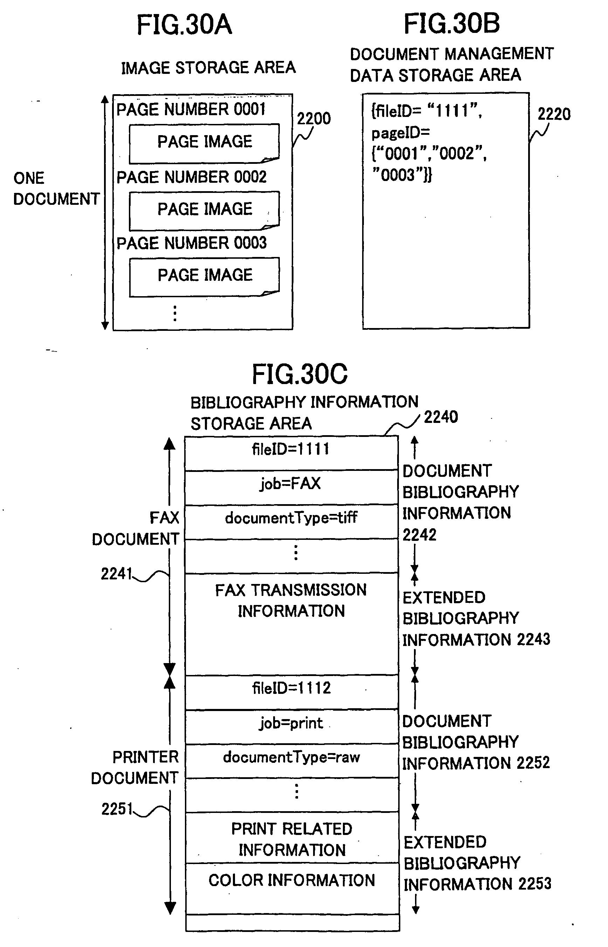

A description is given, with reference to FIGS. 30A through 30C, of an exemplary data structure for managing image data according to the second embodiment.

FIGS. 30A through 30C show exemplary data structures for managing image data according to the second embodiment. The interior of HDD 2063 is divided into several areas having an image storage area shown in FIG. 30A and document bibliography information on documents shown in FIG. 30C. Data shown in FIG. 30B to associate images with document bibliography information are stored in a non-volatile RAM.

FIG. 30A shows an exemplary image storage area 2200 for storing page images of a document.

Referring to FIG. 30A, the image storage area 2200 is illustrated. For example, if a document comprises three pages, the page number of the first page is set at the top of the image storage area 2200, and the page image of the first page is stored subsequently to the page number. In the illustrated example, the three pages are numbered, for example, as "0001", "0002" and "0003".

FIG. 30B shows an exemplary document management data storage area 2220 for storing combinations of document numbers and page numbers.

Referring to FIG. 30B, if the document number "1111" and the page numbers "0001", "0002" and "0003" are provided in the document management data storage area 2220, these data items are managed in the document management data storage area 2220 in the form of "{fileID="1111", pageID={"0001", "0002", "0003"}} as illustrated in FIG. 30B.

FIG. 30C shows an exemplary bibliography information storage area 2240 for managing document-by-document bibliography information.

Referring to FIG. 30C, the bibliography information storage area 2240 comprises document bibliography information and extended bibliography information. As shown in FIG. 30C, a FAX document 2241 comprises document bibliography information 2242 and extended bibliography information 2243. In the document bibliography information 2242, some information items, for example, a document number represented as "fileID=1111", an image formation type represented as "job=FAX", an image data type represented as "documentType=tiff", are managed. The extended bibliography information 2243 is to manage FAX transmission information.

Also, a printer document 2251 comprises document bibliography information 2252 and extended bibliography information 2253. In the document bibliography information 2252, some information items, for example, a document number represented as "fileID=1112", an image formation type represented as "job=print", an image data type represented as "documentType=raw", are managed. The extended bibliography information 2253 is to manage print related information and color information.

In the document bibliography information 2242 and 2252, for example, if image data have been processed, the image data type may be represented as "documentType=tiff". For document data created by a document creation application of the client 2010A, if the document data are image data processed by a printer driver of the client 2010A, the image data type is represented as "documentType=raw". In this case, if the document data further have been processed by the plotter 2011 of the multifunctional product 2001, the image data type is managed as "documentType=tiff".

On the other hand, the extended bibliography information 2243 and 2253 are stored within the multifunctional product 2001 as structure data.

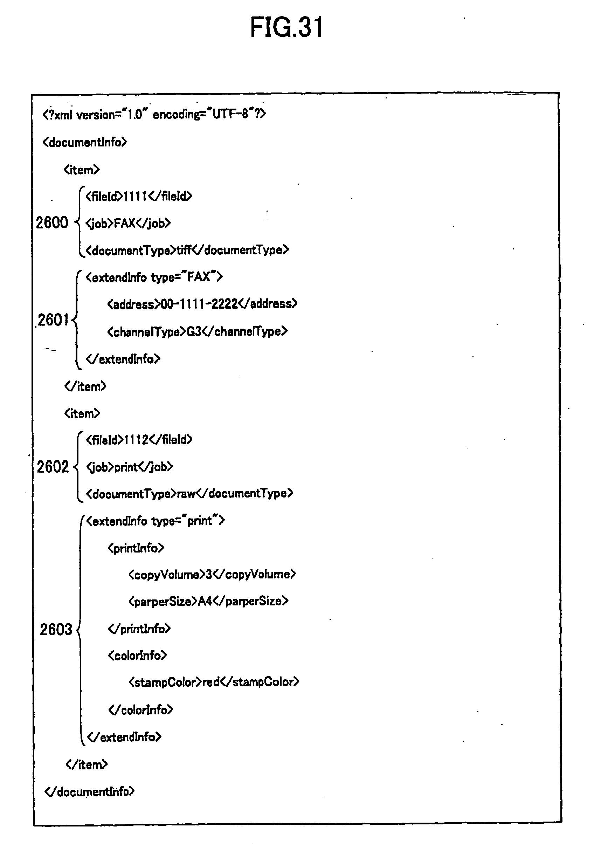

A description is given, with reference to FIG. 31, of exemplary XML formatted bibliography information-according to the second embodiment.

FIG. 31 shows exemplary XML formatted bibliography information generated from the bibliography information shown in FIG. 30C.

Referring to FIG. 31, document portions 2600, 2601, 2602 and 2603 correspond to the document bibliography information 2242, the extended bibliography information 2243, the document bibliography information 2252 and the extended bibliography information 2253, respectively.

In the document portion 2600, the document number is set as "1111" by enclosing with tags <fileId> and </fileId>. Also, the document formation type is set as "FAX" by enclosing with tags <job> and </job>, and the image data type is set as "tiff" by enclosing with tags <documentType> and </documentType>.

In the document portion 2601, the address and the channel type are specified by using tags <address> and <channelType>.

In the document portion 2602, the document number is set as "1112" by enclosing with tags <fileId> and </fileId>. Also, the document formation type is set as "print" by enclosing with tags <job> and </job>, and the image data type is set as "raw" by enclosing with tags <documentType> and </documentType>.

In the document portion 2603, the volume of copies, the paper size and color information are indicated by using tags <copyVolume>, <paperSize> and <stampColor>. In this fashion, image data items, which are to be processed and have been processed, are collectively managed in the multifunctional product 2001.

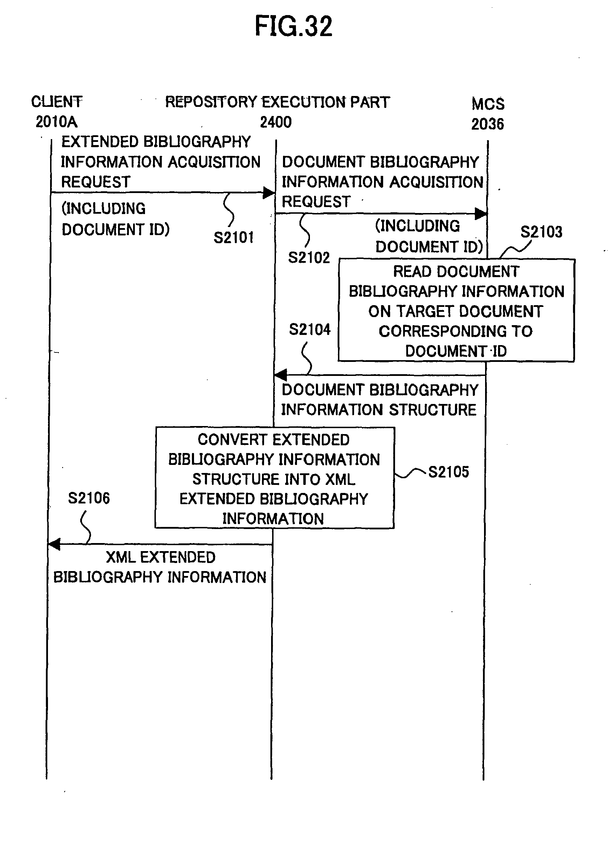

A description is given, with reference to FIG. 32 through FIG. 36, of exemplary extended bibliography information related operations according to the second embodiment.

FIG. 32 is a sequence diagram of an exemplary extended information acquisition operation according to the second embodiment.

Referring to FIG. 32, the client 2010A sends an HTTP request to represent an extended bibliography information acquisition request, in which a desired document ID is designated, to the repository execution part 2400 in accordance with SOAP at step S2101.

At step S2102, in response to receipt of the extended bibliography information acquisition request including the designated document ID, the repository execution part 2400 sends the extended bibliography information acquisition request including the designated document ID to MCS 2036. At step S2103, in response to receipt of extended bibliography information acquisition request including the designated document ID, MCS 2036 reads document bibliography information of the target document specified by the attached document ID from HDD 2063. At step S2104, MCS 2036 sends the read document bibliography information in the form of a document bibliography information structure to the repository execution part 2400.

At step S2105, the repository execution part 2400 extracts extended bibliography information from the received document bibliography information and XML-formats the extended bibliography information structure. At step S2106, the repository execution part 2400 provides the client 2010A with the XML extended bibliography information as an HTTP response in accordance with SOAP. The XML processing part 2150 creates XML extended bibliography information in the HTTP response.

When the client 2010A receives the HTTP response including the extended bibliography information, the extended bibliography information acquisition operation is completed.

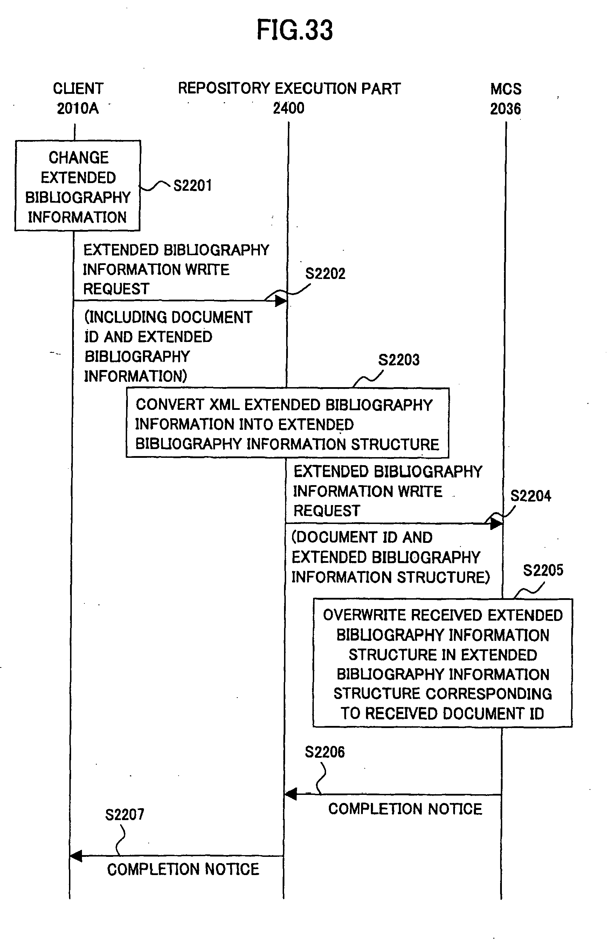

FIG. 33 is a sequence diagram of an exemplary extended bibliography information change operation according to the second embodiment.

Referring to FIG. 33, in response to an user's instruction, the client 2010A changes extended bibliography information at step S2201. At step S2202, the client 2010A sends an HTTP request representing an extended bibliography information write request, including a document ID and extended bibliography information, to the repository execution part 2400 in accordance with SOAP.

At step S2203, the repository execution part 2400 sets the XML extended bibliography information in the HTTP request as an extended bibliography information structure in a memory. At step S2204, the repository execution part 2400 sends the extended bibliography information write request, including the document ID and the extended bibliography information structure, to MCS 2036. At step S2205, MCS 2036 overwrites the received extended bibliography information in an extended bibliography information structure corresponding to the received document ID.

At step S2206, MCS 2036 informs the repository execution part 2400 that the extended bibliography information has been overwritten. At step S2207, the repository execution part 2400 informs the client 2010A as an HTTP response in accordance with SOAP that the extended bibliography information has been changed.

When the client 2010A receives the HTTP response to indicate that the extended bibliography information has been rewritten, the extended bibliography information change operation is completed.

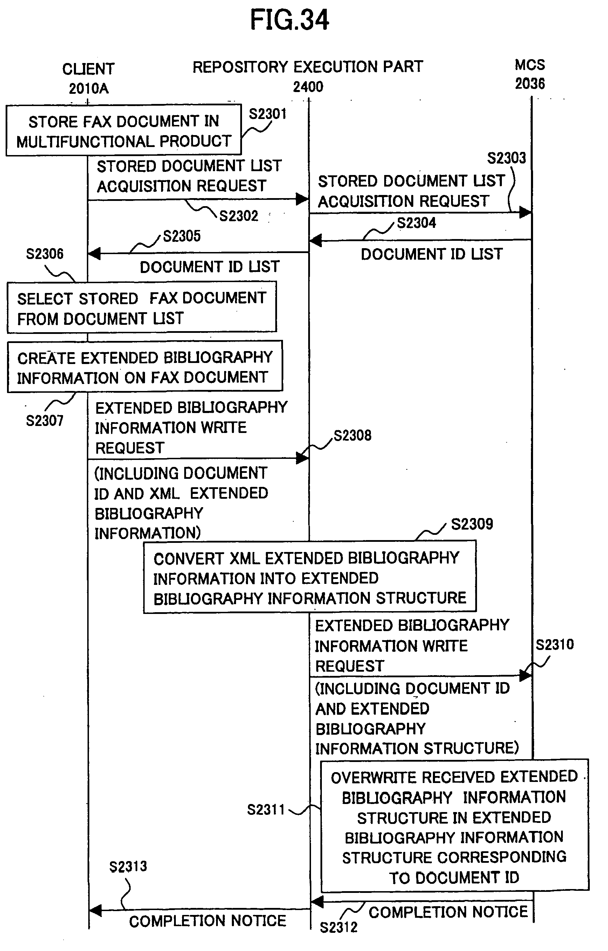

FIG. 34 is a sequence diagram of an exemplary extended bibliography information change operation on a FAX document according to the second embodiment.

Referring to FIG. 34, a FAX document is stored in the multifunctional product 2001 at step S2301. At step S2302, the client 2010A sends a stored document list acquisition request to acquire a list of one or more documents stored in the multifunctional product 2001 to the repository execution part 2400 of the multifunctional product 2001. At step S2303, the repository execution part 2400 sends the stored document list acquisition request to MCS 2036.

At step S2304, MCS 2036 acquires one or more document IDs from the document management data storage area 2220 shown in FIG. 30B or the bibliography information storage area 2240 shown in FIG. 30C, and sends a list of the acquired document IDs to the repository execution part 2400. At step S2305, the repository execution part 2400 sends an HTTP response indicative of the document ID list to the client 2010A in accordance with SOAP.

At step S2306, the client 2010A selects a desired FAX document in the multifunctional product 2001 from the document ID list. At step S2307, the client 2010A creates extended bibliography information for FAX transmission of the FAX document. At step S2308, the client 2010A sends an HTTP request indicative of an extended bibliography information write request including the document ID and the extended bibliography information to the repository execution part 2400. Here, the extended bibliography information is described in XML by the XML processing part 2113 of the client 2010A.

At step S2309, the repository execution part 2400 converts the XML extended bibliography information into an extended bibliography information structure in a memory. At step S2310, the repository execution part 2400 sends the extended bibliography information write request, in which the document ID and the extended bibliography information structure are designated, to MCS 2036. At step S2311, MCS 2036 writes the received extended bibliography information structure in an extended bibliography information structure corresponding to the received document ID. At step S2312, MCS 2036 informs the repository execution part 2400 that the extended bibliography information has been changed. At step S2313, the repository execution part 2400 sends to the client 2010A an HTTP response to indicate that the extended bibliography information has been changed.

When the client 2010A receives the HTTP response to indicate that the extended bibliography information has been changed, the extended bibliography information change operation on a FAX document is completed.

According to the extended bibliography information change operation on a FAX document, a FAX document that a user wants to transmit from the client 2010A and extended bibliography information thereof can be managed in the multifunctional product 2001. In this case, although the FAX document is managed in the multifunctional product 2001, the FAX document is not FAX-transmitted by FCU 2080 of the multifunctional product 2001.

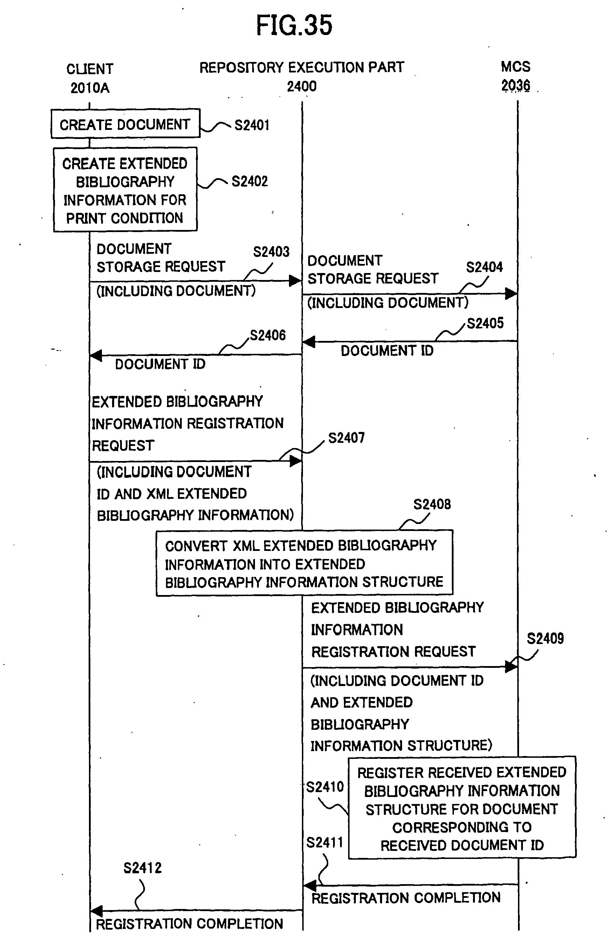

FIG. 35 is a sequence diagram of an exemplary registration operation to newly register image data and extended bibliography information thereof that the client 2010A creates.

Referring to FIG. 35, a desired document to be stored in the multifunctional product 2001 is created in the clients at step S2401. At step S2402, extended bibliography information, for example, extended bibliography information on print conditions, is created in the client 2010A. At step S2403, the client 2010A sends an HTTP request indicative of a document storage request including the created document to the repository execution part 2400 of the multifunctional product 2001. Here, the document may be created by a document creation application of the client 2010A. Alternatively, the document may be image data created by a printer driver of the multifunctional product 2001.

At step S2404, in response to receipt of the HTTP document storage request from the client 2010A, the repository execution part 2400 sends the document storage request including the document to MCS 2036. At step S2405, MCS 2036 stores the designated document in HDD 2063, and sends the document ID of the document, which is assigned for the document, to the repository execution part 2400.

At step S2406, the repository execution part 2400 sends an HTTP response indicative of the document ID to the client 2010A in accordance with SOAP. At step S2407, in response to receipt of the document ID from the multifunctional product 2001, the client 2010A sends an HTTP extended bibliography information registration request including the document ID and the created extended bibliography information to the repository execution part 2400 in accordance with SOAP. Here, the extended bibliography information is described in XML by the XML processing part 2113.

At step S2408, the repository execution part 2400 stores the XML extended bibliography information included in the received HTTP request as an extended bibliography information structure in a memory. At step S2409, the repository execution part 2400 sends an extended bibliography information write request, in which the document ID and the extended bibliography information structure are included, to MCS 2036. At step S2410, MCS 2036 stores the received extended bibliography information structure in an extended bibliography information structure corresponding to the document ID. At step S2411, MCS 2036 informs the repository execution part 2400 that the extended bibliography information has been registered. At step S2412, the repository execution part 2400 sends to the client 2010A an HTTP response to indicate that the extended bibliography information has been registered.

When the client 2010A receives the HTTP response to indicate that the extended bibliography information has been registered, the extended bibliography information registration operation to newly register the image data and the extended bibliography information, which are created in the client 2010A at step S2401, in the multifunctional product 2001 is completed.

According to the above extended bibliography information registration operation, a document to be printed and extended bibliography information thereof, which are sent from the client 2010A, can be managed in the multifunctional product 2001. In this case, although the document transmitted from the client 2010A is managed in the multifunctional product 2001, the document is not printed by the plotter 2011.

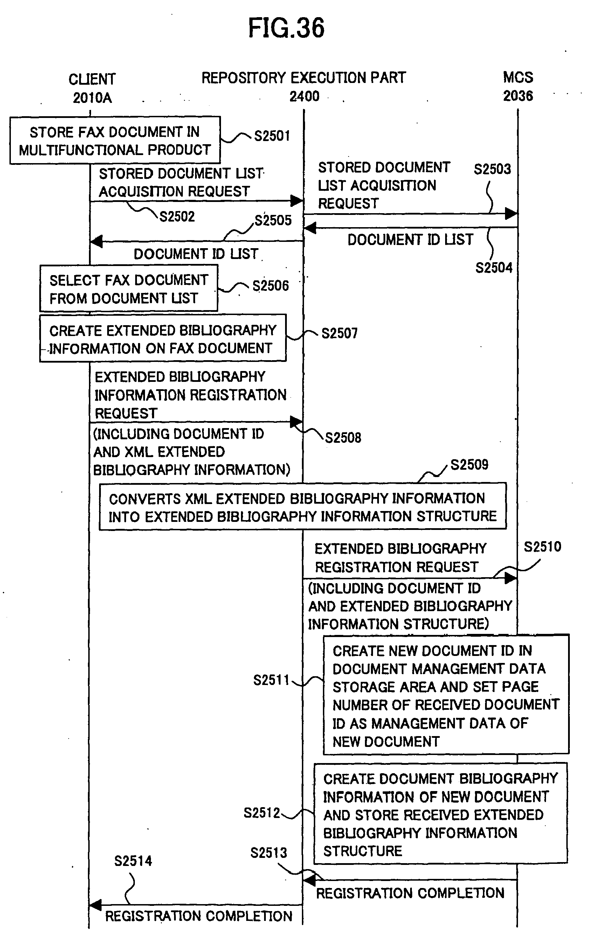

FIG. 36 is a sequence diagram of another exemplary extended bibliography information registration operation to newly register extended bibliography information on an existing document stored in the multifunctional product 2001.

Referring to FIG. 36, after a FAX document is stored in the multifunctional product 2001 at step S2501, the client 2010A sends an HTTP stored document list acquisition request to the repository execution part 2400 of the multifunctional product 2001 in accordance with SOAP at step S2502. At step S2503, the repository execution part 2400 sends the stored document list acquisition request to MCS 2036.

At step S2504, MCS 2036 acquires one or more document IDs from the document management data storage area 2220 or the bibliography information storage area 2240, and sends a list of the acquired document IDs to the repository execution part 2400. At step S2505, the repository execution part 2400 sends an HTTP response indicative of the document ID list to the client 2010A in accordance with SOAP.

The client 2010A selects a desired FAX document from the document ID list at step S2506, and creates extended bibliography information on the FAX document at step S2507. At step S2508, the client 2010A sends an HTTP extended bibliography information registration request to newly register the extended bibliography information to the repository execution part 2400 in accordance with SOAP. Here, the HTTP request includes the document ID and the created extended bibliography information that the XML processing part 2113 describes in XML.

At step S2509, the repository execution part 2400 converts the XML extended bibliography information into an extended bibliography information structure in a memory. At step S2510, the repository execution part 2400 sends to MCS 2036 an extended bibliography information registration request to newly register the extended bibliography information.

At step S2511, MCS 2036 creates a new document ID in the document management data storage area 2220, and sets a page number of the received document ID as management data of the new document. At step S2512, MCS 2036 creates document bibliography information on the new document, and stores the received extended bibliography information in the bibliography information storage area 2240. At step S2513, MCS 2036 informs the repository execution part 2400 that the extended bibliography information has been newly registered.

According to the above extended bibliography information registration operation, it is possible to register new extended bibliography information on an existing document, in other words, add only document bibliography information in the multifunctional product 2001, without any change of image data of the document and extended bibliography information thereof already stored in the multifunctional product 2001.

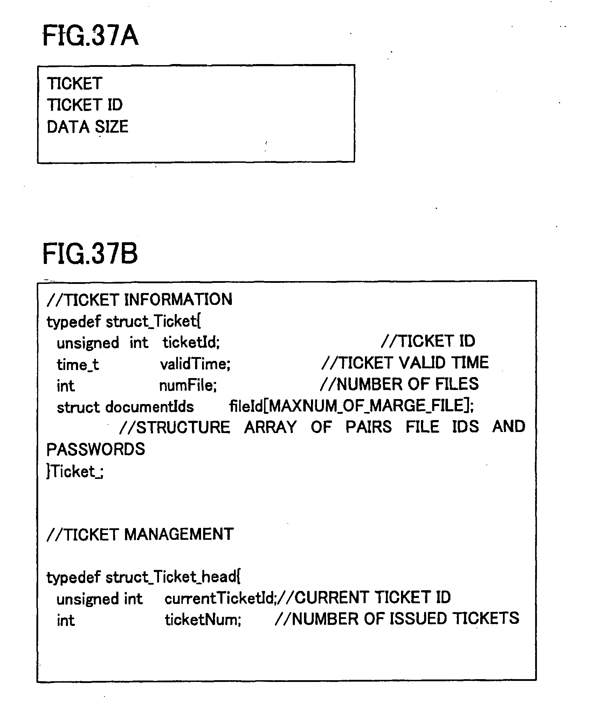

A description is given, with reference to FIGS. 37A and 37B, of exemplary introduction of a ticket in the extended bibliography information related operations described with respect to FIG. 32 through FIG. 36.

At the beginning of each operation, the repository execution part 2400 issues a document ticket to authorize access to a document or information on a document. The client 2010A sends an HTTP request having the document ticket to the multifunctional product 2001. As a result, it is possible to ensure security on documents stored in the multifunctional product 2001. For example, the repository execution part 2400 may issue and manage a document ticket as illustrated in FIGS. 37A and 37B.

FIG. 37A shows an exemplary document ticket structure according to the second embodiment.

Referring to FIG. 37A, a document ticket includes a ticket ID and a data size of the document ticket.

FIG. 37B shows exemplary document ticket information to check a document ticket according to the second embodiment. Here, document ticket information is held in the repository execution part 2400.

Referring to FIG. 37B, document ticket information comprises document ticket content information and document ticket management information. The illustrated document ticket content information comprises a ticket ID, valid time, the number of files, and a structure array of pairs of file IDs and passwords. On the other hand, the illustrated document ticket management information comprises a current ticket number and the number of issued tickets. It is noted that the ticket ID associates a document ticket with document ticket information.

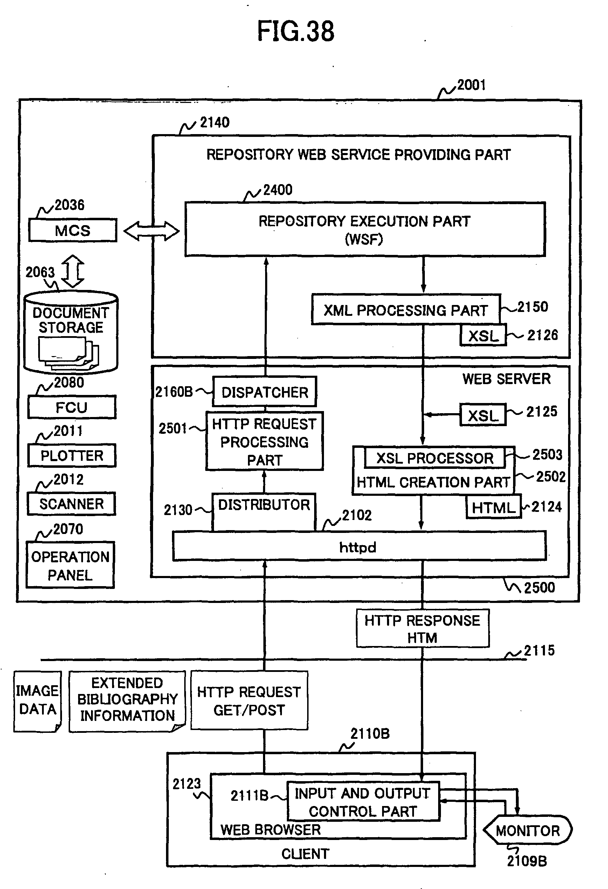

A description is given, with reference to FIG. 38, of another exemplary structure of the multifunctional product 2001 providing repository Web service according to the second embodiment.

In the multifunctional product 2001 providing a repository Web service with respect to FIG. 29, each operation is performed in accordance with SOAP as mentioned above. However, a similar repository Web service can be provided through HTTP requests and HTTP responses in which SOAP is not used.

FIG. 38 is a block diagram illustrating a second functional structure of the multifunctional product 1 providing a repository Web service with no use of SOAP. In FIG. 38, main components of the multifunctional product 2001 to implement a repository Web service are illustrated, and the other components are omitted.

Referring to FIG. 38, the multifunctional product 2001 comprises a Web service providing part 2140 to provide a repository Web service, a Web server 2500 to control message communication of HTTP requests and HTTP responses, MCS 2036, FCU 2080, a plotter 2011, a scanner 2012, HDD 2063 and an operation panel 2070.

The repository Web service providing part 2140, which is provided in the Web service processing application 2025 shown in FIG. 27, comprises a repository execution part 2400 and an XML processing part 2150. The repository execution part 2400 works as a Web service function (WSF) and stores document data (image data) in HDD 2063. The XML processing part 2150 processes XML data to describe process contents requested through HTTP requests, and describes the process results of the repository execution part 2400 in XML.

The Web server 2500 comprises httpd 2102, a distributor 2130, an HTTP request processing part 2501, a dispatcher 2160B and an HTML creation part 2502. Here, httpd 2102 controls communication in accordance with HTTP. The distributor 2130 distributes processes to the Web service providing part 2140 corresponding to HTTP requests. The HTTP request processing part 2501 processes HTTP requests in accordance with a GET method and a POST method received via a network 2115. The dispatcher 2160B provides the repository execution part 2400 with Web service processes represented as HTTP requests. The HTML creation part 2502 creates HTML data 2124 indicative of process results received from the repository execution part 2400.

In the multifunctional product 2001 having the above functional structure, the XML processing part 2150 processes XML for describing process contents requested through HTTP requests. In addition, the XML processing part 2150 creates XML 2126 based on a process result provided from the repository execution part 2400, and sends created XML 2126 to the HTML creation part 2502. The HTML creation part 2502 uses the XSL processor 2503 to convert XML 2126 into an HTML format based on XSL 2125 indicative of a predefined style list. The HTML creation part 2502 creates HTML 2124 indicative of a process result in accordance with the HTML format.

When process results are displayed on the client 2010B, it is possible to provide a displayed screen for each Web service by providing XSL 2125 to the Web server 2500 depending on characteristics of processes executed by individual Web service execution parts. Since the XML processing part 2150 converts input and output data to/from the repository execution part 2400, the multifunctional product 2001 having the functional structure shown in FIG. 38 can provide the same repository Web service in the repository execution part 2400 as the functional structure shown in FIG. 29.

In order to implement the operations described with respect to FIG. 31 through FIG. 36 by the functional structure shown in FIG. 38, specifically, XML process contents in an HTTP request are replaced with process contents transmitted by a GET method and a POST method. Also, XML process results in an HTTP response are replaced with HTML process results, and the client 2010A is changed into the client 2010B.

According to the second embodiment, the clients 2010A and 2010B can selectively acquire extended bibliography information from the multifunctional product 2001, and thereby the clients 2010A and 2010B can refer to the extended bibliography information.

In addition, the multifunctional product 2001 can overwrite and store extended bibliography information changed by the clients 2010A and 2010B. Accordingly, for example, if a user wants the multifunctional product 2001 to print monochrome image data from the underlying color image data thereof, the multifunctional product 2001 can print the monochrome image data without newly forming the image data by simply changing or newly registering extended bibliography information to print the monochrome version of the underlying color image data.

In addition, the clients 2010A and 2010B can manages documents to be FAX transmitted or printed and extended bibliography information thereof in the multifunctional product 2001.

In addition, even if image data and extended bibliography information thereof are stored in the multifunctional product 2001, it is possible to newly register another extended bibliography information on the image data without modification of the image data and the original extended bibliography information so as to obtain image data derived from the underlying stored image data.

Accordingly, since the clients 2010A and 2010B can acquire and rewrite only extended bibliography information to designate a method of processing bibliography information as a repository Web receive of the multifunctional product 2001, it is possible to change and add extended bibliography information on image data. As a result, whenever extended bibliography information is changed and added, the clients 2010A and 2010B do not have to prepare a document (image data). Thus, it is possible improve efficiency of data transmission.

A multifunctional product according to a third embodiment of the present invention is described.

In the third embodiment, a multifunctional product allows a user of a client connected thereto to select a rendition of a document when the user acquires and edits the document.

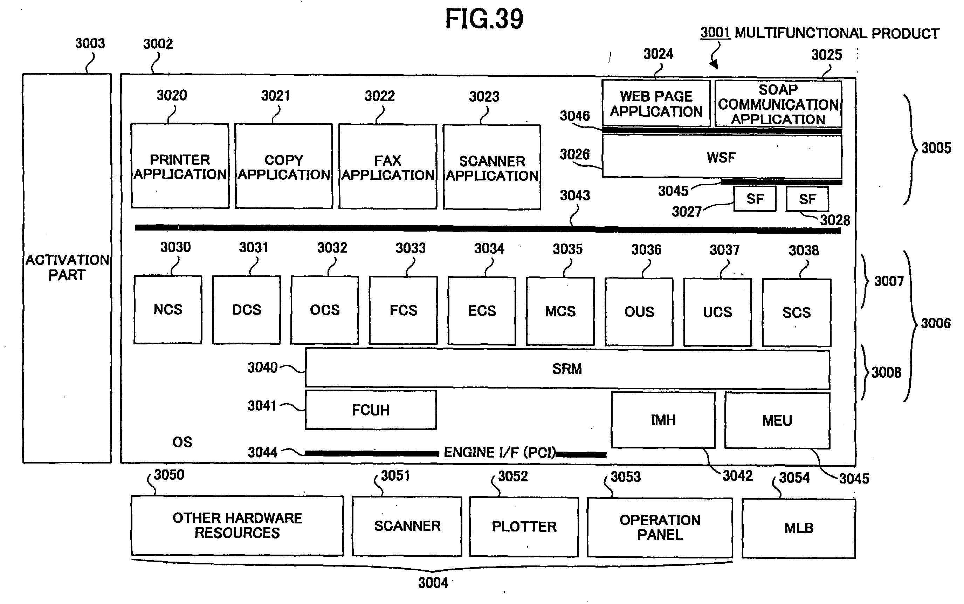

A description is given, with reference to FIG. 39, of a functional structure of a multifunctional product according to the third embodiment.

FIG. 39 is a block diagram illustrating an exemplary functional structure of a multifunctional product 3001 according to the third embodiment.

As observed from FIG. 39, the multifunctional product 3001 comprises a software set 3002, an activation part 3003 and hardware resources 3004.

When the multifunctional product 3001 is powered ON, the activation part 3003 first activates an application layer 3005 and a controller 3006. For example, the activation part 3003 loads programs of the application layer 3005 and the controller 3006 from a hard disk device (HDD) or the like. Then, the activation part 3003 stores the loaded programs in a memory area of the multifunctional product 3001, and starts the programs. The hardware resources 3004 comprises a scanner 3051, a plotter 3052, an operation panel 3053, a MLB (Media Link Board) 3054 and other hardware resources 3050 such as a facsimile.

The software set 3002 comprises the application layer 3005 and the controller 3006, which are driven in an operating system (OS) such as UNIX (registered trademark). The application layer 3005 includes programs to execute various user-service processes associated with image formation using a printer function, a copier function, a FAX function and a scanner function of the multifunctional product 3001.

The application layer 3005 comprises a printer application 3020 for the printer function, a copier application 3021 for the copier function, a FAX application 3022 for the FAX function, a scanner application 3023 for the scanner function, a Web page application 3024, a SOAP (Simple Object Access Protocol) communication application 3025, and a Web service function (WSF) 3026 provided between one or more shared functions (SF) 3027 and 3028 and the Web page application 3024 and the SOAP communication application 3025.

WSF 3026 comprises an application program interface (API) 3046 to receive a process request from the Web page application 3024 and the SOAP communication application 3025 by using a predefined function. SFs 3027 and 3028 comprise API 3045 to receive a process request from WSF 3026 by using a predefined function.

In response to receipt of a process request from the Web page application 3024 and the SOAP communication application 3025 via API 3046, WSF 3026 selects one of SFs 3027 and 3028 corresponding to the process request. In turn, WSF 3026 sends the received process request to the selected SF 3027 or 3028 via API 3046. In response to receipt of the process request from WSF 3026 via API 3045, the selected SF 3027 or 3028 performs a process corresponding to the process request.

For example, in the multifunctional product 3001 having SFs 3027 and 3028, SF 3027 performs processes for a document management service 3100 described below. Also, the Web page application 3024 performs processes for a Web page service 3101 described below. The SOAP communication application 3025 includes a SOAP processing handler 104 described below. It is noted that the document management service 3100 corresponds to a document list transmission part, a rendition list transmission part, a document element list transmission part, a document element providing part, an empty document generation part, a document element registration part, and a document identifier generation part.

The controller 3006 comprises a control service layer 3007 to interpret a process request from the application layer 3005 and generate an acquisition request for the hardware resources 3004, a system resource manager (SRM) 3040 to manage one or more of the hardware resources 4 and arbitrate an acquisition request from the control service layer 3007, and a handler layer 3008 to manage the hardware resources 3004 corresponding to an acquisition request from SRM 3040.

The control service layer 3007 comprises one or more service modules such as a network control service (NCS) 3013, a delivery control service (DCS) 3031, an operation panel control service (OCS) 3032, a FAX control service (FCS) 3033, an engine control service (ECS) 3034, a memory control service (MCS) 3035, an on-demand update service (OUS) 3036, a user information control service (UCS) 3037 and a system control service (SCS) 3038.

It is noted that the controller 3006 comprises API 3043 so that a process request from the application layer 3005 can be received by means of a predefined function. OS can execute individual programs of the application layer 3005 and the controller 3006 as respective processes in parallel.

Processes of NCS 3030 are executed to provide services that applications requiring a network I/O can use in common. Specifically, NCS 3030 distributes data sets received in accordance with individual protocols from the network side to the applications, and also mediates between the network side and each application when the application sends data to the network side.

In addition, NCS 3030 includes HTTPD (HyperText Transfer Protocol Daemon) and FTPD (File Transfer Protocol Daemon) for the purpose of data communication with network devices connected via a network.

Processes of DCS 3031 are executed to control delivery of stored documents, for example. Processes of OCS 3032 are executed to control an operation part having a function of an information communication part between a control part of the multifunctional product 3001 and users or maintenance service staffs. Processes of FCS 3033 are executed to provide APIs for various functions such as FAX transmission and receipt via PSTN (Public Switched Telephone Network) and ISDN (Integrated Services Digital Network), registration/citation of various FAX data managed in a backup memory, reading of FAX data, and printing of received FAX data.

Processes of ECS 3034 are executed to control engine parts of a scanner 3051, a plotter 3052 and other hardware resources 3050. Processes of MCS 3035 are executed to control memories such as acquisition and release of a memory area and utilization of HDD. Processes of OUS 3036 are executed, in response to a notice from a network, to download a program and store the program in a memory. Processes of UCS 3037 are executed to manage user information.

Processes of SCS 3038 are executed to perform application management, control of the operation part, system screen displaying, LED displaying, hardware resource management, control of interrupt applications and so on.

Processes of SRM 3040 together with SCS 3038 are executed to perform system control and management of the hardware resources 3004. For example, a process of SRM 3040 is executed, in response to acquisition requests for individual hardware items of the hardware resources 4 from the upper layer thereof, to arbitrage occupancy of the hardware items and perform execution thereof.

Specifically, the process of SRM 3040 determines whether the requested hardware item of the hardware resources 3004 is currently available, and if the requested hardware item is available, it is reported to the upper layer that the requested hardware item is available. Also, in response to an acquisition request for the hardware resources 3004 from the upper layer, a process of SRM 3040 schedules occupancy of the hardware resources 3004 to directly perform requests such as paper carrying and image formation of the printer engine, memory reservation and file creation.

The handler layer 3008 comprises a FAX control unit handler (FCUH) 3041, an image memory handler (IMH) 3042 and a media edit unit (MEU) 3045. FCUH 3041 manages a FAX control unit (FCU) described in detail below. IMH 3042 allocates memory areas to individual processes and manages the allocated memory areas. MEU 3045 instructs a media link board (MLB) 3054 to convert images. SRM 3040 and FCUH 3041 use an engine I/F 3044, which allows process requests for the hardware resources 3004 to be transmitted by means of a predefined function, to issue process requests for the hardware resources 3004. It is noted that MLB 3054 corresponds to an image data conversion part.

In this configuration, the multifunctional product 3001 can use the controller 3006 to collectively perform processes required for individual applications in common.

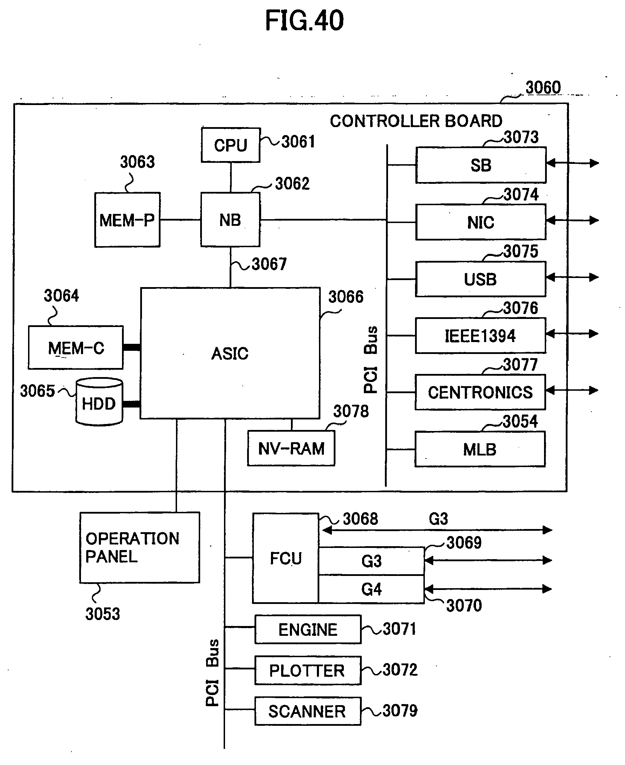

A description is given, with reference to FIG. 40, of an exemplary hardware configuration of the multifunctional product 3001 according to the third embodiment.

FIG. 40 shows an exemplary hardware configuration of the multifunctional product 3001 according to the third embodiment.

Referring to FIG. 40, the multifunctional product 3001 comprises a controller board 3060, an operation panel 3053, a FAX controller unit (FCU) 3068, an engine 3071, a plotter 3072, and a scanner 3079. Furthermore, FCU 3068 includes a G3 standard unit 3069 and a G4 standard unit 3070.

The controller board 3060 comprises CPU (Central Processor Unit) 3061, ASIC (Application Specific Integrated Circuit) 3066, HDD (Hard Disk Drive) 3065, a local memory (MEM-C) 3064, a system memory (MEM-P) 3063, a north bridge (NB) 3062, a south bridge (SB) 3073, NIC (Network Interface Card) 3074, a USB (Universal Serial Bus) device 3075, an IEEE1394 device 3076, and a centronics device 3077.

The operation panel 3053 is connected to ASIC 3066 of the controller board 3060. As shown in FIG. 40, SB 3073, NIC 3074, the USB device 3075, the IEEE1394 device 3076, the centronics device 3077 and MLB 3054 are connected to NB 3062 via a PCI (Peripheral Component Interconnect) bus. MLB 3054 is a substrate for connecting to the multifunctional product 3001 via the PCI bus. MLB 3054 converts an input image from the multifunctional product 3001 and then outputs the converted image to the multifunctional product 3001. Here, the image conversion means that a format of an image is converted into another format. In the following description, the term "format" may be equivalently represented as "compression type".

As shown in FIG. 40, FCU 3068, the engine 3071, the plotter 3072 and the scanner 3079 are connected to ASIC 3066 of the controller board 3060 via a PCI bus.

It is noted that the controller board 3060 has the structure such that ASIC 3066 is connected not only to MEM-C 3064, HDD 3065 and so on but also to CPU 3061 via NB 3062. When ASIC 3066 is connected to CPU 3061 via NB 3062 in such a structure, it is possible to correspond to a case where the interface of CPU 3061 is not disclosed.

Here, ASIC 3066 is connected to NB 3062 via AGP (Accelerated Graphics Port) 3067 rather than a PCI bus. In order to control execution of at least one process of the application layer 3005 and the platform layer 3006, ASIC 3066 is connected to NB 3062 via high transmission speed AGP 3067 rather than the low transmission speed PCI bus. As a result, it is possible to prevent performance reduction of the multifunctional product 3001.

CPU 3061 is responsible to exercise overall control over the multifunctional product 3001. CPU 3061 starts and executes NCS 3030, DCS 3031, OCS 3032, FCS 3033, ECS 3034, MCS 3035, OUS 3036, UCS 3037, SCS 3038, SRM 3040, FCUH 3041 and IMH 3042 as individual processes on OS. At the same time, CPU 3061 starts and executes the printer application 3020, the copy application 3021, the FAX application 3022 and the scanner application 3023 of the application layer 3005.

NB 3062 is a bridge to connect among CPU 3061, MEM-P 3063, SB 3073 and ASIC 3066. MEM-P 3063 is used as a image drawing memory. SB 3073 is a bridge to connect NB 3062 to a PCI bus and peripheral devices. MEM-C 3064 is used as a copying image buffer and a code buffer.

ASIC 3066 is a hardware item for image processing and is formed as an IC dedicated to image processing. HDD 3065 is used as a storage device for storing image data, document data, programs, font data and data forms. The operation panel 3053 serves as an operation part to accept user's input manipulation and display information to users.

Embodiments of a document management service according to the third embodiment are described. In the following description, a document comprises document bibliography information on the document and page identifiers of pages composing the document, and a page comprises page bibliography information on the page and an image.

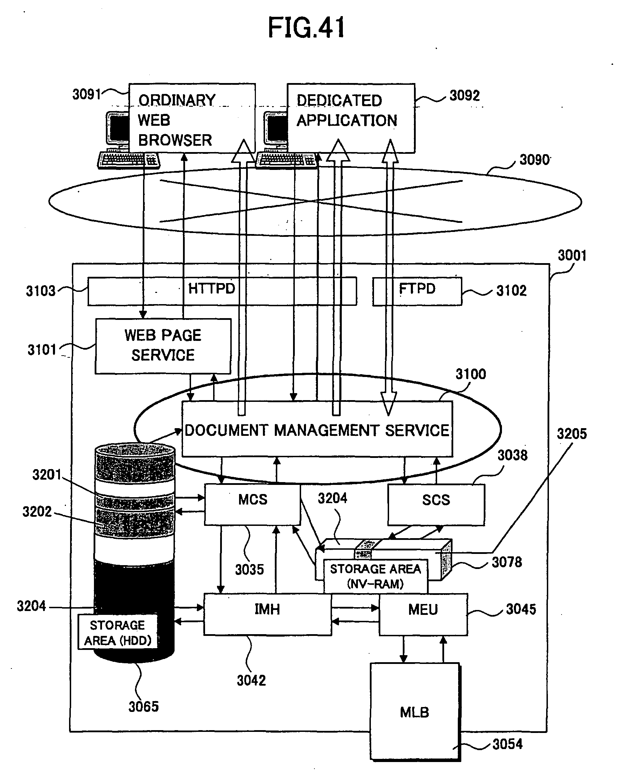

A description is given, with reference to FIG. 41, of a system structure of a document management service of the multifunctional product 3001 according to the third embodiment.

FIG. 41 shows an exemplary structure of a system including the multifunctional product 3001 providing a document management service according to the third embodiment.

Referring to FIG. 41, a system comprises the multifunctional product 3001, a network 3090, a Web browser 3091 and a dedicated application 3092.

The Web browser 3091 and the dedicated application 3092, which communicate images with the multifunctional product 3001, are activated in a client such as a personal computer connected to the multifunctional product 3001 via the network 3090. Specifically, images can be downloaded in the form of a certain format in the Web browser 3091. Also, in the dedicated application 3092, images can be downloaded in the form of a certain format and then the downloaded image can be stored in the multifunctional product 3001.

In the illustration, the multifunctional product 3001 includes a document management service 3100, a Web page service 3101, FTPD 3102, HTTPD 3103, MCS 3035, SCS 3038, IMH 3042, MEU 3045, MLB 3054, HDD 3065 and NV-RAM (Non-Volatile Random Access Memory) 3078. Here, a document bibliography information storage area 3201, a page bibliography information storage area 3202 and an image storage area 3204 are provided in HDD 3065, and a document management data storage area 3203 is provided in NV-RAM 3078.

The document management service 3100 provides images or the like to the Web browser 3091 via the Web page service 3101 and HTTPD 3103. Furthermore, the document management service 3100 communicates images with the dedicated application 3092 via HTTPD 3103 and FTPD 3102.

In addition, the document management service 3100 communicates images via MCS 3035 and information with NV-RAM 3078 via SCS 3038. MCS 3035 reads/writes not only data from/in the document bibliography information storage area 3201, the page bibliography information storage area 3202 and the document management data storage area 3203 but also images from/in the image storage area 3204 via IMH 3042. IMH 3042 requests MEU 3045 to convert an image. MEU 3045, in response to a request from IMH 3042, converts an image by means of MLB 3054. Also, SCS 3038 reads/writes data from/in a administrator configuration value storage area 3205, which is described in detail below.

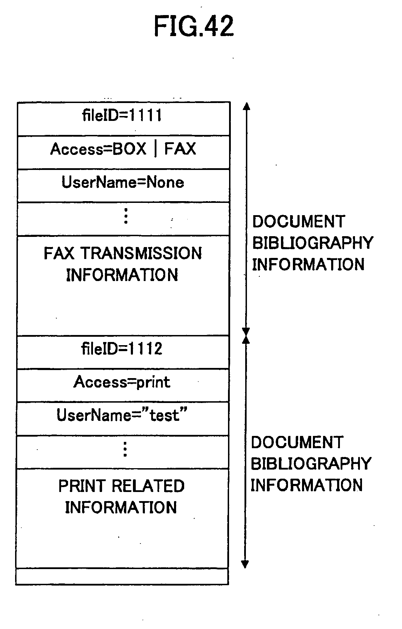

A description is given, with reference to FIG. 42 through FIG. 45, of the document bibliography information storage area 3201, the page bibliography information storage area 3202, the document management data storage area 3203 and the image storage area 3204.

FIG. 42 shows an exemplary document bibliography information storage area 3201 according to the third embodiment.

Referring to FIG. 42, a document bibliography information storage area 3201 includes two bibliography information items: FAX transmission information and printing-related information.

The FAX transmission information includes some data items: "fileID", "Access", "UserName" and "FAX transmission information". The data item "fileID", which corresponds to a document identifier, is an ID for identifying the document bibliography information to identify the document. In the illustrated example, "fileID" is set as "1111". The data item "Access" is indicative of how the document has been obtained. In the illustrated example, "Access" is set as "Box|FAX". The data item "UserName" is indicative of the user name of an owner of the document. The data item "FAX transmission information" is information in association with FAX transmission of the document.

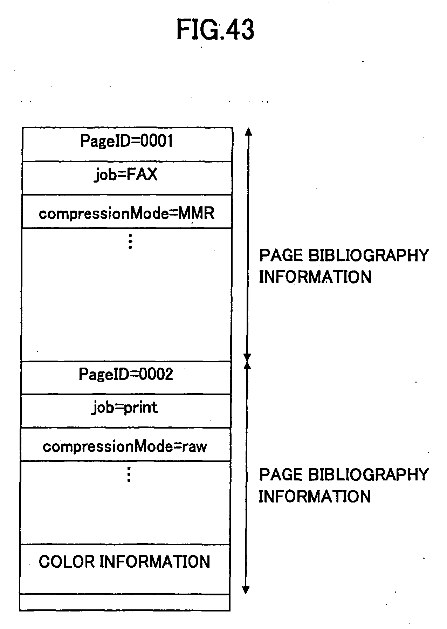

FIG. 43 shows an exemplary page bibliography information storage area 3202 according to the third embodiment.

Referring to FIG. 43, the page bibliography information storage area 3202 includes two page bibliography information items. Here, the page bibliography information having a data item "PageID" of "0001" is focused, because the other page bibliography information also has the same data structure.

The page bibliography information includes data items "PageID", "job" and "compressionMode". The data item "PageID", which corresponds to an ID for identifying the page bibliography information. In the illustrated example, "PageID" is set as "0001". The data item "job", which corresponds to image formation information, is indicative of what job has formed the page image. In the illustrated example, "job" is set as "FAX". The data item "compressionMode" is indicative of a compression type being the data format of the page image. In the illustrated example, "compressionMode" is set as "MMR".

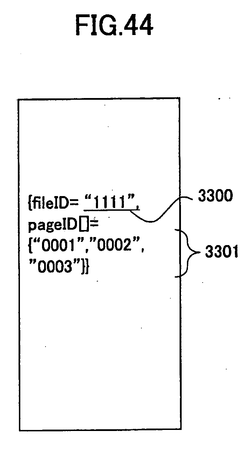

FIG. 44 shows an exemplary document management data storage area 3203 according to the third embodiment.

Referring to FIG. 44, the illustrated document management data comprise a document ID 3300 as "fileID" and a combination of page bibliography identifiers as "PageID". In other words, the document management data includes an association between the document bibliography information and the page bibliography information.

In the illustrated example, "fileID" is set as "1111", and "PageID" is set as a combination of "0001", "0002" and "0003".

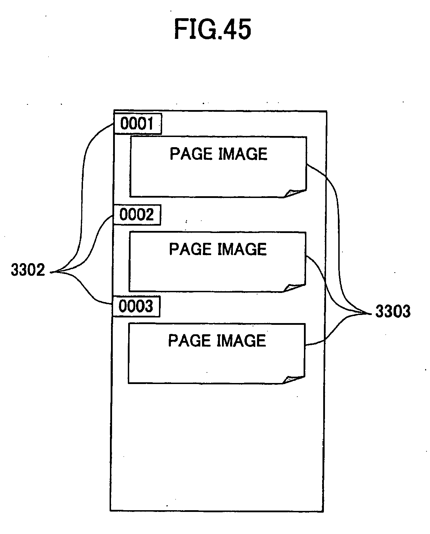

FIG. 45 shows an exemplary image storage area according to the third embodiment.

Referring to FIG. 45, the image storage area 3204 includes a page image 3303 and a page identifier 3302 of the page image 3303.

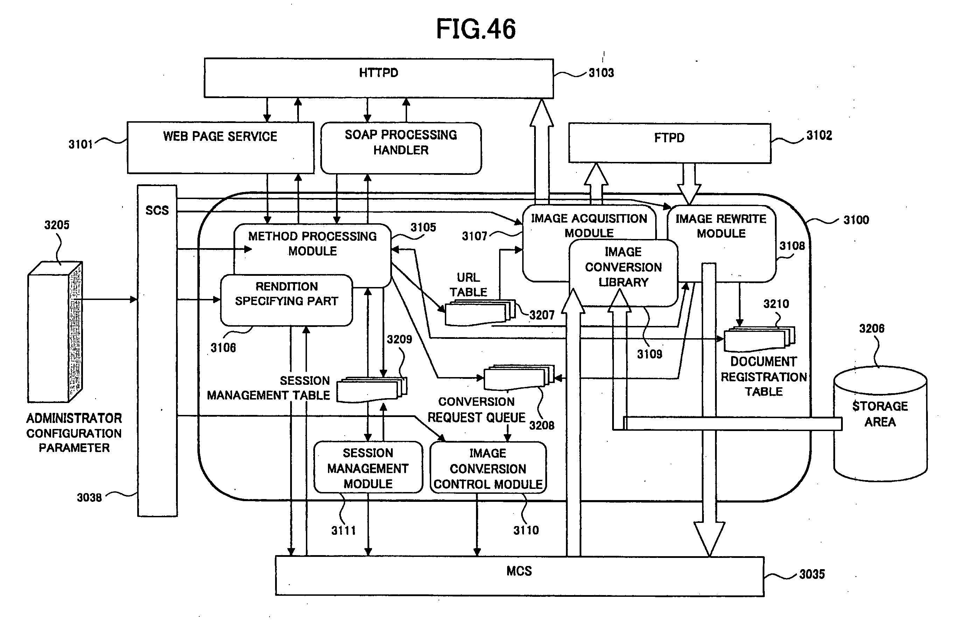

A description is given, with reference to FIG. 46, of an exemplary structure of a document management service of the multifunctional product 3001 according to the third embodiment.

FIG. 46 shows an exemplary structure of the document management service 3100 according to the third embodiment.

Referring to FIG. 46, the document management service 3100 comprises a method processing module 3105, a rendition specifying part 3106, an image acceptance module 3107, an image rewrite module 3108, an image conversion library 3109, an image conversion control module 3110 and a session management module 3111.

Additionally, the document management service 3100 includes a URL (Uniform Resource Locator) table 3207, a conversion request queue 3208, session management table 3209 and a document registration table 3210. In the illustration, the storage area 3206 indicates HDD 3065 and NV-RAM 3078.

The method processing module 3105 is a module for method processing of HTTP and SOAP. The Web browser 3091 and the dedicated application 3092 use the image acquisition module 3107 to acquire images. The image rewrite module 3108 is a module for rewriting images from the dedicated application 3092.

The image conversion library 3109 is for converting images in software. The image conversion control module 3110 is for controlling image conversion such as requesting MCS 3035 to convert images. The session management module 3111 is for managing a session, which is a single process, such as conversion of a document. The rendition identification part 3106 identifies a rendition described in detail below.

A description is given, with reference to FIG. 47 through FIG. 49 of a rendition according to the third embodiment.

In this embodiment, a rendition means a representation form of a document. For example, all possible representation forms of a document, such as a representative image of the document, any page image of the document, a multi-page format formed as a collection of page images composing the document and property (bibliography) information of the document, are considered as renditions of the document.

The document management service 3100 provides a service for displaying a list of possible renditions of a document designated by a user. In addition, the document management service 3100 also provides a service for narrowing down the listed renditions corresponding to rendition conditions designated by the user.

Now, it is assumed that a document can be represented in the form of any of three types: "representative image", "PDF (Portable Document Format)" and "XML (extensible Markup Language)". In this assumption, if a user designates "image representation" as a rendition condition, the document management service 3100 lists two candidate renditions of "representative image" and "PDF".

By displaying predefined rendition conditions for a designated document, the document management service 3100 provides a service to allow a user to select a certain one of the displayed rendition conditions. Furthermore, even if the user does not specify any certain rendition condition, the document management service 3100 displays the document in the form of a rendition based on a value predefined by an administrator of the multifunctional product 3001. This value is stored in the above-mentioned administrator configuration value storage area 3205.

It is noted that possible renditions may be limited corresponding to the structure of the multifunctional product 3001. Particularly, in renditions represented in the form of image formats, it is determined whether a document can be represented in the form of a designated rendition depending on availability of MLB 3054 for converting the image formats. Depending upon the structure of the multifunctional product 3001, the document management service 3100 changes the presented list of renditions and predefined renditions.

A rendition ID, which corresponds to a rendition identifier, is for user's use of rendition representation. Such a rendition ID is issued at time of presenting a rendition thereof.

FIG. 47 shows an exemplary rendition ID according to the third embodiment.

Referring to FIG. 47, the illustrated rendition ID is set as "DocNum=c101;tiff;raw;200dpi". This rendition ID represents that a user requests a document having "fileID" of "c101" in the form of "tiff" format and in the resolution of 200dpi (dots per inch) without compression.

FIG. 48 shows another rendition ID according to the third embodiment.

Referring to FIG. 48, the illustrated rendition ID is set as "Rdid=j4r0gos". This rendition ID represents the same contents as the rendition ID shown in FIG. 47 in the simpler form by using a correspondence table shown in FIG. 49.

FIG. 49 shows an exemplary rendition ID correspondence table of one or more rendition IDs according to the third embodiment.

Referring to FIG. 49, the illustrated rendition ID correspondence table represents a correspondence between simpler rendition IDs and pairs of "fileID" and possible renditions corresponding to the individual rendition IDs. Based upon the rendition ID correspondence table, the simpler rendition ID "j4r0gos" corresponds to the document having "fileID" of "c101" in the form of "tiff" format and in the resolution of "200dpi" without compression.

A description is given, with reference to FIG. 50 through FIG. 52, of content element IDs corresponding to document elements in conjunction with renditions according to the third embodiment.

A content element is defined as an element composing all or a portion of a document represented in the form of a rendition. Depending upon renditions, it is determined what portion of the document is generated from the content element.

For example, in a rendition where a document is represented in JFIF (JPEG File Interchange Format), it is impossible to represent a plurality of image pages in the document collectively due to characteristics of JFIF. Accordingly, a user is allowed to designate only one arbitrary page of the document.

Given a rendition ID, the document management service 3100 provides a user with a list of one or more content elements of a document that the user is allowed to designate in the rendition corresponding to the rendition ID. In addition, for the purpose of identification of individual content elements, content element IDs are issued to the user at this time.

FIG. 50 shows an exemplary content element ID according to the third embodiment.

Referring to FIG. 50, the illustrated content element ID is set as "DocNum=c101;tiff;raw;200dpi;p12". This content element ID represents that a user requests the twelfth page of the document having "fileID" of "c101" in the form of "tiff" format and the resolution of "200dpi" without compression.

FIG. 51 shows another exemplary content element ID according to the third embodiment.

Referring to FIG. 51, the illustrated content element ID is set as "Ceid=j4r0gos". This content element ID represents the same contents as the content element ID shown in FIG. 50 in the simpler form by using a correspondence table shown in FIG. 52.

FIG. 52 shows an exemplary content element ID correspondence table according to the third embodiment.

Referring to FIG. 52, the illustrated content element ID correspondence table represents a correspondence between simpler content element IDs and pairs of "fileID" and possible content elements corresponding to the individual content element IDs. Based upon the content element ID correspondence table, the simpler content element ID "j4r0gos" corresponds to the twelfth page of the document having "fileID" of "c101" in the form of "tiff" format and in the resolution of "200dpi" without compression.

In summary, the document management service 3100 uses renditions and content elements to provide some services.

A description is given, with reference to FIG. 53 through FIG. 58, of some tables of the document management service 3100 according to the third embodiment.

Referring back to FIG. 46, the URL table 3207 indicates a correspondence between content element IDs and URLs. In the following, three types of URL tables 3207 are introduced.

FIG. 53 shows an exemplary URL table according to the third embodiment.

Referring to FIG. 53, the illustrated URL table comprises two data items: content element IDs and URLs. In the illustrated URL table, the content element ID of "id0001" corresponds to the URL of "http://xxx/aaa/bbb.img".

FIG. 54 shows another exemplary URL table according to the third embodiment.

Referring to FIG. 54, the illustrated URL table comprises two data items: content element IDs and differences between URLs. Here, the term "differences between URLs" means code portions different from other URLs. In the illustration, the given three URLs include the same substring "http://xxx/aaa/". In other words, the three URLs are different from each other with respect to only substrings subsequent to the substring "http://xxx/aaa/". In the illustrated URL table, only the differences are recorded therein.

FIG. 55 shows another exemplary URL table according to the third embodiment.

Referring to FIG. 55, the illustrated URL table comprises four data items: document IDs, renditions, pages and URL differences, which are decomposed from content element IDs. In the illustrated example, if the document ID, the rendition and the page are set as "0003", "JPEG, 1" and "1", respectively, the corresponding URL is determined as "zzz.img".

FIG. 56 shows an exemplary conversion request queue according to the third embodiment.

Referring to FIG. 56, a conversion request queue 3208 includes information sets each of which comprises data items: "source page ID", "destination page ID", "conversion status", "conversion content" and "request expiration time".

The data items "source page ID" and "destination page ID" indicate the page ID of a conversion source and the page ID of a conversion destination, respectively. The data item "conversion status" indicates one of conversion conditions:
"waiting", "converting", "converted" and "waiting for deletion". The conversion status "waiting" represents a status of waiting for conversion. The conversion status "converting" represents a status of currently converting data. The conversion status "converted" represents a status of completing conversion. The conversion status "waiting for deletion" represents a status of deleting a converted document.

The data item "conversion content" may indicates a designated format such as "tiff", a designated compression type such as "JPEG", a designated resolution, a designated magnification and a designated number of colors, for example. The data item "request expiration time" indicates an expiration time of the conversion request.

FIG. 57 shows an exemplary document registration table according to the third embodiment.

Referring to FIG. 57, for the purpose of registration of a document from the dedicated application 3092, a document ID to which an empty content element is newly added is registered in the document registration table 3210. If data are written in the empty content element, this registration is canceled. Also, even if another empty content element is to be further added before writing of data in the registered empty content element, the registered empty element is unregistered or this addition has to wait until a system busy error is issued after lapse of a predefined time.

FIG. 58 shows an exemplary session management table according to the third embodiment.

Referring to FIG. 58, the session management table 3209 is for management of currently executed sessions. In the session management table 3209, session IDs of the current executed sessions are registered. These session IDs are used not to accept requests received for session IDs not registered in the session management table 3209.

A description is given, with reference to FIG. 59 through FIG. 61, of a content element acquisition operation according to the third embodiment.

In the content element acquisition operation, the Web browser 3091 or the dedicated application 3092 acquires an image from the multifunctional product 3001.

FIG. 59 is a diagram to roughly explain an exemplary content element acquisition process according to the third embodiment.

Referring to FIG. 59, the Web browser 3091 sends a requested image format and a requested page number to the multifunctional product 3001 at step S3101. These requested items are sent to the document management service 3100 via HTTPD 3103 and the Web page service 3101.

At step S3102, the document management service 3100 identifies a rendition based on the requested image format and fixed parameters, such as a resolution, predefined by an administrator of the multifunctional product 3001.

At step S3103, the document management service 3100 identifies a content element from the requested page number.

At step S3104, the document management service 3100 converts a page image in the storage area 3206 into a specified document (content element).

At step S3105, the created document is downloaded in the Web browser 3091.

FIG. 60 is a diagram to explain an exemplary content element acquisition operation in detail according to the third embodiment.

Referring to FIG. 60, illustrated arrows 3150, 3151 and 3152 indicate flow of an image. The arrow 3150 indicates a case of converting a rendition in software. In this case, a rendition conversion submodule set 3112 is used. The arrow 3151 indicates flow of an image in a case where a converted image or an image unnecessary for conversion is acquired from a storage area. Also, the arrow 3152 indicates flow of an image in a case where MLB 3054 has to be used to convert the image.

In these fashions, the Web browser 3091 and the dedicated application 3092 acquire a content element of a designated document in the form of a rendition that the multifunctional product 3001 can provide via the network 3090.

FIG. 61 is a sequence diagram of an exemplary content element acquisition operation according to the third embodiment. In FIG. 61, the term "client" is used. In this embodiment, the term "client" means the Web browser 3091 or the dedicated application 3092, and hereinafter the term "client" has the same mean.

Referring to FIG. 61, a client 3113 sends a session start request to the document management service 3100 at step S3201. At step S3202, the document management service 3100 sends a session ID to the client 3113. At step S3203, the client 3113 sends a document list request together with the session ID to the document management service 3100.

At step S3204, the document management service 3100 sends a list of document IDs. At step S3205, the client 3113 sends a session ID and a document ID so as to lock the designated document. In this lock, the designated document is exclusively controlled. At step S3206, the document management service 3100 informs the client 3113 that the designated document has been successfully locked.

At step S3207, the client 3113 issues an acquisition request to acquire candidates for renditions. At step S3208, the document management service 3100 sends the candidates for renditions to the client 3113.

FIG. 62 shows exemplary rendition candidates according to the third embodiment.

Referring to FIG. 62, a rendition candidate is provided by sandwiching between tags "<renditionCandidates>" and "</renditionCandidates>". In the illustrated example, "pdf;mono;600dpi" is one of listed rendition candidates.

Referring back to FIG. 61, the client 3113 sends to the document management service 3100 an acquisition request for a rendition selected among the rendition candidates. At step S3210, the document management service 3100 sends the requested rendition ID together with the rendition and the property.

A description is given, with reference to FIG. 63 through FIG. 65, of a rendition candidate acquisition operation according to the third embodiment.

FIG. 63 is a sequence diagram of an exemplary rendition candidate acquisition operation according to the third embodiment.

Referring to FIG. 63, HTTPD 3103 sends a SOAP request to the SOAP processing handler 3104 at step S3301. At step S3302, the SOAP processing handler 3104 sends a rendition condition to the method processing module 3105. At step S3303, the method processing module 3105 sends a document bibliography information acquisition request to MCS 3035.

At step S3304, MCS 3035 acquires document bibliography information from the document bibliography information storage area 3201 and sends a document bibliography information acquisition response to the method processing module 3105.

At step S3305, the method processing module 3105, in response to receipt of the document bibliography information acquisition response, creates a list of rendition candidates based on the document bibliography information. Then, the method processing module 3105 sends the listed rendition candidates to the SOAP processing handler 3104. At step S3306, the SOAP processing handler 3104 sends a SOAP response to HTTPD 3103.

FIG. 64 shows another exemplary rendition candidate acquisition operation using a value predefined by an administrator according to the third embodiment.

Referring to FIG. 64, HTTPD 3103 sends a SOAP request to the SOAP processing handler 3104 at step S3401. At step S3402, the SOAP processing handler 3104 sends a rendition condition to the method processing module 3105.

At step S3403, the method processing module 3105 sends a document bibliography information acquisition request to MCS 3035. At step S3404, MCS 3035 acquires document bibliography information from the document bibliography information storage area 3201 and then sends a document bibliography information acquisition response to the method processing module 3105.

At step S3405, the method processing module 3105 sends an administrator configuration value acquisition request to SCS 3038. At step S3406, SCS 3038 acquires an administrator configuration value from the administrator configuration value storage area 3205 and then sends an administrator configuration acquisition response to the method processing module 3105.

At step S3407, the method processing module 3105 identifies one or more possible renditions based on the document bibliography information and the administrator configuration value. Then, the method processing module 3105 sends the rendition candidates to the SOAP processing handler 3104. At step S3408, the SOAP processing handler 3104 sends a SOAP response to HTTPD 3103.

In this manner, the rendition candidates are sent to the client 3113.

FIG. 65 shows a subsequent process of the exemplary rendition candidate acquisition operation according to the third embodiment.

Referring to FIG. 65, the client 3113 sends a content element acquisition request to the document management service 3100 at step S3501. At step S3502, the document management service 3100 sends a list of one or more content element IDs to the client 3113. At step S3503, the client 3113 sends a content element location acquisition request to the document management service 3100. At step S3504, the document management service 3100 sends an address of a content element and request contents required for the acquisition.

At step S3505, the client 3113 sends an image acquisition request based on the address of the acquired content element. At step S3506, the document management service 3100 sends an image conversion request to MCS 3035. At step S3507, MCS 3035 sends an image conversion response to the document management service 3100. MCS 3035 performs image conversion as needed.

At step S3508, the document management service 3100 sends an image acquisition request to MCS 3035. At step S3509, if the image to be acquired is a converted image or an image unnecessary for conversion, MCS 3035 sends the image to the document management service 3100.

At step S3510, the document management service 3100, in response to receipt of the image, sends the image to the client 3113. At step S3511, the client 3113, in response to receipt of the image, informs the document management service 3100 that the designated document should be unlocked. At step S3512, the document management service 3100 informs the client 3113 that the designated document has been successfully unlocked. At step S3513, the client 3113 informs the document management service 3100 that the session has been completed.

A description is given, with reference to FIG. 66 and FIG. 67, of a content element URL acquisition operation according to the third embodiment.

FIG. 66 shows an exemplary content element URL acquisition operation according to the third embodiment. In the illustrated content element URL acquisition operation, if conversion is necessary, the conversion is performed in advance.

Referring to FIG. 66, HTTPD 3103 sends a SOAP request to the SOAP processing handler 3104 at step S3601. At step S3602, the SOAP processing handler 3104 sends a URL acquisition request to the method processing module 3105. At step S3603, the method processing module 3105 sends a page bibliography information request to MCS 3035.

At step S3604, MCS 3035 acquires page bibliography information from the page bibliography information storage area 3202 and then sends a page bibliography information acquisition response to the method processing module 3105. At step S3605, the method processing module 3105 determines whether MLB 3054 has to perform conversion for the purpose of acquisition of a content element based on the page bibliography information. If necessary, the method processing module 3105 adds a conversion request to the conversion request queue 3208.

At step S3606, the method processing module 3105 sends an image conversion request to the image conversion control module 3110. At step S3607, the image conversion control module 3110 sends an empty document and page creation request to MCS 3035.

At step S3608, MCS 3035 sends a page image area reservation request to IMH 3042. At step S3609, IMH 3042 informs MCS 3035 that the page image area has been reserved. At step S3610, MCS 3035 sends an empty document and page creation response to the image conversion control module 3110.

At step S3611, the image conversion control module 3110 sends an image conversion request to MCS 3035. At step S3612, MCS 3035 sends the image conversion request to IMH 3042. Then, IMH 3042 and MEU 3045, which are collectively illustrated as IMH&MEU 3114, perform image conversion. At step S3616, IMH&MEU 3114, after completion of the image conversion, informs MCS 3035 that the image conversion has been completed.

At step S3617, MCS 3035 sends an image conversion response to the image conversion control module 3110. At step S3618, the image conversion control module 3110 sets a status of the conversion request in the conversion request queue 3208 as "converted".

In parallel with the above steps, the method processing module 3105 determines a URL of the content element after step S3605. At step S3613, the method processing module 3105 registers the determined URL and the corresponding ID in the URL table 3207. At step S3614, the method processing module 3105 sends a URL acquisition response to the SOAP processing handler 3104. At step S3615, the SOAP processing handler 3104 sends a SOAP response to HTTPD 3103.

FIG. 67 shows another exemplary content element URL acquisition operation in cases where conversion cannot be performed in advance or the conversion is not necessary.

Referring to FIG. 67, HTTPD 3103 sends a SOAP request to the SOAP processing handler 3104 at step S3701. At step S3702, the SOAP processing handler 3104 sends an acquisition URL request to the method processing module 3105. At step S3703, the method processing module 3105 sends a page bibliography information request to MCS 3035.

At step S3704, MCS 3035 acquires page bibliography information from the page bibliography information storage area 3202 and then sends a page bibliography information response to the method processing module 3105.

At step S3705, based on the page bibliography information, the method processing module 3105 determines whether MLB 3054 has to perform conversion for the purpose of acquisition of a content element. At this time, the method processing module 3105 determines a URL without execution of the conversion. Then, the method processing module 3105 registers the determined URL and the corresponding ID in the URL table 3207.

At step S3706, the method processing module 3105 sends an acquisition URL response to the SOAP processing handler 3104. At step S3708, the SOAP processing handler 3104 sends a SOAP response to HTTPD 3103.

FIG. 68 is a sequence diagram of another exemplary content element acquisition operation according to the third embodiment. It is noted that the image acquisition is not limited to use of HTTPD 3103. The image acquisition may use FTPD 3102, but the content element acquisition operation is described by means of HTTPD 3103 as in the previous operation. Also, the described operation is an subsequent operation of the content element URL acquisition operation in FIG. 66.

Referring to FIG. 68, HTTPD 3103 sends a request to the image acquisition module 3107 at step S3801. At step S3802, the image acquisition module 3107 identifies ID corresponding to the requested URL with reference to the URL table 3207.

At step S3803, the image acquisition module 3107 sends a page bibliography information request to MCS 3035. At step S3804, MCS 3035 acquires page bibliography information from the page bibliography information storage area 3202 and then sends a page bibliography information response to the image acquisition module 3107.

Based upon the page bibliography information, the image acquisition module 3107 determines whether MLB 3054 has to perform conversion to acquire a content element.

At step S3805, in parallel with the above operation, after completion of the image conversion, IMH&MEU 3114 informs MCS 3035 that the image conversion has been completed. At step S3806, MCS 3035 sends an image conversion response to the image conversion control module 3110. At step S3807, the image conversion control module 3110 changes the status of the conversion request in the conversion request queue 3208 into "converted". It is noted that this process corresponds to steps S3616 through S3618 in FIG. 66.

At step S3808, the image acquisition module 3107 refers to the status of the conversion request, and waits until the status is changed into "converted". In response to the change into "converted", the image acquisition module 3107 acquires a page ID of the converted page image.

At step S3809, the image acquisition module 3107 sends a converted image acquisition request to MCS 3035. At step S3810, MCS 3035 requests IMH&MEU 3114 to acquire the converted image. At step S3811, the image acquisition module 3107 acquires the converted image.

In response to the acquisition of the image, if the rendition of the image has to be further converted in the image acquisition module 3107, the image acquisition module 3107 performs conversion on the image.

At step S3814, the image acquisition module 3107 changes the status of the conversion request in the conversion request queue 3208 into "waiting for deletion". At step S3815, the image acquisition module 3107 sends the image to HTTPD 3103. At step S3812, when the image conversion control module 3110 detects that the status of the conversion is changed into "waiting for deletion", the image conversion control module 3110 sends a document deletion request to MCS 3035. At step S3813, MCS 3035 deletes the document and then sends a document deletion response to the image conversion control module 3110.

FIG. 69 shows another exemplary content element acquisition operation according to the third embodiment. It is noted that the illustrated process is performed subsequently to the process in FIG. 67.

Referring to FIG. 69, HTTPD 3103 sends a request to the image acquisition module 3107 at step S3901. At step S3902, the image acquisition module 3107 identifies ID corresponding to the requested URL with reference to the URL table 3207.

At step S3903, the image acquisition module 3107 sends a page bibliography information request to MCS 3035. At step S3904, MCS 3035 acquires page bibliography information from the page bibliography information storage area 3202 and then sends a page bibliography information response to the image acquisition module 3107. Based upon the page bibliography information, the image acquisition module 3107 determines whether MLB 3054 has to perform conversion for the purpose of acquisition of a content element.

At step S3905, the image acquisition module 3107 sends a converted image acquisition request to MCS 3035. At step S3906, MCS 3035 requests IMH 42 to acquire the converted image. At step S3907, the image acquisition module 3107 acquires the converted image. In response to the acquisition of the converted image, if the rendition of the image has to be further converted in the image acquisition module 3107, the image acquisition module 3107 performs the conversion on the image. At step S3908, the image acquisition module 3107 sends the resulting image to HTTPD 3103.

FIG. 70 shows another exemplary content element acquisition operation according to the third embodiment. It is noted that this exemplary content element acquisition operation relates to acquisition from a storage area not managed by IMH 3042.

Referring to FIG. 70, HTTPD 3103 sends a request to the image acquisition module 3107 at step S4001. At step S4002, the image acquisition module 3107 identifies ID corresponding to the requested URL with reference to the URL table 3207. At step S4003, the image acquisition module 3107 sends a document bibliography information request to MCS 3035.

At step S4004, MCS 3035 acquires document bibliography information from the document bibliography information storage area 3201 and then sends a document bibliography information response to the image acquisition module 3107. It is noted that the document bibliography information response includes the address of the image to be acquired.

At step S4005, the image acquisition module 3107 acquires the image with reference to the address. In response to the acquisition of the image, if the rendition of the image has to be further converted in the image acquisition module 3107, the image acquisition module 3107 performs conversion on the image. At step S4006, the image acquisition module 3107 sends the resulting image to HTTPD 3103.

FIG. 71 shows an exemplary content element acquisition operation to acquire a content element from a storage area not managed by IMH 3042 in a case where conversion has to be further performed.

Referring to FIG. 71, HTTPD 3103 sends a request to the image acquisition module 3107 at step S4101. At step S4102, the image acquisition module 3107 identifies ID corresponding to the requested URL.

At step S4103, the image acquisition module 3107 sends a page bibliography information request to MCS 3035. At step S4104, MCS 3035 acquires page bibliography information from the page bibliography information storage area 3202 and then sends a page bibliography information response to the image acquisition module 3107. Based upon the page bibliography information, the image acquisition module 3107 determines whether MLB 3054 has to perform conversion for the purpose of acquisition of a content element.

At step S4105, if the conversion is necessary, the image conversion control module 3110 sends an image conversion request to MCS 3035. At step S4106, MCS 3035 requests IMH&MEU 3114 to convert the image. At step S4107, IMH&MEU 3114 reads the image from HDD 3065 and uses MLB 3054 to convert the image. Then, IMH&MEU 3114 sends the image to MCS 3035. At step S4108, MCS 3035 stores the image in HDD 3065 and writes the address of the storing location in the converted image address table 3211. At step S4110, MCS 3035 sends an image conversion response to the image acquisition module 3107.

At step S4111, the image acquisition module 3107 sends an address request for the image to MCS 3035. At step S4112, MCS 3035 checks the address of the stored image with reference to the converted image address table 3211. At step S4113, MCS 3035 sends an image address response to the image acquisition module 3107.

At step S4114, the image acquisition module 3107 acquires the image. Then, the image acquisition module 3107 determines whether the rendition of the acquired image has to be further converted. If the image should be converted, the image acquisition module 3107 performs conversion on the image. At step S4115, the image acquisition module 3107 sends the resulting image to HTTPD 3103.

FIG. 72 shows an exemplary content element acquisition operation in a case where the content element is document bibliography information.

Referring to FIG. 72, HTTPD 3103 sends a request to the image acquisition module 3107 at step S4201. At step S4202, the image acquisition module 3107 identifies ID corresponding to the requested URL with reference to the URL table 3207. Then, based upon the acquired ID, the image acquisition module 3107 determines what image area should be acquired.

At step S4203, the image acquisition module 3107 sends a document bibliography information request to MCS 3035. At step S4204, MCS 3035 acquires document bibliography information from the document bibliography information storage area 3201 and then sends a document bibliography information response to the image acquisition module 3107.

At step S4205, the image acquisition module 3107 arranges the acquired property in a predefined form such as XML format and then sends the arranged property to HTTPD 3103.

A description is give, with reference to FIG. 73 through FIG. 75, of an exemplary application of the above-mentioned content element acquisition operation.

FIG. 73 shows an screen for displaying listed representative images on the Web browser 3091 according to the third embodiment.

FIG. 74 and FIG. 75 show an exemplary operation to display a list of representative images as illustrated in FIG. 73.

Referring to FIG. 74, the Web browser 3091 sends a list representation acquisition request to HTTPD 3103 at step S4301. At step S4302, the list representation acquisition request is sent from HTTPD 3103 to the Web page service 3101.

At step S4303, the Web page service 3101 sends a session start request to the document management service 3100. At step S4304, the document management service 3100 sends a session ID to the Web page service 3101. At step S4305, the Web page service 3101 sends a document list acquisition request to the document management service 3100. At step S4306, the document management service 3100 sends a list of one or more document IDs to the Web page service 3101.

The following steps S4307 through S4316 in FIG. 75 are repeated as many times as the number of document IDs.

At step S4307, the Web page service 3101 sends a designated document lock request to the document management service 3100. At step S4308, the document management service 3100 informs the Web page service 3101 that the designated document has been successfully locked.

At step S4309, the Web page service 3101 sends a rendition acquisition request to the document management service 3100. At step S4310, the document management service 3100 sends the rendition ID and the property of the rendition to the Web page service 3101.

At step S4311, the Web page service 3101 sends a content element acquisition request to the document management service 3100. At step S4312, the document management service 3100 sends the content element ID and the property of the content element to the Web page service 3101.

Referring to FIG. 75, the Web page service 3101 sends a content element address request to the document management service at step S4313. At step S4314, the document management service 3100 sends URL of the content element to the Web page service 3101.

At step S4315, in response to the acquisition of URL of the representative image, the Web page service 3101 sends an unlock request for the locked designated document to the document management service 3100. At step S4316, the document management service 3100 sends a success response to the Web page service 3101.

By repeating the above steps, the Web page service 3101 can generate HTML (HyperText Markup Language) data including URLs of representative images, the number of which is equal to the number of acquired images, enclosed between tags.

At step S4317, the Web page service 3101 sends a list representation acquisition response to HTTPD 3103. At step S4318, the list representation acquisition response is sent to the Web browser 3091. At step S4319, the Web browser 3091 sends a representative image acquisition request to HTTPD 3103. At step S4320, HTTPD 3103 sends the representative image acquisition request to the document management service 3100.

At step S4321, the document management service 3100 acquires a representative image and sends a representative image acquisition response to HTTPD 3103. At step S4322, HTTPD 3103 sends the image to the Web browser 3091.

In this fashion, the Web browser 3091 displays HTML data including URLs of representative images enclosed between tags and acquires representative images of respective URLs. Steps S4319 through 4322 are repeated as many times as the number of displayed images.

At step S4323, after completing the acquisition of all representative images, the Web page service 3101 sends a session termination request to the document management service 3100.

A description is given, with reference to FIG. 76 and FIG. 77, of a certain image download operation to down load a certain image from the Web browser 3091.

FIG. 76 and FIG. 77 show an exemplary certain image download operation according to the third embodiment. In this operation, for example, a certain representative image is downloaded from a list of representative images as illustrated in FIG. 73.

Referring to FIG. 76, the Web page service 3101 sends a session start request to the document management service 3100 at step S4401. At step S4402, the document management service 3100 sends a session ID to the Web page service 3101.

At step S4403, the Web browser 3091 sends an available format acquisition request to acquire available formats of a certain document to HTTPD 3103. In the illustrated example, the image "F" on the screen 3153 is selected.

At step S4404, the acquisition request is sent from HTTPD 3103 to the Web page service 3101. At step S4405, the Web page service 3101 sends a rendition candidate acquisition request to the document management service 3100. At step S4406, the document management service 3100 sends one or more rendition candidates to the Web page service 3101.

At step S4407, in response to receipt of the rendition candidates, the Web page service 3101 creates HTML data in which a user can select desired one of the rendition candidates.

At step S4407, the Web page service 3101 sends an available format acquisition response to HTTPD 3103. At step S4408, the available format acquisition response is sent from HTTPD 3103 to the Web browser 3091. Here, for example, if the formats "tiff" and "JPEG" can be selected, "tiff" and "JPEG" are displayed on the screen 3154.

At step S4409, if one of the data formats "tiff" and "JPEG" is selected, the Web browser 3091 sends a certain format download request to HTTPD 3103. At step S4410, the download request is sent from HTTPD 3103 to the Web page service 3101. At step S4411, the Web page service 3101 generates a rendition condition from the selected format, and then sends a rendition acquisition request to the document management service 3100. At step S4412, the document management service 3100 sends one or more rendition candidates to the Web page service 3101.

Referring to FIG. 77, the Web page service 3101 sends a content element acquisition request to the document management service 3100 at step S4413. At step S4414, the document management service 3100 sends the content element ID and the property of the content element to the Web page service 3101.

At step S4415, the Web page service 3101 sends a content element address request to the document management service 3100. At step S4416, the document management service 3100 sends URL of the content element to the Web page service 3101. At step S4417, the Web page service 3101 generates HTML data in which a user can select a desired image to be downloaded, and then sends the generated HTML data as a certain format download response to HTTPD 3103.

At step S4418, the download response is sent from HTTPD 3103 to the Web browser 3091, and then the Web browser 3091 displays the screen 3155. At step S4419, in response to pushing of the button "download" in the screen 3155, the Web browser 3091 sends an image acquisition request to HTTPD 3103.

At step S4420, the image acquisition request is sent from HTTPD 3103 to the document management service 3100. At step S4421, the document management service 3100 sends an image to HTTPD 3103. At step S4422, HTTPD 3103 sends the image to the Web browser 3091. In response to receipt of the image, the Web browser 3091 can display the image "F" as illustrated in the screen 3156. At step S4423, the Web page service 3101 sends a session termination request to the document management service 3100.

A description is given, with reference to FIG. 78 and FIG. 79, of a content element registration operation according to the third embodiment.

In this operation, the multifunctional product 3001 can internally convert a content element received in the form of a certain rendition into the content element having different renditions depending on utilization purposes. If the content element registration operation and the above-mentioned content element acquisition operation are combined, it is possible to edit documents in the multifunctional product 3001 via the network 3090 by using the dedicated application 3092 in an ordinary computer, as illustrated in FIG. 78.

FIG. 78 is a diagram to explain an exemplary content element registration operation according to the third embodiment.

Referring to FIG. 78, MCS 3035 sets document renditions unnecessary for conversion and document renditions to be converted in the storage area 3206. The image conversion library 3109 converts a document whose input image format cannot be converted by MLB 3054 and that the image conversion library 3109 can convert. MLB 3054 is used for renditions required to be converted for the purpose of reuse as individual functions provided by the multifunctional product 3001.

FIG. 79 is a sequence diagram of an exemplary content element registration operation according to the third embodiment.

Referring to FIG. 79, the client 3113 sends a session start request to the document management service 3100 at step S4501. At step S4502, the document management service 3100 sends a session ID to the client 3113. At step S4503, the client 3113 sends an empty document creation request to the document management service 3100. At step S4504, the document management service 3100 sends the document ID to identify a created empty document to the client 3113.

At step S4505, the client 3113 sends a lock request to lock the empty document to the document management service 3100. At step S4506, the document management service 3100 informs the client 3113 that the empty document has been successfully locked.

At step S4507, the client 3113 sends a rendition candidate acquisition request to the document management service 3100. At step S4508, the document management service 3100 sends one or more rendition candidates to the client 3113.

At step S4509, the client 3113 sends a certain rendition in the rendition candidates to the document management service 3100. At step S4510, the document management service 3100 sends the rendition ID to the client 113.

FIG. 80 is a sequence diagram of an exemplary empty document creation operation according to the third embodiment.

Referring to FIG. 80, HTTPD 3103 sends a SOAP request to the SOAP processing handler 3104 at step S4601. At step S4602, the SOAP processing handler 3104 sends an empty document creation request to the method processing module 3105. At step S4603, the method processing module 3105 sends a document creation request to MCS 3035.

At step S4604, MCS 3035 identifies the document ID, and reserves and initializes an area of an empty document in the document bibliography information area 3201. At step S4605, MCS 3035 sends a document creation response to the method processing module 3105.

At step S4606, the method processing module 3105 sends a document invisualization request to MCS 3035. The document invisualization is an operation to make the created document invisible to components other than the method processing module 3105.

At step S4607, MCS 3035 sets to make the created document invisible. At step S4608, MCS 3035 sends a document invisualization response to the method processing module 3105. At step S4609, the method processing module 3105 sends the document ID to the SOAP processing handler 3104. At step S4610, the SOAP processing handler 3104 sends a SOAP response to HTTPD 3103.

FIG. 81 is a sequence diagram of an exemplary content element registration operation according to the third embodiment.

Referring to FIG. 81, the client 3113 sends a new content element creation request to the document management service 3100 at step S4701. At step S4702, the document management service 3100 sends an empty page creation request to MCS 3035.

At step S4703, MCS 3035 sends an empty page creation response to the document management service 3100. At step S4704, the document management service 3100 sends the content element ID to the client 3113. At step S4705, the client 3113 sends an empty page location request to the document management service 3100. The empty page location means URL in which the empty page is placed. At step S4706, the document management service 3100 sends the URL to the client 3113.

At step S4707, the client 3113 sends an image to the document management service 3100. At step S4708, the document management service 3100 sends the image to MCS 3035. At step S4709, the document management service 3100 sends an image conversion request to MCS 3035. At step S4710, MCS 3035 converts the image as needed and then sends an image conversion response to the document management service 3100.

At step S4711, the client 3113 sends the property of the content element to the document management service 3100. At step S4712, the document management service 3100 informs the client 3113 that the property has been successfully set.

FIG. 82 is a sequence diagram of an exemplary content element creation operation corresponding to steps S4701 through S4704 in FIG. 81.

Referring to FIG. 82, HTTPD 3103 sends a SOAP request to the SOAP processing handler 3104 at step S4801. At step S4802, the SOAP processing handler 3104 sends the document ID and the registered property to the method processing module 3105.

At step S4803, the method processing module 3105 refers the document rewrite table 3212. At step S4804, the method processing module 3105 makes registration in the document rewrite table 3212. Here, the document rewrite table 3212 is used to rewrite a document. It is noted that step S4803 is executed for checking whether the corresponding document has been registered.

At step S4805, the method processing module 3105 sends a new page creation request to MCS 3035. At step S4806, MCS 3035 adds a page entry in the document management data storage area 3203 (ref. FIG. 44). At step S4807, MCS 3035 reserves and initializes a page bibliography area.

At step S4808, MCS 3035 sends a page creation request to IMH 3042. At step S4809, IMH 3042 creates a page and sends a page creation response to MCS 3035. At step S4810, MCS 3035 sends a new page creation response to the method processing module 3105. At step S4811, the method processing module 3105 sends the content element ID to the SOAP processing handler 3104. At step S4812, the SOAP processing handler 3104 sends a SOAP response to HTTPD 3103.

FIG. 83 a sequence diagram of an exemplary content element acquisition operation corresponding to steps S4705 and S4706 in FIG. 81.

Referring to FIG. 83, HTTPD 3103 sends a SOAP request to the SOAP processing handler 3104 at step S4901. At step S4902, the SOAP processing handler 3104 sends a registration URL acquisition request to the method processing module 3105.

At step S4903, the method processing module 3105 identifies the URL and registers the URL and the corresponding ID in the URL table 3207. At step S4904, the method processing module 3105 sends the URL to the SOAP processing handler 3104. At step S4905, the SOAP processing handler 3104 sends a SOAP response to HTTPD 3103.

FIG. 84 is a sequence diagram of an exemplary content element registration operation subsequent to step S4707 in FIG. 81. This operation is for a case where MLB 3054 is necessary for registration of a content element.

Referring to FIG. 84, HTTPD 3103 sends a request to the image acquisition module 3107 at step S5001. At step S5002, the image acquisition module 3107 identifies ID corresponding to the requested URL with reference to the URL table 3207. At step S5003, the image acquisition module 3107 sends a page bibliography information request to MCS 3035.

At step S5004, MCS 3035 acquires page bibliography information from the page bibliography information storage area 3202. At step S5005, MCS 3035 sends a page bibliography information response to the image acquisition module 3107. At step S5006, the image acquisition module 3107 compares an input image to the preset page bibliography information and determines whether MLB 3054 should perform conversion for the purpose of registration of a content element. If necessary, the image acquisition module 3107 sends an empty document and page creation request to MCS 3035.

At step S5007, MCS 3035 sends an area reservation request to IMH&MEU 3114. At step S5008, IMH&MEU 3114 informs MCS 3035 that the area has been successfully reserved. At step S5009, MCS 3035 sends an empty document and page creation response to the image acquisition module 3107.

The image acquisition module 3107 stores the image (S5010), adds a conversion request in the conversion request queue 3208 (S5011), and sends the conversion request to the image conversion control module 3110 (S5012).

At step S5013, the image acquisition module 3107 sends an image conversion request to MCS 3035. At step S5014, MCS 3035 sends the image conversion request to IMH&MEU 3114. At step S5015, IMH&MEU 3114 reads an image from HDD 3065 and uses MLB 3054 to convert the image. Then, IMH&MEU 3114 informs MCS 3035 that the image has been converted. At step S5016, MCS 3035 sends an image conversion response to the image conversion control module 3110.

At step S5017, the image conversion control module 3110 changes the status of the conversion request into "converted". At step S5018, when the status of the conversion request is changed into "converted", the image acquisition module 3107 sends a document deletion request to MCS 3035.

At step S5019, MCS 3035 sends a document deletion response to the image acquisition module 3107. At step S5020, when the image acquisition module 3107 creates a document in the empty document, the document acquisition module 3107 cancels the document ID registered in the document registration table 3210.

FIG. 85 is a sequence diagram of an exemplary content element registration operation corresponding to the operation subsequent to step S4707 in FIG. 81. It is noted that this operation is for a case where MLB 3054 is not necessary for registration of a content element.

Referring to FIG. 85, FTPD 3102 sends a request to the image acquisition module 3107 at step S5101. At step S5102, the image acquisition module 3107 identifies ID corresponding to the requested URL with reference to the URL table 3207. At step S5103, the image acquisition module 3107 sends a page bibliography information request to MCS 3035.

At step S5104, MCS 3035 acquires page bibliography information from the page bibliography information storage area 3202. At step S5105, MCS 3035 sends a page bibliography information response to the image acquisition module 3107. At step 5106, the image acquisition module 3107 compares an input image to the preset page bibliography information and determines whether MLB 3054 is necessary for registration of a content element. If necessary, the image acquisition module 3107 sends an empty document and page creation request to MCS 3035. Then, the image acquisition module 3107 stores and registers the input image in the previously acquired page information.

At step S5107, the image acquisition module 3107 sends a page bibliography information registration request to MCS 3035. MCS 3035 registers page bibliography information (S5108) and sends a page bibliography information registration response to the image acquisition module 3107. At step S5110, in response to the creation of a document in an empty document, the image acquisition module 3107 cancels the document ID registered in the document registration table 3210.

FIG. 86 is a sequence diagram of an exemplary content element registration operation corresponding to the operation subsequent to step S4707 in FIG. 81. It is noted that this operation is for a case where a content element is property.

Referring to FIG. 86, HTTPD 3103 sends a request to the image acquisition module 3107 at step S5201. At step S5202, the image acquisition module 3107 identifies ID corresponding to the requested URL with reference to the URL table 3207.

At step S5203, based upon the identified ID, the image acquisition module 3107 whether the content element relates to property. Then, the image acquisition module 3107 sends a bibliography information request to MCS 3035. At step S5204, MCS 3035 acquires document bibliography information from the document bibliography information storage area 3201.

At step S5205, MCS 3035 sends a document bibliography information response to the image acquisition module 3107. At step S5206, the image acquisition module 3107 parses input data, converts the input data into an internal data format, and overwrites a corresponding portion of acquired document information. Then, the image acquisition module 3107 sends a document bibliography information registration request to MCS 3035.

MCS 3035 registers document bibliography information (S5207), and sends a document bibliography information registration response to the image acquisition module 3107 (S5208). At step S5209, in response to registration of a document, the image acquisition module 3107 cancels the document ID registered in the document registration table 3210.

FIG. 87 is a sequence diagram of an exemplary content element registration operation corresponding to a subsequent operation in FIG. 81.

Referring to FIG. 87, the client 3113 sends a rendition request to the document management service 3100 at step S5301. At step S5302, the document management service 3100 sends a rendition ID to the client 3113. At step S5303, the client 3113 sends a new content element creation request to the document management service 3100.

At step S5304, the document management service 3100 sends a content element ID to the client 3113. At step S5305, the client 3113 sends a bibliography information location request to the document management service 3100. At step S5306, the document management service 3100 sends the address of the location of the bibliography information to the client 3113. At step S5307, the client 3113 places the bibliography information in the address area.

At step S5308, the client 3113 sets property of a document. At step S5309, the document management service 3100 informs the client 3113 that the property of the document has been successfully set.

At step S5310, the client 3113 sends an unlock request for the document. At step S5311, the document management service 3100 informs the client 3113 that the document has been successfully unlocked. At step S5312, the client 3113 informs the document management service 3100 that the session has been completed.

FIG. 88 is a sequence diagram of an exemplary document property registration operation according to the third embodiment.

Referring to FIG. 88, HTTPD 3103 sends a SOAP request to the SOAP processing handler 3104 at step S5401. At step S5402, the SOAP processing handler 3104 sends a property registration request to the method processing module 3105.

At step S5403, the method processing module 3105 sends a document visualization request to MCS 3035. It is noted that the document visualization is an operation to make a created document viewable for components other than the method processing module 3105.

At step S5404, MCS 3035 widens a visible range included in document bibliography information so that not only the document management service 3100 but also all applications can view the created document. At step S5405, MCS 3035 sends a document visualization response to the method processing module 3105.

At step S5406, the document visualization response is sent from the method processing module 3105 to the SOAP processing handler 3104. At step S5407, the SOAP processing handler 3104 sends a SOAP response to HTTPD 3103.

A description is given, with reference to FIG. 89, of edition using the above-mentioned rewrite operation according to the third embodiment.

FIG. 89 is a diagram to explain prevention of image degradation according to the third embodiment.

In a case where a document is fetched in the form of an image-related rendition from the multifunctional product 3001 and the document is returned in the multifunction product 3001 after some modification or processing, it is desirable that the image quality of the document be degraded as little as possible even if the document is iteratively fetched and registered.

Referring to FIG. 89, the illustrated document comprises pages formed by various types of image formation means such as a scanner and a copier. In such a document, since the individual pages are stored in an image format optimized by HDD 3065 or selected by a user, it is difficult to fetch the pages as the document collectively without image degradation.

In order to overcome the difficulty, the multifunctional product 3001 may be configured to select a less degraded or no degraded image format in a collection of image formats that can be fetched from and returned in the multifunctional product 3001 in comparison with the quality of a source image.

In a case where an image is fetched from the multifunctional product 3001 to the dedicated application 3092, the document image having a format or a compression type depending on HDD 3065 is converted into a general degradation-free format and then the resulting document image is delivered to the dedicated application 3092.

In contrast, in a case where a document image is rewritten from the dedicated application 3092 to the multifunctional product 3001, even if the document image is edited, rewritten, stored and reused by the dedicated application 3092, it is possible to ensure image quality similar to the document image without edition.

In this fashion, it is possible to prevent image degradation of a document.

A description is given, with reference to FIG. 90 and FIG. 91, of a backup operation of an image according to the third embodiment.

FIG. 90 shows an exemplary operation panel 3053 of the multifunctional product 3001. FIG. 91 is a diagram to explain an exemplary backup operation according to the third embodiment.

Referring to FIG. 90, the multifunctional product 3001 allows the client 3113 to back up an image by user's pushing of a backup button 3093.

While the backup function is effective, copied images are stored in a storage area. Accordingly, the images are backed up by fetching of the images to the client. During the backup function being effective, if the print button 3094 is made active without setting a certain rendition condition, the multifunctional product 3001 backs up images in the form of a rendition stored in the multifunctional product 3001 without rendition conversion.

Specifically, as shown in FIG. 91, it is periodically checked whether there is a new backup document. If such a new backup document is found, the document is fetched in the form of a rendition in which a predefined format can be implemented. In this fashion, even if a document is backed up to a client via a network in the active printing status, it is possible to maintain the same image quality as an image before the backup operation.

A multifunctional product according to a fourth embodiment of the present invention is described.

In the fourth embodiment, a multifunctional product can efficiently convert respective renditions of one or more images and provide the converted images to a requesting client. A multifunctional product according to the fourth embodiment, although is not limited to the following, can be implemented by the multifunctional product 3001 having the functional structure shown in FIG. 39 and the hardware configuration shown in FIG. 40. Thus, the fourth embodiment is described by using the multifunctional product 3001.

A description is give, with reference to FIG. 92 through FIG. 94, of an outline of an exemplary content element acquisition operation according to the fourth embodiment.

FIG. 92 and FIG. 93 are sequence diagrams of an exemplary content element acquisition operation according to the fourth embodiment. This content element acquisition operation can be performed by using at least one of HTTPD 3101 and FTPD 3102.

Referring to FIG. 92, HTTPD 3101 sends a request to the image acquisition module 3107 at step S6001. At step S6002, in response to receipt of the request, the image acquisition module 3107 identifies ID corresponding to the requested URL with reference to the URL table 3207.

At step S6003, the image acquisition module 3107 sends a page bibliography information request to MCS 3035. At step S6004, MCS 3035 acquires page bibliography information from the page bibliography information storage area 3202 and sends the page bibliography information to the image acquisition module 3107. Based upon the page bibliography information, the image acquisition module 3107 determines whether MLB 3054 should be used to perform image conversion for the purpose of acquisition of a content element.

In parallel with the operation of the image acquisition module 3107 and the image conversion control module 3110, after completion of the image conversion, IMH&MEU 3114 informs MCS 3035 that the image conversion has been completed at step S6005. At step S6006, in response to receipt of the notice, MCS 3035 sends an image conversion response to the image conversion control module 3110. At step S6007, in response to receipt of the image conversion response, the image conversion control module 3110 changes the status of the conversion request in the conversion request queue 3208 into "converted".

At step S6008, the image acquisition module 3107 refers the status of the conversion request and waits until the conversion request is changed into "converted". In response to the status change into "converted", the image acquisition module 3107 acquires a page ID of the converted image. At step S6009, the image acquisition module 3107 sends a converted image acquisition request to MCS 3035. At step S6010, in response to receipt of the converted image acquisition request, MCS 3035 requests IMH 3042 the converted image. At step S6011, IMH 3042 instructs the image acquisition module 3107 to send the converted image in HDD 3065.

If the request from HTTPD 3103 is for an image having a rendition different from the stored rendition of the image, in other words, if the rendition of the image acquired by the image acquisition module 3107 further has to be converted into the requested rendition in the image acquisition module 3107, the image acquisition module 3107 converts the rendition of the acquired image into the requested rendition. Then, the image acquisition module 3107 changes the status of the conversion request in the conversion request queue 3208 into "waiting for deletion" at step S6014, and sends the converted image to HTTPD 3103 at step S6015.

If the image conversion control module 3110 finds that the status of the conversion request is changed into "waiting for deletion", the image conversion control module 3110 sends a document deletion request to MCS 3035 at step S6012. At step S6013, in response to receipt of the document deletion request, MCS 3035 deletes the designated document and sends the document deletion request to the image conversion control module 3107 to delete the image at step S6013.

In this fashion, if only one image should be converted in response to a request from the client 3113, the multifunctional product 3001 can convert the image in accordance with the above operation.

FIG. 94 is a diagram to explain a cause to increase processing time to acquire a plurality of content elements sequentially.

Referring to FIG. 94, in a case where a request from the client 3113 is for a rendition in which a plurality of images cannot be included such as JFIF format and further in response to the request, a plurality of images have to be converted, successive execution of the above operation may increase image transmission wait time, which is illustrated as the length of the arrow A, and image conversion wait time, which is illustrated as the length of the arrow B, as in conventional techniques.

In order to alleviate the problem, the multifunctional product 3001 may perform the following operation in such a case.

A description is given, with reference to FIG. 95, of a multiple content element acquisition operation to acquire a document composed of a plurality of images from the multifunctional product 3001 according to the fourth embodiment.

FIG. 95 is a sequence diagram of an exemplary multiple content element acquisition operation according to the fourth embodiment. The illustrated acquisition operation is for a case where it takes shorter time for MCS 3035 to convert the plurality of images than for the document management service 3100 to transmit the plurality of images to the client 3113.

Referring to FIG. 95, the client 3113 sends a first content element request to the document management service 104 at step S6101. At step S6102, in response to receipt of the first content element request, the document management service 3100 sends a content element response to the client 3113. At step S6103, in response to receipt of the content element response, the client 3113 requests the document management service 3100 the location of the content element (URL). At step S6104, in response to receipt of the content element location, the document management service 3100 registers a conversion request in the conversion request queue 3208.

At step S6105, the image conversion control module 3110 monitors for the conversion request queue 3208. At step S6106, in response to the registration of the conversion request, the image conversion control module 3110 sends an image conversion request to MCS 3035. At step S6107, in response to receipt of the image conversion request, MCS 3035 starts image conversion corresponding to the image conversion request. At step S6107, after completion of the image conversion, MCS 3035 sends an image conversion response to the image conversion control module 3110. At step 6108, in response to receipt of the image conversion response, the image conversion control module 3110 changes the status of the conversion request in the conversion request queue 3208 into "converted". At step S6109, after the status change into "converted", the image conversion control module 3110 monitors back for the conversion request queue 3208.

At step S6110, in response to registration of an additional conversion request, the image conversion control module 3110 sends an image conversion request to MCS 3035. In response to receipt of the image conversion request, MCS 3035 starts image conversion corresponding to the image conversion request.

At step S6111, after registration of the conversion request, the document management service 3100 sends a content element location response to the client 3113. At step S6112, in response to receipt of the content element location response, the client 3113 informs the document management service 3100 that the content element has been acquired. The content element acquisition operation of the document management service 3100 is described in detail below. Here, even when the document management service 3100 has not acquired the requested image from MCS 3035, for example, due to incompletion of the image conversion, the document management service 3100 registers in the conversion request queue an image predicted to be converted immediately after the requested image if such an image is found at step S6113.

At step S6114, after completion of the image conversion on the requested image, specifically, in response to status change of the requested image into "converted", the document management service 3100 sends an image acquisition request to MCS 3035. At step S6115, in response to receipt of the image conversion request, MCS 3035 reads the converted image from the storage area 3065 and sends the image to the document management service 3100. At step S6116, in response to receipt of the converted image, the document management service 3100 sends the image to the client 3113.

At step S6117, after completion of the image conversion requested at step S6110, MCS 3035 sends an image conversion response to the image conversion control module 1041. At step S6118, the image conversion control module 3110 reflects the conversion completion in request information.

According to the above operation, if the document management service 3100 registers a conversion request in the conversion request queue 3208 before completion of image conversion on the first content element, the image conversion control module 3110 starts image conversion on the next image immediately after status change of the first content element into "converted". Accordingly, MCS 3035 can convert the next image while the document management service 3100 is transmitting the first content element to the client 3113. As a result, it is possible to reduce conversion wait time.

At step 6119, after acquisition of the first content element, the client 3113 sends a second content element request to the document management service 3100. At step S6120, in response to receipt of the second content element request, the document management service 3100 sends a second content element response to the client 3113. At step S6121, in response to receipt of the second content element response, the client 3113 sends a content element location request to the document management service 3100.

At step S6122, the document management service 3100 attempts to register a conversion request in the conversion request queue 3208 as in the case of the first content element. However, if the current conversion request and the conversion request registered at the time of checking the image conversion on the first content element are the same, the current conversion request is not registered to avoid duplicate registration.

At step S6123, the document management service 3100 sends a content element location response to the client 3113. At step S6124, in response to receipt of the content element location response, the client 3113 informs the document management service 3100 that the content element has been acquired. The document management service 3100 confirms that the image conversion has been completed at step S6125 and registers a next page conversion request at step S6126.

At step S6127, on the other hand, the image conversion control module 3110 refers the conversion request queue 3208. At step S6128, in response to the confirmation at step S6125, the document management service 3100 sends an image acquisition request to MCS 3035. At step S6129, in response to receipt of the image acquisition request, MCS 3035 reads the converted image from the storage area 3065 and sends the image to the document management service 3100. At step S6130, in response to receipt of the converted image, the document management service 3100 sends the image to the client 3113. When the image conversion control module 3110 refers registration of the conversion request at step S6127, the image conversion control module 3110 sends an image conversion request to MCS 3035 at step S6131.

Here, if it is determined that there is no next page predicted to be acquired during steps S6112 through S6114, the above-mentioned sequence and the sequence in FIG. 65 are substantially the same. In other words, the document management service 3100 operates independently of page singularity or plurality of the document.

A detailed description is given, with reference to FIG. 96 and FIG. 97, of a first exemplary operation of the document management service 3100 corresponding to steps S3509 and S3510 in FIG. 65. In this operation, the image acquisition module 3107 of the document management service 3100 is used.

FIG. 96 is a sequence diagram of an exemplary multiple content element successive acquisition operation according to the fourth embodiment.

Referring to FIG. 96, in response to receipt of an acquisition request, based upon the requested URL, the image acquisition module 3107 identifies a content element ID with reference to the URL table 3207 at step S6201. In addition, based upon the identified content element ID, the image acquisition module 3107 identifies ID of the target document and a page number thereof. At step S6202, the image acquisition module 3107 requests MCS 3035 to acquire page bibliography information of the target page. At step S6203, in response to the page bibliography information request, MCS 3035 acquires the page bibliography information from the page bibliography information storage area 3202 and sends the acquired page bibliography information to the image acquisition module 3107.

Based upon the rendition of the target document identified by the content element ID and the page bibliography information, the image acquisition module 3107 determines whether the target page should be converted. Specifically, this determination is made based upon the rendition, the format or compression type, the resolution, the magnification, and other factors of the stored image.

If it is determined that the target page should be converted, the image acquisition module 3107 attempts to register a conversion request for the target page in the conversion request queue. However, before the conversion request is registered, the image acquisition module 3107 determines whether the same conversion request, that is, the conversion request having the same target document, page and conversion contents, has been already registered in the conversion request queue 3208 at step S6204.

At step S6205, if such a conversion request is not in the conversion request queue 3208, the image acquisition module 3107 registers the conversion request for the target page in the conversion request queue 3208. On the other hand, if such a conversion request is in the conversion request queue 3208, the image acquisition module 3107 waits until the status of the conversion request is changed into "converted".

When the status of the conversion request has been changed into "converted" at step S6206, the image acquisition module 3107 requests MCS 3035 to acquire document bibliography information on the document including the target page at step S6207. At step S6208, in response to the document bibliography information request, MCS 3035 acquires the document bibliography information from the document bibliography information storage area 3201 and sends the document bibliography information to the image acquisition module 3107.

Then, based upon the number of pages in the document and the target page number in the received document bibliography information, the image acquisition module 3107 determines whether there is a page predicted to be acquired after the target page. For example, when an acquisition request for the third page is processed for a document composed of five pages, it can be predicted that the fourth page will be subsequently acquired by incrementing the page number. On the other hand, if a page acquisition request is processed for a single-page document, or if an acquisition request is for the last page of a document, it can be predicted that there is no page to be subsequently acquired.

In the case where there is a page predicted to be subsequently acquired, the image acquisition module 3107 requests MCS 3035 to acquire page bibliography information on the predicted page, that is, the next target page at step S6209. At step S6210, MCS 3035 reads and acquires the page bibliography information on the next target page from the page bibliography information storage area 3202 and sends the page bibliography information to the image acquisition module 1043.

In response to the receipt of the page bibliography information on the next target page, similarly to the above-mentioned operation on the previous target page, the image acquisition module 1043 determines whether image conversion should be performed on the next target page and the same conversion request has been already registered at step S6211, and then executes the corresponding steps.

On the other hand, in the case where there is no page predicted to be subsequently acquired, or the case where the next target page does not have to be converted or cannot be converted, the conversion request is not registered in the conversion request queue at step S6212.

According to the above-mentioned successive content element acquisition operation of the image acquisition module 3107, before a converted page image is acquired from MCS 3035, a conversion request for the next target page can be registered in the conversion request queue 3208. As a result, it is possible to execute an image conversion process in MCS 3035 and an image transmission process of the document management service 3100 to the client 3113 in parallel. Accordingly, it is possible to effectively reduce image conversion wait time and image transmission wait time.

FIG. 97 is a sequence diagram of another exemplary multiple content element successive acquisition operation according to the fourth embodiment.

Referring to FIG. 97, if the next target page does not have to be converted, the image acquisition module 3107 may determine whether there is a page predicted to be acquired subsequently to the next target page, and if there is such a page, the image acquisition module 3107 may register a conversion request for the page in the conversion request queue 3208.

A description is given, with reference to FIG. 98, of another exemplary multiple content element successive acquisition operation corresponding to steps S3509 and S3510 in FIG. 65.

FIG. 98 is a sequence diagram of another exemplary multiple content element successive acquisition operation according to the fourth embodiment. In FIG. 98, steps S6301 through S6308 are similar to steps S6201 through S6208 of the exemplary content element successive acquisition operation shown in FIG. 96, and the description thereof is omitted.

In this embodiment, when the image acquisition module 3107 acquires document bibliography information on a document including a target page from MCS 3035, the image acquisition module 3107 determines whether there is a page subsequent to the target page, that is, a next target page. If the next target page exists, it is predicted that the next target page will be acquired in the same rendition as the target page. Then, the image acquisition module 3107 determines that a conversion request for the next target page has the same contents as the target page, that is, that the next target page is in the form of the same rendition as the target page.

Referring to FIG. 98, the image acquisition module 3107 refers to the conversion request queue 3208 and checks whether another conversion request having the same contents as that for the next target page has been already registered in the conversion request queue 3208 at step S6309. If such the same conversion request has not been registered in the conversion request queue 3208, the image acquisition module 3107 registers the conversion request for the next target page in the conversion request queue 3208 at step S6310.

According to the above exemplary content element successive acquisition operation, before a converted image is acquired from MCS 3035, a conversion request for the next target page can be registered in the conversion request queue 3208. As a result, it is possible to execute an image conversion process and an image transmission process in parallel. Accordingly, it is possible to effectively reduce image conversion wait time and image transmission wait time.

A description is given, with reference to FIG. 99, of another exemplary multiple content element successive acquisition operation corresponding to an operation between steps 3509 and 3510 in FIG. 65.

FIG. 99 is a sequence diagram of another exemplary multiple content element successive acquisition operation according to the fourth embodiment. In FIG. 99, steps S6401 through S6408 are similar to steps S6201 through S6208 of the exemplary multiple content element successive acquisition operation shown in FIG. 96, and the description thereof is omitted herein.

In this operation, when the image acquisition module 3107 confirms that the status of a conversion request for a target page is changed into "converted", the image acquisition module 3107 generates another thread 4000 for precedent conversion registration. In the thread 4000, the same process as steps subsequent to step S6207 in FIG. 96 is executed.

At step S6407, the thread 4000 requests MCS 106 to acquire document bibliography information on a document including a target page. At step S6408, in response to receipt of the document bibliography information acquisition request, MCS 3035 acquires the document bibliography information from the document bibliography information storage area 3201 and sends the document bibliography information to the thread 4000.

Then, based upon the number of pages and the page number of the target page in the received document bibliography information, the thread 4000 determines whether there is a page predicted to be acquired subsequently to the target page.

If the next target page exists, the thread 4000 requests MCS 3035 to acquire page bibliography information on the next target page at step S6409. At step S6410, MCS 3035 reads and acquires the page bibliography information on the next target page from the page bibliography information storage area 3202 and sends the page bibliography information to the thread 4000.

At step S6411, in response to the acquisition of the page bibliography information on the next target page, the thread 4000 determines whether image conversion should be performed on the next target page and whether another conversion request having the same contents has been already registered in the conversion request queue 3208, and performs the above-mentioned operation.

On the other hand, if the next target page does not exist or the next target page does not have to be converted and cannot be converted, the thread 4000 does not register the conversion request in the conversion request queue 3208 at step S6412.

According to the above exemplary multiple content element successive acquisition operation, the process for transmitting a converted target image to the client 3113 and the process for determining whether the next target page should be converted and registering a conversion request in the conversion request queue 3208 depending on the determination can be executed in parallel. As a result, the image acquisition module 3107 can send an image acquisition request to MCS 3035 at an earlier stage than the exemplary multiple content element successive acquisition operation shown in FIG. 96, it is possible to further reduce processing time required for the client 302 to acquire the target image.

A description is given, with reference to FIG. 100, of another multiple content element successive acquisition operation for the client 3113 to acquire a document composed of a plurality of images from the multifunctional product 3001.

FIG. 100 is a sequence diagram of another exemplary multiple content element successive acquisition operation according to the fourth embodiment. The illustrated acquisition operation is for a case where it takes longer time for MCS 3035 to convert the plurality of images than for the document management service 3100 to transmit the plurality of images to the client 3113. In FIG. 100, steps S6501 through S6516 are similar to steps S6101 through S6116 shown in FIG. 95 corresponding to the case where image transmission cause a bottleneck.

Referring to FIG. 100, the client 3113 sends a content element request to the document management service 3100 at step S6517. At step S6518, the document management service 3100, which receives a second content element acquisition request, sends a second content element acquisition response to the client 3113. At step S6519, in response to receipt of the second content element acquisition response, the client 3113 sends a second content element location request to the document management service 3100.

At step S6520, in response to receipt of the second content element location acquisition request, the document management service 3100 attempts a conversion request for the next target page in the conversion request queue 3208 as in the case of the first content element. At this time, however, since MCS 3035 has started image conversion on the next target page and the status of the conversion request for the next target page is in "converting", the document management service 3100 does not register the new conversion request in the conversion request queue 3208.

At step S6521, the document management service 3100 sends a content element location response to the client 3113. At step S6522, in response to receipt the content element location response, the client 3113 informs the document management service 3100 that the content element has been acquired.

At step S6523, after completion of image conversion on the next target page, MCS 3035 sends an image conversion response to the image conversion module 3107. At step S6524, in response to receipt of the image conversion response, the image conversion control module 3107 changes the status of the conversion request into "converted". When the document management service 3100 confirms that the status of the conversion request is changed into "converted" at step S6525, the document management service 3100 registers a conversion request for the second next target page, that is, a page immediately after the next target page, in the conversion request queue 3208 at step S6526.

When a conversion request for the second next target page is registered in the conversion request queue at step S6527, the image conversion control module 3107 sends an image conversion request to MCS 3035 and starts image conversion on the second next target page at step S6528.

At step S6529, after the registration of the conversion request for the second next target page, the document management service 3100 sends an image acquisition request to MCS 3035. At step S6530, in response to receipt of the image acquisition request, MCS 3035 sends the converted second next target page to the document management service 3100. At step S6531, the document management service 3100 starts to send the next page image to the client 3113.

According to the above multiple content element successive acquisition operation, it is possible to start to convert the next page image without delay after completion of a target page image in the case where the image conversion time is longer than the image transmission time. As a result, since wait time for completion of the image conversion is reduced, it is possible to shorten processing time required for the client 3113 to complete image acquisition.

As mentioned above, when the multifunctional product 3001 according to the fourth embodiment, in response to receipt of a multiple content element successive acquisition request, that is, a request to acquire a document composed of a plurality of page images, from a client, converts the rendition of the document into a requested rendition and transmits the converted document to the client, the multifunctional product 3001 can complete a sequence of process steps at shorter processing time even in any of the above-mentioned two cases; One is the case where the image conversion operation causes a bottleneck of the overall process sequence. The other is the case where the image transmission operation causes a bottleneck of the overall process sequence.

A description is given, with reference to FIG. 101, of a multi-page rendition content element acquisition operation according to the fourth embodiment.

The process sequences in FIG. 95 and FIG. 100 can handle the case where a rendition designated by the client 3113 belongs to a class of renditions, such as JFIF, that do not allow a plurality of images to be contained. In this multi-page rendition content element acquisition operation, a case where a rendition requested by the client 3113 belongs to a class of renditions, so-called "multi-page rendition", such as PDF (Portable Document Format), that allow a plurality of images to be contained.

In the case where a client acquires a multi-page rendition content element, since a series of requested images can be identified from only the rendition, the client does not have to designate the individual images as content elements. For this reason, the document management service 3100 determines whether an acquisition request issued by the client 3113 is for a multi-page rendition, and if so, the document management service 3100 can fulfill the acquisition request more effectively in accordance with the operation described with respect to FIG. 101.

FIG. 101 is a sequence diagram of an exemplary multi-page rendition content element acquisition operation according to the fourth embodiment.

Referring to FIG. 101, the client 3113 sends a content element request to the document management service 3100 at step S6601. At step S6602, in response to receipt of the content element request, the document management service 3100 sends a content element response to the client 3113. At step S6603, in response to receipt of the content element response, the client 3113 sends a content element location request, that is, a content element URL request, to the document management service 3100. At step S6604, in response to receipt of the content element location request, the document management service 3100 registers a conversion request in the conversion request queue 3208. In such a conversion request, it is requested that image conversion operations (conversion 1, conversion 2, conversion 3, ···) should be performed on individual page images (image 1, image 2, image 3, ···), respectively, of a document that the client 3113 desires to acquire in the form of a multi-page rendition. At step S6605, the document management service 3100 sends a content element location response to the client 3113. At step S6606, after the sending of the content element location response, the document management service 3100 registers a pair of the requested content element and the content element location thereof in the URL table 3207.

At step S6607, in response to receipt of the content element location response, the client 3113 sends a content element acquisition request to the document management service 3100. At step S6608, in response to receipt of the content element acquisition request, the document management service 3100 identifies the content element ID from the requested URL. Then, based upon the identified content element ID, the document management service 3100 is monitoring for the conversion request queue 3208 until image conversion on the requested image is completed.

At step S6609, on the other hand, the image conversion control module 3110 monitors for the conversion request queue 3208 and refers to the conversion request registered by the document management service 3100. At step S6610, the image conversion control module 3110 refers to a conversion request for the conversion 1 (an image conversion 1 request), and sends the image conversion 1 request to MCS 3035. At step S6611, in response to receipt of the image conversion 1 request, MCS 3035 converts the image 1 in an image storage area, and sends a conversion response for the image 1 (image conversion 1 response) to the image conversion control module 3110 after completion of the image conversion. At step S6612, in response to receipt of the image conversion 1 response, the image conversion control module 3110 registers conversion completion on the image 1 in the conversion request queue 3208.

When the document management service 3100 confirms that the image 1 has been converted with reference to the conversion request queue 3208 at step S6613, the document management service 3100 sends an image acquisition request to MCS 3035 at step S6614. In response to receipt of the image acquisition request, the document management service 3100 acquires the converted image 1 from MCS 3035.

At step S6615, after registration of the conversion completion of the image 1 in the conversion request queue 3208, the image conversion control module 3110 refers to the conversion request queue 3208 again. At step S6616, based upon a registered conversion request for the image 2, the image conversion control module 3110 sends a conversion request for the image 2 (image conversion 2 request) to MCS 3035. At step S6617, in response to receipt of the image conversion 2 request, MCS 3035 converts the image 2 in an image storage area, and sends a conversion response for the image 2 (image conversion 2 response) to the image conversion control module 3110 after completion of the image conversion on the image 2. At step S6618, in response to receipt of the image conversion 2 response, the image conversion control module 3110 registers the conversion completion on the image 2 in the conversion request queue 3208.

At step S6619, the document management service 3100 refers to the conversion request queue 3208, and if the document management service 3100 confirms that the image 2 has been converted at step S6619, the document management service 3100 sends an image acquisition request to MCS 3035 at step S6620. In response to the image acquisition request, the document management service 3100 acquires the converted image 2 from MCS 3035.

Subsequently, the same process is performed on the image 3, the image 4, ···. Thereby, the document management service 3100 can sequentially acquire images converted by MCS 3035.

The document management service 3100 converts the acquired images into multi-page formatted images, and in parallel with the conversion, after completion of the image conversion on the respective images, the document management service 3100 separates image portions that can be transmitted and sends the image portions to the client 3113 sequentially.

In this fashion, the document management service 3100 determines whether an acquisition request from the client 3113 is for a multi-page rendition, and if so, the document management service 3100 operates without prediction of the next target image page. As a result, since the multifunctional product 3001 does not have to use computer resources thereof for unnecessary processes, it is possible to make more efficient use of the computer resources such as memory resources.

A description is given, with reference to FIG. 102 through FIG. 105, of a subsequent page conversion request queueing operation according to the fourth embodiment.

In this embodiment, while the rendition of a target image is being converted, images to be converted subsequently to the target image, in response to acquisition requests for the images, is predicted and queued in the conversion request queue.

FIG. 102 is a sequence diagram of an exemplary subsequent page conversion request queueing operation according to the fourth embodiment.

Referring to FIG. 102, in response to receipt of an acquisition request, the image acquisition module 3107 identifies a content element ID corresponding to a requested URL with reference to the URL table 3207 at step S6701. Based upon the identified content element ID, the image acquisition module 3107 acquires ID and a page number of the target document. At step S6702, the document.acquisition module 3107 requests MCS 3035 to acquire page bibliography information on the page. At step S6703, MCS 3035 acquires the page bibliography information from the page bibliography information storage area 3202, and sends the page bibliography information to the image acquisition module 3107.

Based upon the rendition of the target page, which is obtained from the content element ID, and the page bibliography information, the image acquisition module 3107 determines whether the target page should be converted. This determination may be made, specifically, based upon the rendition, the format and the compression type, the resolution and the magnification of the target page image.

If the target page should be converted, the image acquisition module 3107 attempts to register a conversion request for the target page in the conversion request queue 3208. Before the registration of the conversion request, however, the image acquisition module 3107 checks whether another conversion request having the same contents, that is, another conversion request having the same document, the same page and the same conversion contents as the conversion request to be registered, has been registered in the conversion request queue 3208 at step S6704.

At step S6705, if such a conversion request is not found in the conversion request queue 3208, the image acquisition module 3107 registers the conversion request for the target page in the conversion request queue 3208. On the other hand, if the same conversion request is in the conversion request queue 3208, the image acquisition module 3107 waits until the status of the conversion request is changed into "converted".

At step S6706, the image acquisition module 3107 requests MCS 3035 to acquire document bibliography information on the document including the target page during the waiting. At step S6707, in response to receipt of the document bibliography information acquisition request, MCS 3035 acquires the document bibliography information on the document from the document bibliography information storage area 3201, and sends the document bibliography information to the image acquisition module 3107.

Based upon the document bibliography information, specifically, the number of pages of the document and the page number of the target page, the image acquisition module 3107 determines whether there is a page predicted to be converted subsequently to the target page, that is, whether the next target page may exist.

If it is determined that such a predicted page exists, the image acquisition module 3107 requests MCS 3035 to acquire page bibliography information on the next target page at step S6708. At step S6709, MCS 3035 acquires the page bibliography information on the next target page from the page bibliography information storage area 3202, and sends the page bibliography information to the image acquisition module 1043 at step S6709.

At step S6710, in response to receipt of the page bibliography information, the image acquisition module 3107 determines whether the next target page should be converted and whether another conversion request having the same contents has been registered in the conversion request queue 3208 as in the target page, and performs the same process.

The image acquisition module 3107 refers to the conversion request queue 3208 at steps S6712 and S6713, and checks whether the image conversion has been completed at step S6714.

FIG. 103 is a sequence diagram of an exemplary subsequent page conversion request queueing operation in a case where the next target page does not have to be converted. In FIG. 103, steps S6801 through S6812 are similar to steps S6701 through S6712 in FIG. 102, and steps subsequent to step S6812 is described herein.

Referring to FIG. 103, the image acquisition module 3107, if the next target image does not have to be converted and the target page has not been converted yet, repeats the same process on the next target page at step S6813. At step S6814, the image acquisition module 3107 checks whether the image conversion on the target image has been completed.

FIG. 104 is a sequence diagram of an exemplary subsequent page conversion request queueing operation in a case where bibliography information is acquired at a time. In FIG. 104, steps S6901 through S6905 are similar to steps S6701 through S6705 in FIG. 102, and steps subsequent to step S6906 are described herein.

Referring to FIG. 104, the image acquisition module 3107 acquires bibliography information on the target document at step S6906, and checks that the next target page exists based on the number of pages of the target document. Then, the image acquisition module 3107 predicts that the next target page should be converted into the same rendition as the target page without reference of the page bibliography information on the next target page, and determines contents of a conversion request for the next target page.

The image acquisition module 3107 refers to the conversion request queue 3208 at steps S6909 and S6910, and confirms that the image conversion has been completed at step S6911.

FIG. 105 is a sequence diagram of an exemplary subsequent page conversion request queueing operation in a case where another thread is generated. In FIG. 105, steps S7001 through S7006 are similar to steps S6401 through S6406 in FIG. 99, and steps subsequent to step S7007 are described herein.

Referring to FIG. 105, another thread 4000 requests MCS 3035 to acquire document bibliography information on the target document including the target page at step S7007. At step S7008, in response to receipt of the document bibliography information acquisition request, MCS 3035 acquires the document bibliography information from the document bibliography information storage area 3201, and sends the document bibliography information to the thread 4000.

Based upon the number of pages of the target document and the page number of the target page, the thread 4000 determines whether there is a page predicted to be converted subsequently to the target page.

At step S7009, if it is predicted that the next target page exists, the thread 4000 requests MCS 3035 to acquire page bibliography information on the next target page. At step S7010, MCS 3035 acquires the page bibliography information from the bibliography information storage area 3202, and sends the page bibliography information to the thread 4000.

At step S7011, in response to the acquisition of the page bibliography information, the thread 4000 determines whether the next target page should be converted and whether another conversion request having the same contents as a conversion request for the next target page has been registered, and performs the same process.

On the other hand, if the next target page does not exist or the next target page does not have to be converted or cannot be converted, the thread 4000 does not register the conversion request for the next target page in the conversion request queue at step S1612.

The above-mentioned embodiments are exemplary preferred embodiments of the present invention, and the present invention is not limited to the embodiments. For example, although the above-mentioned embodiments handle the case where the client 3113 having a dedicated application is the request source, the present invention is also applicable to other cases, for example, a case where the client 3113 having a Web browser is the request source.

In addition, the above-mentioned embodiments adopts a page having a page number incremented from the page number of a target page as the next target page. However, the present invention is not limited to the embodiments. For example, if the compression type of a certain page of a target document is designated in the page bibliography information on a target page and additionally the target page is not allowed to be converted into a page having a requested rendition, the page number may be iteratively incremented and when a first page that can be converted into the requested rendition occurs, the page may be considered as the next target page.

The present invention is not limited to the specifically disclosed embodiments, and variations and modifications may be made without departing from the scope of the present invention.

The present application is based on Japanese Patent Priority Applications No. 2003-057676 filed March 4, 2003, No. 2003-076610 filed March 19, 2003, No. 2003-078995 filed March 20, 2003, No. 2003-130817 filed May 8, 2003, No. 2004-052272 filed February 26, 2004, No. 2004-052273 filed February 26, 2004, No. 2004-052274 filed February 26, 2004, and No. 2004-052275 filed February 26, 2004, contents of which are hereby incorporated by reference.

The following are the claims of the parent application as filed and are included only as part of the description of the present application:
1. An image forming apparatus, comprising:
   one or more hardware resources being configured to form an image;
   one or more programs executing an image formation process;
   a communication part communicating with a client;
   an image data conversion part converting a format of image data; and
   an image processing part, in response to a request from the client, using the image data conversion part to convert a format of image data.
2. The image forming apparatus as claimed in claim 1, further comprising:
   a detection part detecting whether the image data conversion part is included.
3. The image forming apparatus as claimed in claim 1 or 2, further comprising:
   a convertible format transmission part transmitting to the client one or more formats of image data that the image data conversion part is capable of converting.
4. The image forming apparatus as claimed in claim 3, wherein the convertible format transmission part transmits to the client one or more formats into which the image data conversion part is capable of converting image data designated by the client.
5. The image forming apparatus as claimed in any one of claims 1 to 4, further comprising:
   a converted image data transmission part transmitting image data converted by the image processing part.
6. The image forming apparatus as claimed in any one of claims 1 to 5, further comprising:
   a storage part storing image data.
7. The image forming apparatus as claimed in claim 6, wherein the storage part stores converted image data.
8. The image forming apparatus as claimed in any one of claims 1 to 7, wherein the image processing part converts image data stored in the storage part.
9. The image forming apparatus as claimed in any one of claims 1 to 8, wherein the image processing part converts image data in the client.
10. The image forming apparatus as claimed in any one of claims 1 to 9, further comprising:
   a SOAP message analysis part analyzing a SOAP message; and
   a SOAP message creation part creating a SOAP message,
   wherein the SOAP message analysis part and the SOAP message creation part are for communicating with the client in accordance with SOAP.
11. The image forming apparatus as claimed in any one of claims 1 to 10, wherein the format of image data is related to at least one of a code type and a size thereof.
12. A method of providing image data to a client for an image forming apparatus having one or more hardware resources configured to form an image, one or more programs executing an image formation process, and a communication part communicating with the client, comprising steps of:
   receiving a request for the image data from the client;
   acquiring the requested image data;
   converting a format of the acquired image data; and
   providing the converted image data to the client.
13. The method as claimed in claim 12, further comprising a step of:
   transmitting one or more formats of image data that the image forming apparatus is capable of converting.
14. The method as claimed in claim 12 or 13,
   wherein the image data acquisition step comprises acquiring image data in the client.
15. The method as claimed in claim 12, 13 or 14
   wherein the communication part communicates with the client in accordance with SOAP.
16. The method as claimed in any one claims 12 to 15,
   wherein the format of image data is related to at least one of a code format and a size thereof.
17. A computer program comprising code means which when executed on a computer provide image data to a client for an image forming apparatus having one or more hardware resources configured to form an image, one or more programs executing an image formation process, and a communication part communicating with the client, the procedure comprising steps of:
   receiving a request for the image data from the client;
   acquiring the requested image data;
   converting a format of the acquired image data; and
   providing the converted image data to the client.
18. A computer program comprising code means which when executed on a computer acquire
   image data through communication with a client having a function of converting one or more formats of image data, the procedure comprising steps of:
   acquiring a format of image data requested to the client;
   requesting image data to the client; and
   acquiring image data from the client.
19. The computer program as claimed in claim 18, wherein the procedure further comprises a step of:
   acquiring from the client one or more formats of image data that the client is capable of converting.
20. The computer program as claimed in claim 18 or 19, wherein the communication with the client follows SOAP.
21. The computer program, as claimed in claim 18, 19 or 20, wherein the format of image data is related to at least one of a code type and a size thereof.
22. An image forming apparatus for processing image formation on a document in accordance with document bibliography information having document bibliography information and extended bibliography information on the document and providing one or more services related to the document to a client connected thereto via a network, comprising:
   one or more hardware resources being configured to form an image;
   one or more programs executing an image formation process;
   a document management part managing one or more documents and document bibliography information thereof by associating the documents and the document bibliography information with document identification information to identify the documents;
   an extended bibliography information providing part providing extended bibliography information to the client; and
   an extended bibliography information storage part storing extended bibliography information provided from the client.
23. The image forming apparatus as claimed in claim 22, wherein the extended bibliography information providing part, in response to receipt of document identification information from the client, identifies extended bibliography information associated with the document identification information by using the document management part, and provides the extended bibliography information to the client.
24. The image forming apparatus as claimed in claim 22 or 23, wherein the extended bibliography information storage part identifies extended bibliography information associated with document identification information designated by the client by using the document management part, and stores extended bibliography information modified by the client in the identified extended bibliography information.
25. The image forming apparatus as claimed in claim 22,23 or 24, wherein the extended bibliography information storage part identifies a document associated with document identification information designated by the client by using the document management part, and stores a document modified by the client in the identified document.
26. The image forming apparatus as claimed in any one of claims 22 to 25, further comprising:
   a document identification information providing part, in response to receipt of a document from the client, storing the document and providing document identification information associated with the document; and
   a document registration part storing the provided document identification information and extended bibliography information on the document provided from the client.
27. The image forming apparatus as claimed in any one of claims 22 to 26, further comprising:
   a document list providing part providing a list of one or more documents to the client.
28. A method of providing one or more services related to a document to a client connected via a network for an image forming apparatus for processing image formation on the document in accordance with document bibliography information having document bibliography information and extended bibliography information on the document wherein the image forming apparatus has one or more hardware resources being configured to form an image and one or more programs executing an image formation process, the method comprising steps of:
   receiving a request to acquire extended bibliography information on a document together with document identification information to identify the document from the client;
   converting the extended bibliography information associated with the document identification information into an extended bibliography information structure having a predefined data structure; and
   providing the extended bibliography information structure to the client.
29. The method as claimed in claim 28, further comprising steps of:
   receiving a request to write extended bibliography information together with document identification information and the extended bibliography information;
   writing the received extended bibliography information in extended bibliography information associated with the received document identification information; and
   informing the client that the received extended bibliography information has been written.
30. The method as claimed in claim 28 or 29, further comprising steps of:
   receiving a request to acquire a list of one or more documents from the client;
   providing a list of document identification information to the client;
   receiving a request to write extended bibliography information together with document identification information and the extended bibliography information;
   writing the received extended bibliography information in extended bibliography information associated with the received document identification information; and
   informing the client that the received extended bibliography information has been written.
31. The method as claimed in claim 28, 29 or 30, further comprising steps of:
   receiving a request to store a document from the client;
   providing document identification information associated with the document to the client;
   receiving a request to register extended bibliography information together with the document identification information and the extended bibliography information from the client;
   registering the received extended bibliography information; and
   informing the client that the received extended bibliography information has been registered.
32. The method as claimed in any one of claims 28 to 31, further comprising steps of:
   receiving a request to acquire a list of one or more documents from the client;
   providing a list of document identification information to the client;
   receiving a request to register extended bibliography information together with document identification information and the extended bibliography information;
   creating new document identification information;
   creating document bibliography information associated with the created document identification information; and
   informing the client that the received extended bibliography information has been registered.
33. A computer program comprising code means which when executed on a computer provide
   one or more services related to a document to a client connected via a network for an image forming apparatus for processing image formation on the document in accordance with document bibliography information having document bibliography information and extended bibliography information on the document wherein the image forming apparatus has one or more hardware resources being configured to form an image and one or more programs executing an image formation process, the procedure comprising steps of:
   receiving a request to acquire extended bibliography information on a document together with document identification information to identify the document from the client;
   converting the extended bibliography information associated with the document identification information into an extended bibliography information structure having a predefined data structure; and
   providing the extended bibliography information structure to the client.
34. An image processing apparatus for transmitting and receiving document information on a document to/from a client connected thereto via a network wherein the document information comprises one or more document elements and includes one or more renditions in one of which each document element is represented, comprising:
   a rendition list transmission part transmitting a list of one or more possible renditions for one or more document elements composing a document designated by the client;
   a document element list transmission part transmitting a list of one or more document elements represented in a rendition designated by the client; and
   a document element providing part providing a document element designated by the client.
35. The image processing apparatus as claimed in claim 34, further comprising:
   a document identifier generation part generating a document identifier to associate a document element received from the client with a new document having the document element; and
   a document element registration part storing and registering the document element in a rendition designated by the client.
36. The image processing apparatus as claimed in claim 34 or 35, wherein the document element is an image, the apparatus further comprising:
   an image data conversion part converting a data format being a rendition of the image.
37. The image processing apparatus as claimed in claim 34, 35 or 36, wherein the rendition includes a rendition identifier to identify the rendition.
38. The image processing apparatus as claimed in any one of claims 34 to 37, further comprising:
   one or more page identifiers to identify individual document elements.
39. The image processing apparatus as claimed in claim 38, wherein the document includes page bibliography information being information on the document element together with a page identifier of the document element.
40. The image processing apparatus as claimed in claim 39, wherein the page bibliography information includes document element generation information to indicate how the document element corresponding to the page identifier is created.
41. The image processing apparatus as claimed in claim 39 or 40, wherein the page bibliography information, when the document element corresponding to the page identifier is an image, includes a data format of the image.
42. The image processing apparatus as claimed in claim 39, 40 or 41, wherein the page bibliography information includes a page bibliography information identifier to identify the page bibliography information.
43. The image processing apparatus as claimed in any one of claims 34 to 42, wherein the document includes a document identifier to identify the document.
44. The image processing apparatus as claimed in claim 43, wherein the document includes document bibliography information being document information on the document together with the document identifier.
45. The image processing apparatus as claimed in claim 44, wherein the document bibliography information includes information indicative of a source of a document element of the document.
46. The image processing apparatus as claimed in claim 44 or 45, wherein the document bibliography information includes information indicative of an owner of the document.
47. The image processing apparatus as claimed in any one of claims 34 to 46, further comprising:
   one or more hardware resources configured to process an image; and
   one or more programs executing an image formation process.
48. A method of providing an image for an image processing apparatus for transmitting and receiving document information on a document to/from a client connected thereto via a network wherein the document information comprises one or more document elements and includes one or more renditions in one of which each document element is represented, the method comprising steps of:
   transmitting a list of one or more possible renditions for a document designated by the client;
   transmitting a list of document elements represented in a rendition designated by the client; and
   transmitting a document element designated by the client.
49. The method as claimed in claim 48, further comprising steps of:
   generating a document identifier to associate a document element received from the client with a new document having the document element; and
   storing and registering the document element in a rendition designated by the client.
50. A computer program comprising code means which when executed on a computer provide an image for an image processing apparatus transmitting and receiving document information on a document to/from a client connected thereto via a network wherein the document information comprises one or more document elements and includes one or more renditions in one of which each document element is represented, the procedure comprising steps of:
   transmitting a list of one or more possible renditions for a document designated by the client;
   transmitting a list of document elements represented in a rendition designated by the client; and
   transmitting a document element designated by the client.
51. The computer program as claimed in claim 50, wherein the procedure further comprises steps of:
   generating a document identifier to associate a document element received from the client with a new document having the document element; and
   storing and registering the document element in a rendition designated by the client.
52. An image processing apparatus having a document having one or more document elements for, in response to receipt of an acquisition request from a client connected thereto via a network, converting a rendition of a document element into a requested rendition and providing the converted document element to the client, comprising:
   a document element processing part converting a document element;
   a prediction part predicting a document element to be rendition-converted in response to receipt of an acquisition request; and
   a registration part registering a conversion request to convert a rendition of the predicted document element in a queue of the document element processing part.
53. The image processing apparatus as claimed in claim 52, wherein while the document element processing part is converting a rendition of a document element in response to receipt of an acquisition request, the prediction part, in response to receipt of a next acquisition request of the acquisition request, predicts a next document element to be rendition-converted.
54. The image processing apparatus as claimed in claim 52 or 53, wherein while the client is acquiring a document element in response to receipt of an acquisition request, the prediction part, in response to receipt of a next acquisition request of the acquisition request, predicts a next document element to be rendition-converted.
55. The image processing apparatus as claimed in claim 52, 53 or 54, further comprising:
   document management information managing document bibliography information indicative of a structure of the document and page bibliography information indicative of a structure of each document element composing the document by associating the document bibliography information with the page bibliography information,
   wherein the prediction part predicts a next document element to be rendition-converted by the document element processing part in response to a next acquisition request of the acquisition request based on the document management information.
56. The image processing apparatus as claimed in any one of claims 52 to 55, further comprising:
   document bibliography information having respective numbers indicative of an order of one or more document elements composing the document,
   wherein the prediction part predicts that the document element processing part, in response to receipt of a next acquisition request of the acquisition request, will convert a rendition of a document element corresponding to a next number of a document element being currently processed by the document element processing part.
57. The image processing apparatus as claimed in any one of claims 52 to 56, wherein the document element processing part performs no rendition conversion on a document element having a rendition requested by the client.
58. The image processing apparatus as claimed in claim 57, wherein the prediction part, when a next document element predicted to be rendition-converted by the document element processing part in response to receipt of the next acquisition request has a rendition requested by the client, predicts a second next document element to be rendition-converted in response to receipt of a second next acquisition request of the acquisition request by the document element processing part, and registers a rendition conversion request for the predicted second next document element in the queue prior to receipt of the second next acquisition request.
59. A method of processing an image for an image processing apparatus having a document having one or more document elements for, in response to receipt of an acquisition request from a client connected thereto via a network, converting a rendition of a document element into a requested rendition and providing the converted document element to the client, the method comprising steps of:
   predicting a document element to be rendition-converted in response to receipt of an acquisition request;
   registering a rendition conversion request for the predicted document element in a queue to manage a conversion order of the document element;
   converting the document element; and
   providing the converted document element to the client.
60. The method as claimed in claim 59,
   wherein the prediction step comprises predicting a next document element to be rendition-converted in response to receipt of a next acquisition request of the acquisition request based on document management information managing document bibliography information indicative of a structure of the document and page bibliography information indicative of a structure of each document element composing the document by associating the document bibliography information with the page bibliography information.
61. The method as claimed in claim 59 or 60,
   wherein the prediction step comprises predicting a document element corresponding to a next number of a document element being currently converted as a next document element to be rendition-converted in response to receipt of a next acquisition request of the acquisition request based on document bibliography information having respective numbers indicative of an order of one or more document elements composing the document.
62. The method as claimed in claim 59, 60 or 61,
   wherein the document element conversion step comprises not converting a document element having a rendition requested by the client.
63. The method as claimed in claim 62,
   wherein the prediction step, when a next document element predicted to be rendition-converted in response to receipt of a next acquisition request of the acquisition request has a rendition requested by the client, comprises predicting a second next document element to be rendition-converted in response to receipt of a second next acquisition request of the acquisition request, and the registration step comprises registering a rendition conversion request for the predicted second next document element in the queue prior to receipt of the second next acquisition request.
64. A computer program comprising code means which when executed on a computer process an image for an image processing apparatus having a document having one or more document elements for, in response to receipt of an acquisition request from a client connected thereto via a network, converting a rendition of a document element into a requested rendition and providing the converted document element to the client, the procedure comprising steps of:
   predicting a document element to be rendition-converted in response to receipt of an acquisition request;
   registering a rendition conversion request for the predicted document element in a queue to manage a conversion order of the document element;
   converting the document element; and
   providing the converted document element to the client.

## Claims

1. An image processing apparatus having a document having one or more document elements for, in response to receipt of an acquisition request from a client connected thereto via a network, converting a rendition of a document element into a requested rendition and providing the converted document element to the client, comprising:
a document element processing part converting a document element;
a prediction part predicting a document element to be rendition-converted in response to receipt of an acquisition request; and
a registration part registering a conversion request to convert a rendition of the predicted document element in a queue of the document element processing part.

2. The image processing apparatus as claimed in claim 1, wherein while the document element processing part is converting a rendition of a document element in response to receipt of an acquisition request, the prediction part, in response to receipt of a next acquisition request of the acquisition request, predicts a next document element to be rendition-converted.

3. The image processing apparatus as claimed in claim 1 or 2, wherein while the client is acquiring a document element in response to receipt of an acquisition request, the prediction part, in response to receipt of a next acquisition request of the acquisition request, predicts a next document element to be rendition-converted.

4. The image processing apparatus as claimed in claim 1, 2 or 3, further comprising:
document management information managing document bibliography information indicative of a structure of the document and page bibliography information indicative of a structure of each document element composing the document by associating the document bibliography information with the page bibliography information,
wherein the prediction part predicts a next document element to be rendition-converted by the document element processing part in response to a next acquisition request of the acquisition request based on the document management information.

5. The image processing apparatus as claimed in any one of claims 1 to 4, further comprising:
document bibliography information having respective numbers indicative of an order of one or more document elements composing the document,
wherein the prediction part predicts that the document element processing part, in response to receipt of a next acquisition request of the acquisition request, will convert a rendition of a document element corresponding to a next number of a document element being currently processed by the document element processing part.

6. The image processing apparatus as claimed in any one of claims 1 to 5, wherein the document element processing part performs no rendition conversion on a document element having a rendition requested by the client.

7. The image processing apparatus as claimed in claim 6, wherein the prediction part., when a next document element predicted to be rendition-converted by the document element processing part in response to receipt of the next acquisition request has a rendition requested by the client, predicts a second next document element to be rendition-converted in response to receipt of a second next acquisition request of the acquisition request by the document element processing part, and registers a rendition conversion request for the predicted second next document element in the queue prior to receipt of the second next acquisition request.

8. A method of processing an image for an image processing apparatus having a document having one or more document elements for, in response to receipt of an acquisition request from a client connected thereto via a network, converting a rendition of a document element into a requested rendition and providing the converted document element to the client, the method comprising steps of:
predicting a document element to be rendition-converted in response to receipt of an acquisition request;
registering a rendition conversion request for the predicted document element in a queue to manage a conversion order of the document element;
converting the document element; and
providing the converted document element to the client.

9. The method as claimed in claim 8,
wherein the prediction step comprises predicting a next document element to be rendition-converted in response to receipt of a next acquisition request of the acquisition request based on document management information managing document bibliography information indicative of a structure of the document and page bibliography information indicative of a structure of each document element composing the document by associating the document bibliography information with the page bibliography information.

10. The method as claimed in claim 8 or 9,
wherein the prediction step comprises predicting a document element corresponding to a next number of a document element being currently converted as a next document element to be rendition-converted in response to receipt of a next acquisition request of the acquisition request based on document bibliography information having respective numbers indicative of an order of one or more document elements composing the document.

11. The method as claimed in claim 8, 9 or 10,
wherein the document element conversion step comprises not converting a document element having a rendition requested by the client.

12. The method as claimed in claim 11,
wherein the prediction step, when a next document element predicted to be rendition-converted in response to receipt of a next acquisition request of the acquisition request has a rendition requested by the client, comprises predicting a second next document element to be rendition-converted in response to receipt of a second next acquisition request of the acquisition request, and the registration step comprises registering a rendition conversion request for the predicted second next document element in the queue prior to receipt of the second next acquisition request.

13. A computer program comprising code means which when executed on a computer process an image for an image
processing apparatus having a document having one or more document elements for, in response to receipt of an acquisition request from a client connected thereto via a network, converting a rendition of a document element into a requested rendition and providing the converted document element to the client, the procedure comprising steps of:
predicting a document element to be rendition-converted in response to receipt of an acquisition request;
registering a rendition conversion request for the predicted document element in a queue to manage a conversion order of the document element;
converting the document element; and
providing the converted document element to the client.
